Europäisches Patentamt

European Patent Office

Office européen des brevets

(19)

(11) Numéro de publication : **0 421 325 B1**

(12)

# FASCICULE DE BREVET EUROPEEN

(45) Date de publication du fascicule du brevet :
16.08.95 Bulletin 95/33

(51) Int. Cl.⁶ : **H04J 14/02, H04Q 11/00**

(21) Numéro de dépôt : **90118812.8**

(22) Date de dépôt : **01.10.90**

(54) **Système de communication optique temporel asynchrone.**

(30) Priorité : **02.10.89 FR 8912842**
**29.03.90 FR 9004034**

(43) Date de publication de la demande :
**10.04.91 Bulletin 91/15**

(45) Mention de la délivrance du brevet :
**16.08.95 Bulletin 95/33**

(84) Etats contractants désignés :
**AT BE CH DE DK ES FR GB IT LI NL SE**

(56) Documents cités :
**EP-A- 0 268 355**
**EP-A- 0 310 058**
**EP-A- 0 347 903**
**EP-A- 0 351 729**
**PATENT ABSTRACTS OF JAPAN, vol. 7, no.**
**158 (E-186)[1303], 12 juillet 1983; &**
**JP-A-5866488**

(56) Documents cités :
**PATENT ABSTRACTS OF JAPAN, vol. 10, no. 8**
**(E-373)[2065], 14 janvier 1986; & JP-A-60 172**
**841**
**PATENT ABSTRACTS OF JAPAN, vol. 10, no.**
**370 (E-463)[2427], 10 décembre 1986; & JP-**
**A-61 164 395**

(73) Titulaire : **ALCATEL CIT**
**12 Rue de la Baume**
**F-75008 Paris (FR)**

(72) Inventeur : **Le Roy, Guy**
**Kerwegan-Servel**
**F-22300 Lannion (FR)**
Inventeur : **Gabriagues, Jean-Michel**
**3 Chemin des Ecoliers**
**F-91530 Le Val Saint Germain (FR)**

(74) Mandataire : **Weinmiller, Jürgen et al**
**Lennéstrasse 9**
**Postfach 24**
**D-82336 Feldafing (DE)**

## Description

L'invention concerne un système de communication multiservice à large bande temporel optique, fonctionnant en mode temporel asynchrone, permettant de réaliser des réseaux optiques intégrés de communication dans lesquels les signaux des communications sont transmis et commutés optiquement sans transformations intermédiaires des signaux transmis.

Les techniques de transfert d'information ATM (Asynchronous Transfert Mode) et STM (Synchronous Transfert Mode) sont bien connues et les réseaux de communication BISDN (Broad Band Integrated Service Digital Network) actuels fonctionnent selon l'une ou l'autre de ces techniques.

En technique STM, source et récepteur communicants sont raccordés pour la durée de leur communication par un circuit constitué par un ou plusieurs canaux temporels constitués d'une succession de multiplex temporels cycliques généralement tramés. Des centres de commutation temporelle assurent les aiguillages spatiaux et temporels nécessaires entre les divers multiplex empruntés par le circuit, selon un mécanisme cyclique exploitant des données de commande mémorisées, pour la durée de la communication, dans des dispositifs de commande des commutateurs de chaque centre. L'information à transmettre est formatée à la source en échantillons de format fixe, successivement transmis sur le ou les canaux temporels affectés à la communication.

De nombreux dispositifs de commutation temporelle synchrone ont été décrits, notamment des commutateurs temporels à propagation contrôlée mettant en oeuvre des lignes à retard pour réaliser un décalage temporel des signaux. Le brevet français FR-A-2.119.152 du 22/12/70 décrit de tels commutateurs en précisant que les lignes à retard peuvent être réalisées entre autres par le moyen de fibres optiques. Un commutateur temporel à propagation optique expérimental, a été réalisé dans les laboratoires d'ATT Bell-Labs et décrit dans l'article de R.A Thomson and P.P. Giordano, "Experimental Photonic Time-Slot Interchanger Using Optical Fibers as Re-Entrant Delay Line Memories", OFCC, 02/86. Ce commutateur met en oeuvre des fibres optiques et des coupleurs directifs commandés électriquement.

La technique ATM combine, en les aménageant, les mécanismes de la transmission temporelle et de la transmission de paquets: sources et récepteurs communicants sont raccordés pour la durée de la communication par un circuit virtuel auquel est affecté un itinéraire physique constitué d'une succession de liaisons multiplex temporelles et de centres de commutation. Les ressources temporelles sont exploitées en mode statistique entre diverses sources auxquelles n'est affecté aucun canal temporel spécifique sur les liaisons. Une source ou un récepteur peut être impliqué dans une multiplicité de communications simultanées différentes ayant des destinations différentes.

L'information à transmettre est formatée à la source en cellules de format fixe, comportant chacune des informations d'identification et de routage; les cellules sont transmises acycliquement sur des liaisons multiplex temporelles non tramées, en fonction de la disponibilité des canaux de transmission banalisés.

La commutation des cellules s'apparente donc à la commutation temporelle, impliquant aiguillage spatial et décalage temporel. Cependant le mode de multiplexage étant statistique, les ressources de décalage temporel sont elles-mêmes exploitées statistiquement et donc gérées comme des files d'attente. L'aiguillage d'une cellule nécessite l'analyse préalable des informations d'identification et de routage qu'elle contient.

Des systèmes de commutation ATM ont été décrits, notamment par le brevet français FR-A-2 538 976 du 29/12/82: "système de commutation de paquets synchrones de longueur fixe". Ces systèmes connus mettent en oeuvre des moyens optiques de transmission pour raccorder les abonnés et interconnecter les centraux et des moyens électroniques pour commuter les signaux. Des conversions opto-électriques et électro-optiques des signaux sont donc réalisées aux frontières des moyens de transmission et des moyens de commutation, ainsi qu'une démodulation des signaux dans les moyens de commutation pour consulter les informations de routage. Ces moyens de conversion et d'analyse alourdissent la structure des systèmes, diminuent leur fiabilité et augmentent leur coût.

De nouvelles techniques de communication fondées sur le multiplexage spectral optique sont par ailleurs connues: des sources et récepteurs optiques sont raccordés à un milieu de propagation passif réalisant l'équirépartition entre les récepteurs de l'énergie produite par chaque émetteur. Les émetteurs et les récepteurs sont accordables sur une multiplicité de fréquences optiques qui constituent chacune un canal de transmission permettant d'écouler un sens d'une communication. Trois modes fonctionnels principaux sont possibles:

- chaque source est calée en permanence sur une fréquence allouée, la communication s'établit par accord du récepteur communicant sur la-dite fréquence;
- chaque récepteur est calé en permanence sur une fréquence allouée, la communication s'établit par accord de l'émetteur communicant sur la-dite fréquence;
- la fréquence est affectée à une communication au moment de son établissement, émetteur et récepteur communicants sont accordés sur la dite fréquence.

De tels systèmes de commutation fréquentielle ont été décrits, notamment par les brevets :

- EP-A-77 292 publié le 20/04/83 : "Réseau de communication utilisant des fibres monomodes comme moyen de transmission pour les canaux optiques multiplexés dans le domaine de fréquences d'ondes optiques porteuses",
- FR-A-2 586 874 du 29/8/85: "Dispositif de télécommunications par fibres optiques",
- FR-A-2 593 654 du 28/01/86: "Dispositif de télécommunications photoniques cohérentes".

Ces systèmes ne fonctionnent pas en mode spectro-temporel. Les fréquences optiques utilisées comme support de communication sont, dans le meilleurs des cas, mobilisées pour la durée de la communication.

Une exploitation multiservice, pouvant établir à partir d'un même terminal plusieurs communications ayant des destinations différentes, n'est possible que si les terminaux sont équipés chacun d'une multiplicité de dispositifs d'émission et de réception. Chaque communication établie mobilise une ou deux fréquences optiques.

Au regard de ce qu'il est connu des systèmes ATM, les systèmes optiques utilisant le seul multiplexage fréquentiel paraissent peu adaptés à une exploitation multiservice.

Enfin, l'utilisation d'un dispositif optoélectronique de commutation de longueurs d'onde, en remplacement d'un commutateur spatial électronique, pour réaliser la commutation entre des mémoires tampons d'entrée (FIFO) et des mémoires tampons de sortie (Elastic Buffer) d'un commutateur de paquets rapide à N lignes optiques d'entrée et N lignes optiques de sortie, a été décrite dans l'article de M.S.Goodman and Al, Bell Communications Research, "Demonstration of Fast Wawelength Tuning For a High Performance Packet Switch", Conferences on Optical Communication, 11-15/09/88 -Brighton UK, pages 255 à 258, IEE.

Dans ce commutateur de paquets rapide,

. les N mémoires tampons d'entrée et les N mémoires tampons de sortie sont des mémoires électroniques,

. les premières sont chacune électriquement raccordées par un dispositif d'entrée au récepteur d'une ligne optique d'entrée et par un dispositif de sortie à un laser accordable en longueur d'onde,

. les secondes sont chacune électriquement raccordées par un dispositif d'entrée à un récepteur optoélectronique accordé sur une longueur d'onde optique particulière, et par un dispositif de sortie à l'émetteur d'une ligne optique de sortie,

. les N lasers accordables, raccordés chacun à une mémoire tampon d'entrée, et les N récepteurs optoélectroniques accordés en longueur d'onde, raccordés chacun à une mémoire tampon de sortie, sont raccordés optiquement à un coupleur optique étoile passif NxN,

. le transfert d'un paquet entre une mémoire tampon d'entrée, et une mémoire tampon de sortie s'effectue en accordant le laser d'émission, raccordé à la sortie de la mémoire tampon d'entrée, sur la longueur d'onde d'accord du récepteur optoélectronique raccordé à l'entrée de la mémoire tampon de sortie destinataire pour la durée de la transmission du paquet.

Dans ce commutateur de paquet rapide,

- les signaux à transmettre subissent plusieurs transformations lors des opérations d'aiguillage, telles que conversions opto-électrique et électro-optique, (démodulation et remodulation des signaux optiques), désérialisation et sérialisation des signaux électriques,
- le routage des paquets nécessite d'exploiter des informations de routage inclues dans les paquets eux-mêmes et donc de démoduler le signal porteur,
- le dispositif de commutation optique, comprenant les émetteurs, diffuseur et récepteurs, est confiné dans un espace restreint,
- la capacité du moyen de commutation est limitée par le nombre de longueurs d'onde discriminables, chaque longueur d'onde étant affectée à un récepteur.

La demande de brevet européen EP-A-0 310 058 décrit un commutateur comportant :

- des sélecteurs de longueur d'onde pour sélectionner un canal à multiplexage temporel parmi plusieurs canaux portés par des longueurs différentes;
- et plusieurs étages de commutation temporelle et de conversion de longueur d'onde, reliés aux sorties des sélecteurs, pour fournir un signal placé dans un autre intervalle de temps et porté par une autre longueur d'onde.

Mais ce commutateur ne comporte aucun moyen permettant de modifier la configuration du réseau pour utiliser au mieux les longueurs d'onde disponibles lors de l'établissement de chaque communication.

L'invention a pour but de réaliser un système de communication optique multiservice à large bande, dans lequel la transmission et la commutation des signaux s'effectuent de bout en bout par le seul moyen de techniques optiques sans nécessiter une succession multiple de conversions optoélectroniques et électro-optiques, de démodulations et modulations des dits signaux.

Un autre but de l'invention est de réaliser un système de communication optique multiservice dans lequel un terminal puisse par le moyen d'un même émetteur optique et/ou d'un même récepteur optique établir une multiplicité de communications simultanées ayant des destinations ou des origines différentes.

Un autre but de l'invention est de réaliser un système de communication optique multiservice dans lequel l'utilisation des longueurs d'ondes ou fréquences optiques soit optimisée de sorte à augmenter la capacité de raccordement en terminaux du système.

Un autre but de l'invention est un système de communication optique temporel asynchrone qui fonctionne sans nécessiter une analyse de l'information transférée autre que celle directement permise par les seuls moyens de l'optique et de l'opto électronique sans démodulation ou conversion préalable des signaux optiques de communication.

Un autre but de l'invention est de réaliser les aiguillages spatiaux et temporels des signaux optiques porteurs de l'information par des moyens optiques et optoélectroniques, eux-mêmes commandés par des signaux optiques.

L'invention a pour objet un système de communication optique temporel asynchrone ATM, ayant : un central de communication, q circuits de réception de terminal reliés par au plus q liaisons optiques de réception de terminal au central de communication, p circuits d'émission de terminal reliés chacun par une liaison optique d'émission de terminal au central, lesdits circuits d'émission de terminal et de réception de terminal étant répartis dans : x terminaux de communication distants ayant chacun un circuit d'émission et un circuit de réception, y terminaux d'émission ayant chacun un circuit d'émission, z terminaux de réception ayant chacun un circuit de réception;

le central de communication comprenant :

. un dispositif optique de commutation spectro-temporel, relié optiquement aux liaisons optiques d'émission et aux liaisons optiques de réception;

. un moyen de commande;

. et un générateur de signaux de synchronisation;

caractérisé en ce que chaque circuit de réception de terminal comporte :

. au moins un récepteur optique de configuration, accordé sur une fréquence optique d'un premier groupe de fréquences optiques d'un premier ensemble de fréquences optiques;

. un récepteur optique de transmission, accordable sur une fréquence optique quelconque d'un deuxième groupe de fréquences optiques dudit premier ensemble de fréquences optiques;

. un moyen d'accord fréquentiel optique dudit récepteur optique de transmission;

. et un moyen de synchronisation temporelle de l'information reçue; en ce que chaque circuit d'émission de terminal comporte :

. un émetteur optique de transmission, accordable sur une fréquence optique quelconque du

dit deuxième groupe de fréquences optiques;

. un moyen d'accord fréquentiel optique dudit émetteur optique;

. et des moyens de synchronisation temporelle et de cadrage temporel de l'information à transmettre;

en ce que le moyen de commande comprend :

. au moins un circuit d'émission de configuration, ayant un émetteur optique de configuration accordé sur une fréquence optique dudit premier groupe de fréquences optiques;

. au moins un circuit d'émission de signalisation ayant un émetteur optique de transmission accordable sur une fréquence optique quelconque dudit deuxième groupe de fréquences optiques;

. au moins un circuit de réception de configuration et au moins un circuit de réception de signalisation, ayant chacun au moins un récepteur optique de configuration accordé sur une une fréquence optique dudit premier groupe de fréquences optiques; et un récepteur optique de transmission accordable sur une fréquence optique quelconque dudit deuxième groupe de fréquences optiques;

en ce que ledit central est relié au dispositif de commutation par :

. une liaison de commande ;

. au moins une liaison optique d'émission de configuration, chacune étant reliée optiquement à l'émetteur optique de configuration d'un circuit d'émission de configuration;

. au moins une liaison optique de réception de configuration, chacune étant reliée optiquement aux récepteurs optiques de configuration et de transmission d'un circuit de réception de configuration;

. au moins une liaison optique d'émission de signalisation, chacune étant reliée optiquement à l'émetteur optique d'un circuit de signalisation;

. au moins une liaison optique de réception de signalisation, chacune étant reliée optiquement aux récepteurs optiques de configuration et de transmission d'un circuit de réception de signalisation;

et en ce que le générateur de signaux de synchronisation est relié par une première liaison de synchronisation au dispositif de commutation et par une deuxième liaison de synchronisation au moyen de commande.

Selon un premier mode de réalisation, le dispositif de commutation spectro-temporel comprend :

. un circuit optique d'exploration relié optiquement aux liaisons optiques d'émission de terminal et aux liaisons optiques d'émission de signalisation, lesdites liaisons optiques d'émission acheminant chacune un multiplex spectro-temporel d'émission constitué par des canaux acheminant chacun un échantillon optique d'information;

. un distributeur optique d'ordres de commande;

. un circuit de commande relié d'une part, optiquement :

.. au circuit optique d'exploration par une première liaison optique acheminant un multiplex spectro-temporel de destination comportant autant de canaux qu'il y a de liaisons d'émission;

.. au distributeur optique par une deuxième liaison optique acheminant un multiplex spectro-temporel d'ordres de commande ayant un nombre de canaux égal à celui dudit multiplex de destination, chaque canal du multiplex d'ordres de commande étant en phase temporelle avec un canal de même rang dudit multiplex de destination et acheminant un ordre de commande;

.. et au générateur de synchronisation par la première liaison de synchronisation;

.. et étant relié, d'autre part, au moyen de commande par la liaison de commande;

. n commutateurs temporels optiques, à propagation contrôlée, chacun étant relié optiquement à une sortie du circuit optique d'exploration et à une sortie du distributeur optique des ordres de commande;

. un diffuseur optique relié optiquement en sortie des commutateurs temporels et aux liaisons optiques émission de configuration, et ayant des sorties reliées optiquement chacune en entrée d'un filtre optique;

. s filtres optiques relié chacun optiquement en sortie à une des liaisons optiques réception de terminal, réception de signalisation, réception de configuration;

. un circuit de configuration des filtres raccordé en entrée à la liaison de commande et en sortie à une entrée de commande de chaque filtre optique.

Selon un second mode de réalisation, le dispositif de commutation spectro-temporel comprend :

. un circuit optique d'exploration relié optiquement aux liaisons optiques d'émission de terminal et aux liaisons optiques d'émission de signalisation, lesdites liaisons optiques d'émission acheminant chacune un multiplex spectro-temporel d'émission constitué par des canaux acheminant chacun un échantillon optique d'information;

. un distributeur optique d'ordres de commande;

. un circuit de commande relié d'une part, optiquement : au circuit optique d'exploration, par une première liaison optique acheminant un multiplex spectro-temporel de destination comportant autant de canaux qu'il y a des liaisons d'émission; au distributeur optique, par une deuxième liaison optique acheminant un multiplex spectro-temporel d'ordres de commande ayant un nombre de canaux égal à celui dudit multiplex de destination, chaque canal du multiplex d'ordres de commande étant une phase temporelle avec un canal de même rang dudit multiplex de destination et acheminant un ordre de commande; et au générateur de synchronisation par la première liaison de synchronisation; et relié, d'autre part, au moyen de commande par la liaison de commande;

. des moyens optiques de commutation temporelle à propagation, ayant :

.. n circuits d'entrée, reliés chacun optiquement à une sortie du circuit optique d'exploration et à une sortie du distributeur optique des ordres de commande;

.. et un dispositif de sortie relié optiquement en entrée aux circuits d'entrée;

. un diffuseur optique relié optiquement en sortie du dispositif de sortie, et aux liaisons optiques émission de configuration, et ayant des sorties reliées optiquement chacune en entrée d'un filtre optique;

. s filtres optiques reliés chacun optiquement en sortie à une des liaisons optiques réception de terminal, réception de signalisation, réception de configuration;

. un circuit de configuration des filtres, raccordé en entrée à la liaison de commande et en sortie à une entrée de commande de chaque filtre optique.

Selon une autre caractéristique :

. le multiplex de destination est constitué par échantillonnage des canaux se présentant à un même instant en entrée du circuit d'exploration sur chacune des liaisons d'émission;

. chaque canal du multiplex d'ordres de commande ayant même rang qu'une liaison d'émission achemine un ordre de commande constitué par un signal optique à une fréquence optique d'un deuxième ensemble de fréquences optiques dont chaque fréquence optique est caractéristique d'un retard de propagation en temps réel que doit subir, dans un commutateur temporel, le message acheminé par le canal de ladite liaison d'émission, ladite fréquence optique étant déterminée par le circuit de commande; et le distributeur optique délivre à chaque commutateur temporel, correspondant au rang d'un canal du multiplex d'ordres de commande, l'ordre de commande, acheminé par ledit canal du multiplex d'ordres de commande.

Le système de communication selon l'invention met en oeuvre plusieurs multiplex :

- un multiplex temporel tramé émission, CEM, dit multiplex de configuration, dont :
    . la fréquence optique porteuse d'un groupe Fa1 sert de référence pour les systèmes d'encodage fréquentiels optiques des terminaux;
    . le code de trame est utilisé comme référence temporelle pour la synchronisation temporelle des terminaux;
    . et les autres canaux sont utilisés pour la transmission des messages de configuration des terminaux;
- un multiplex temporel réception, non tramé, CRM, acheminant des échantillons optiques portés par une fréquence d'un groupe Fa2, qui sert de support aux messages de réponse des terminaux dans les opérations de configuration;
- une paire de multiplex dits multiplex de signalisation, ayant un multiplex émission spectro-temporel SEM et un multiplex réception SRM, servant aux échanges de signalisation entre les terminaux et le moyen de commande du central;
- une multiplicité de multiplex émission spectro-temporels UEM et une multiplicité de multiplex réception temporels URM, lesquels multiplex UEM et URM sont des multiplex de communication, lesquels multiplex SEM, SRM, UEM et URM acheminent des échantillons optiques portés chacun par une fréquence optique du groupe Fa2.

Le système de communication met en oeuvre pour la commande :

- un multiplex OLM, dit multiplex des destinations;
- un multiplex CLM, dit multiplex des ordres de commande, lesquels multiplex OLM et CLM sont des multiplex temporels tramés ayant une période égale à la durée d'un canal des multiplex de communication et un nombre de canaux par trame égal au moins au nombre total des lignes UEL et SEL raccordées au dispositif de commutation spectro-temporel SSTSN.

Les échantillons optiques acheminés par les divers multiplex ont une durée T et sont temporellement formés d'une partie centrale, contenant l'information transmise, encadrée de part et d'autre de parties non porteuses d'information constituant des fenêtres de commutation.

Les durées relatives des trois parties sont telles qu'il n'est pas nécessaire de réaliser avant commutation un alignement temporel parfait des échantillons par rapport aux horloges locales du dispositif de commutation pour éviter de dégrader l'information transmise.

L'information transmise est soit un signal numérique soit un signal analogique: dans le premier cas, le signal est formaté en cellules contenant chacune une multiplicité d'octets, dans le second cas le signal est temporellement découpé en échantillons.

Chaque cellule ou échantillon de signal est transmis par un échantillon optique encodé à la fréquence optique caractéristique de la destination du signal qui constitue la référence d'aiguillage pour les moyens d'aiguillage du central et qui constitue la référence de sélection pour les moyens de réception des terminaux. Le circuit de commande CC comprend une multiplicité de générateurs élémentaires d'ordre de commande des commutateurs temporels TSU, en charge chacun de la gestion des canaux d'un des multiplex de transmission réception CRM, SRM et URM et de l'élaboration des ordres de commande des commutateurs TSU pour tous les échantillons optiques devant être aiguillés sur ces multiplex de transmission réception quelle qu'en soit la provenance.

Le nombre de générateurs équipés est au moins égal au nombre des multiplex CRM,SRM et URM mis en oeuvre dans le système, égal au nombre des fréquences f2 du deuxième groupe Fa2 des fréquences optiques et au plus égal au nombre de fréquences optiques discriminables dans le spectre optique.

L'invention va être précisée par la description qui va suivre d'un mode préféré de réalisation de l'invention, donné à titre d'exemple non limitatif, en référence aux dessins annexés dans lesquels:

- la figure 1A représente schématiquement un exemple de réalisation du système de communication selon l'invention;
- la figure 1B représente schématiquement un premier mode de réalisation du dispositif de commutation spectro-temporel, dispositif équipant cet exemple de réalisation du système de communication selon l'invention;
- les figures 2 à 5 représentent les schémas de principe de divers circuits constituant un premier mode de réalisation du dispositif de commutation spectro-temporel, soit :
    . figure 2A - un circuit "explorateur des lignes d'entrée";
    . figure 2B - un circuit "distributeur des ordres de commande aux commutateurs temporels à propagation";
    . figure 3A - un circuit combinant l'explorateur des lignes d'entrée et le distributeur des ordres de commande aux commutateurs temporels optiques à propagation;
    . figure 3B - une variante du circuit combinant l'explorateur des lignes d'entrée et le distributeur des ordres de commande aux commutateurs temporels optiques à propagation;
    . figure 4A - un circuit d'élaboration de commandes des circuits "explorateur des lignes d'entrée" et "distributeur des ordres de commande aux commutateurs temporels à propagation", respectivement représentés sur les figures 2A et 2B;

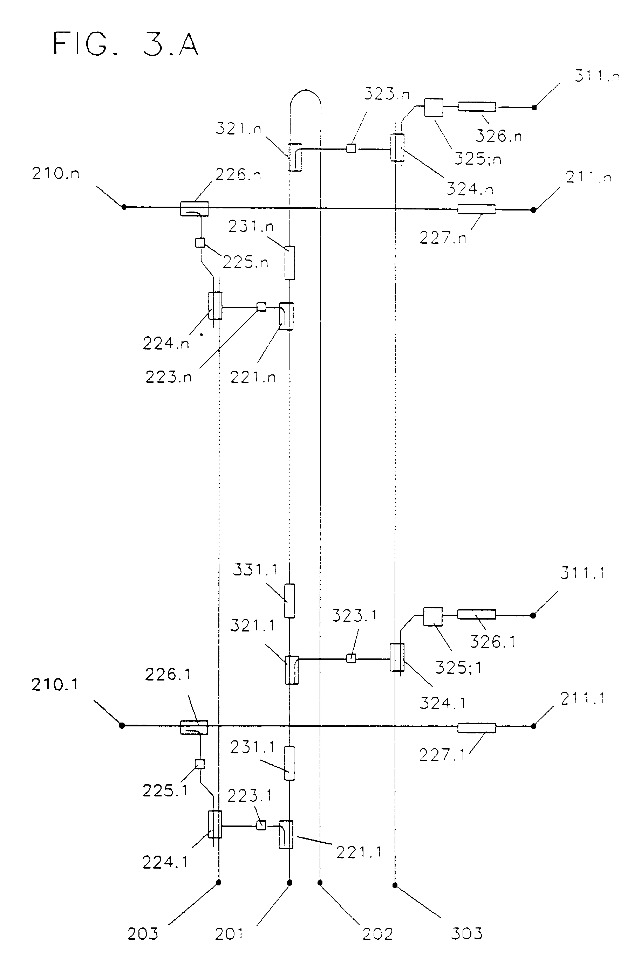

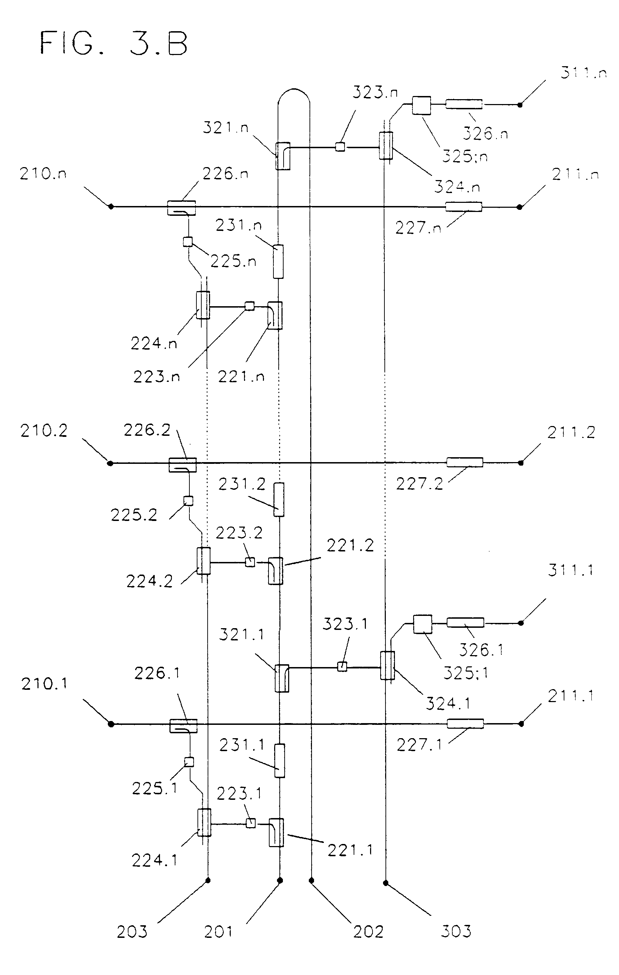

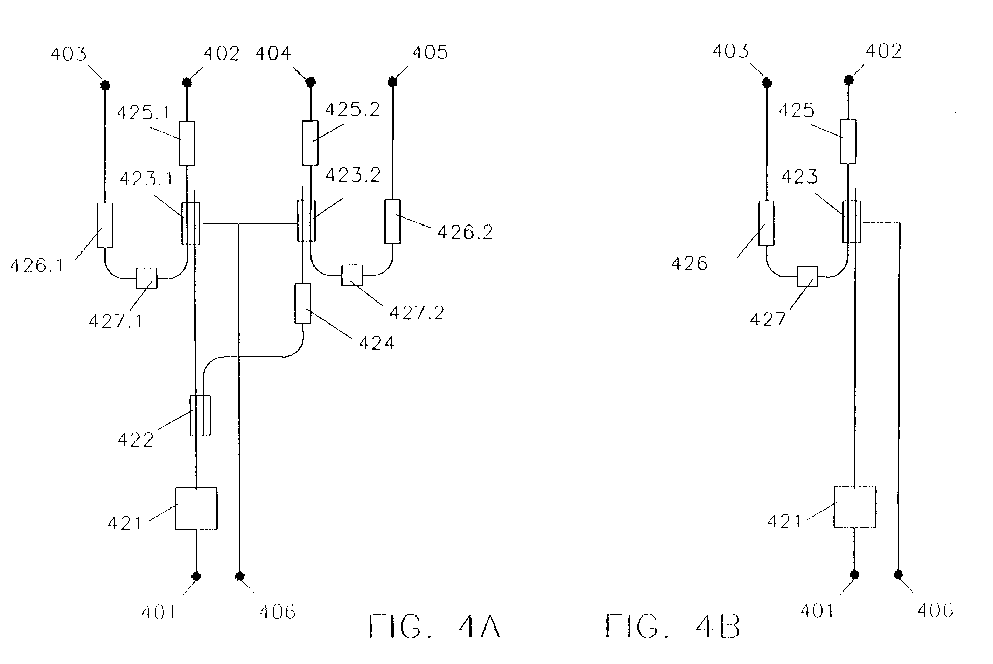

  . figure 4B - un circuit d'élaboration de commandes du circuit combinant l'explorateur et le distributeur, représenté sur les figures 3A ou 3B;

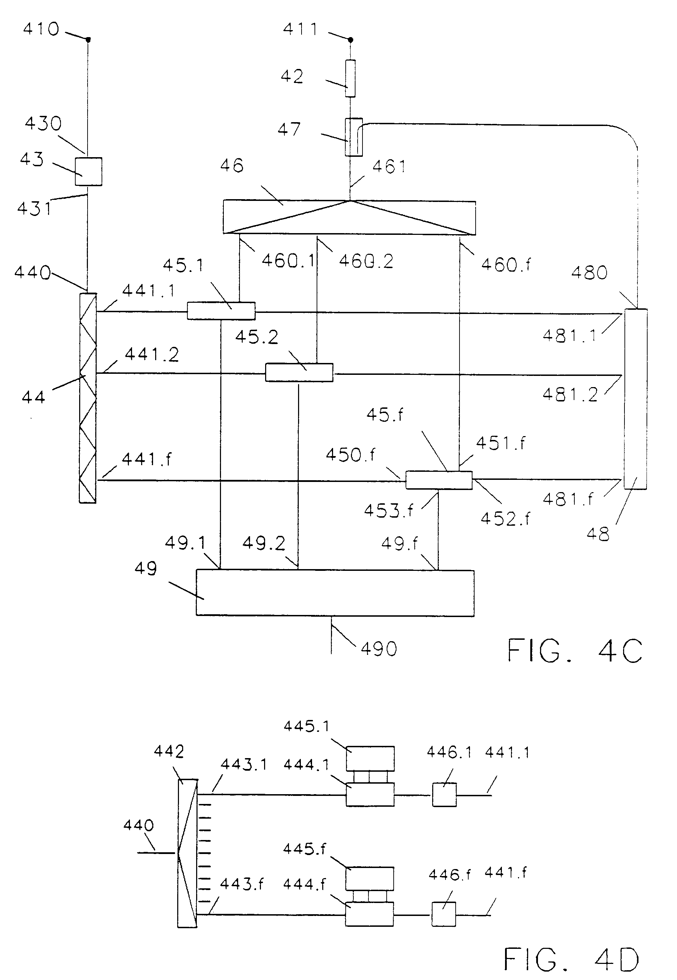

  . figure 4C - un générateur du multiplex de commande des commutateurs temporels optiques à propagation;

  . figure 4D - un exemple de réalisation d'un démultiplexeur spectral;

  . figure 4E - un circuit d'un générateur élémentaire d'ordre de commande des commutateurs temporels optiques à propagation;

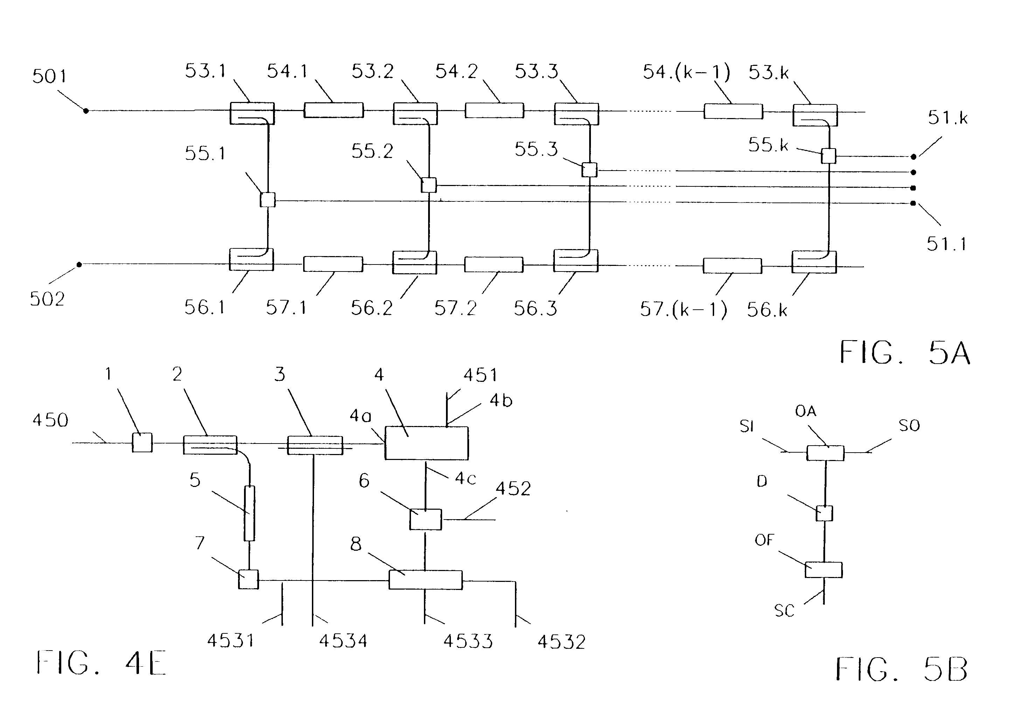

  . figure 5A - un commutateur temporel optique à propagation;

  . figure 5B - un point de connexion du commutateur temporel optique à propagation;

  . figure 5C - une variante de réalisation du commutateur temporel optique à propagation utilisant un coupleur kx1;

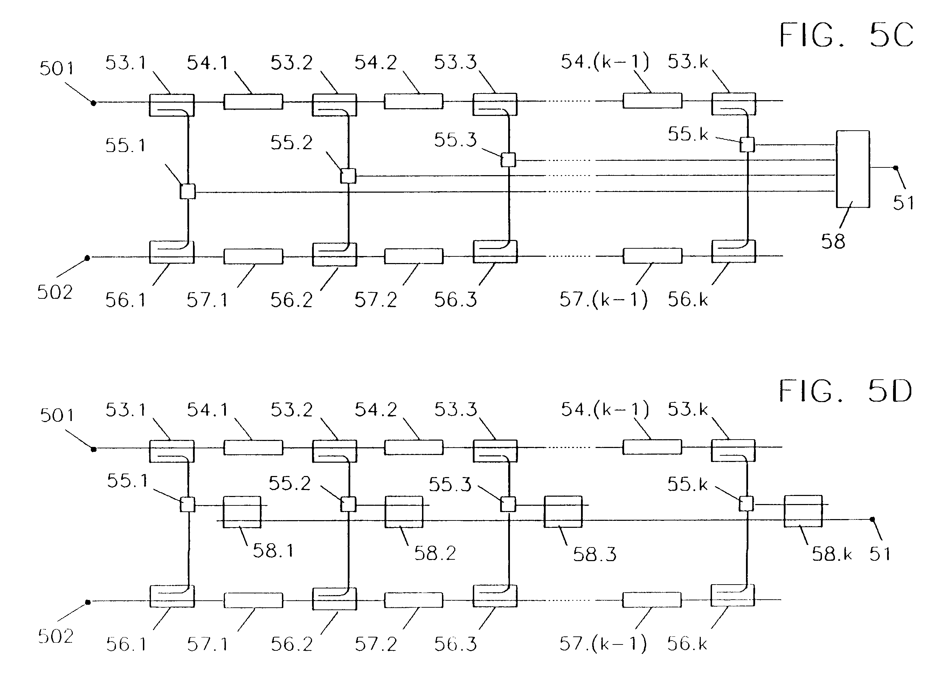

  . figure 5D - une autre variante de réalisation du commutateur temporel optique à propagation utilisant k coupleurs 2x1;

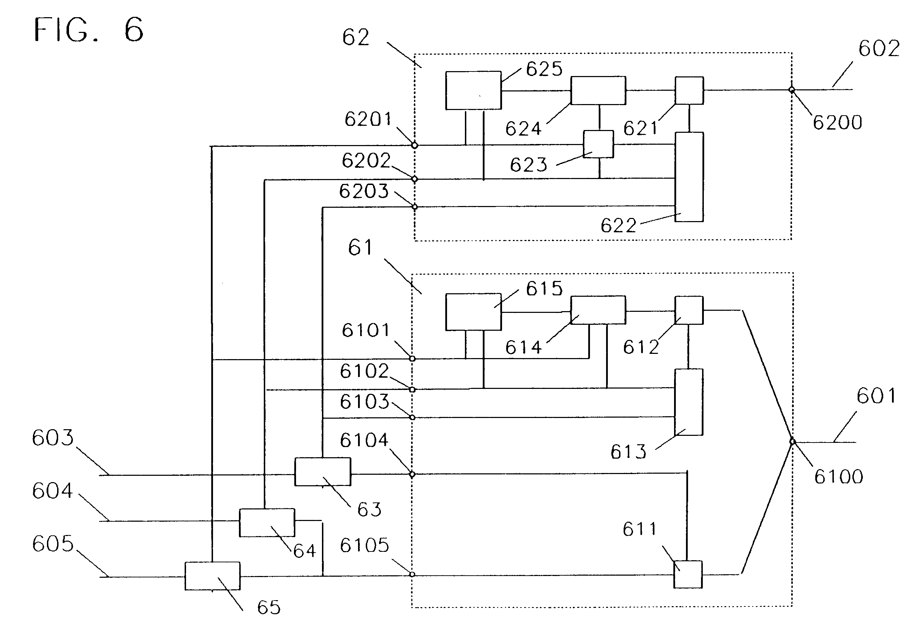

- la figure 6 représente schématiquement un terminal de communication;

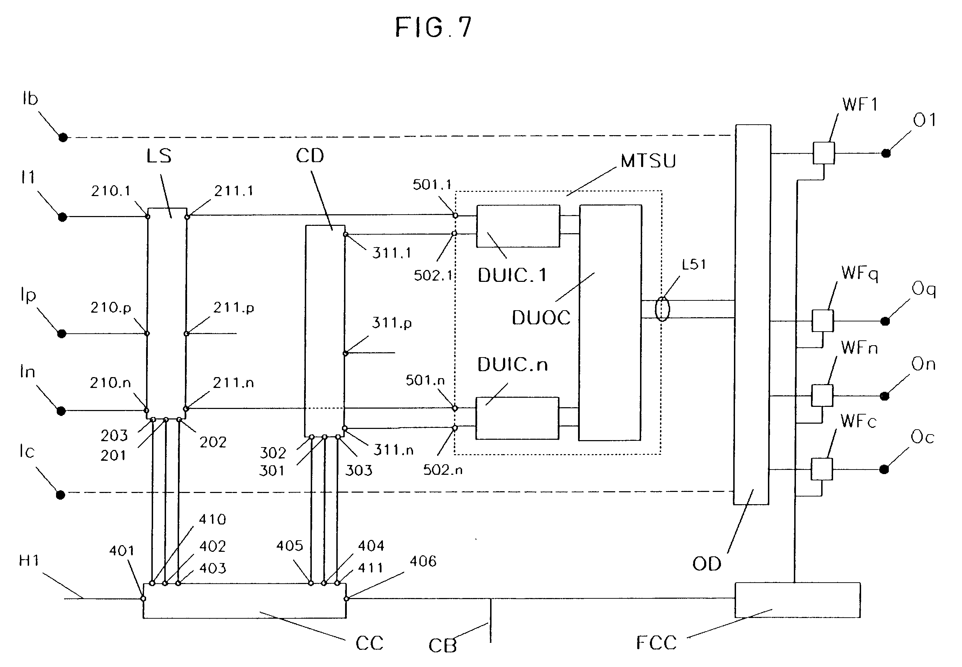

- la figure 7 représente schématiquement un second mode de réalisation du dispositif de commutation spectro-temporel SSTSN;

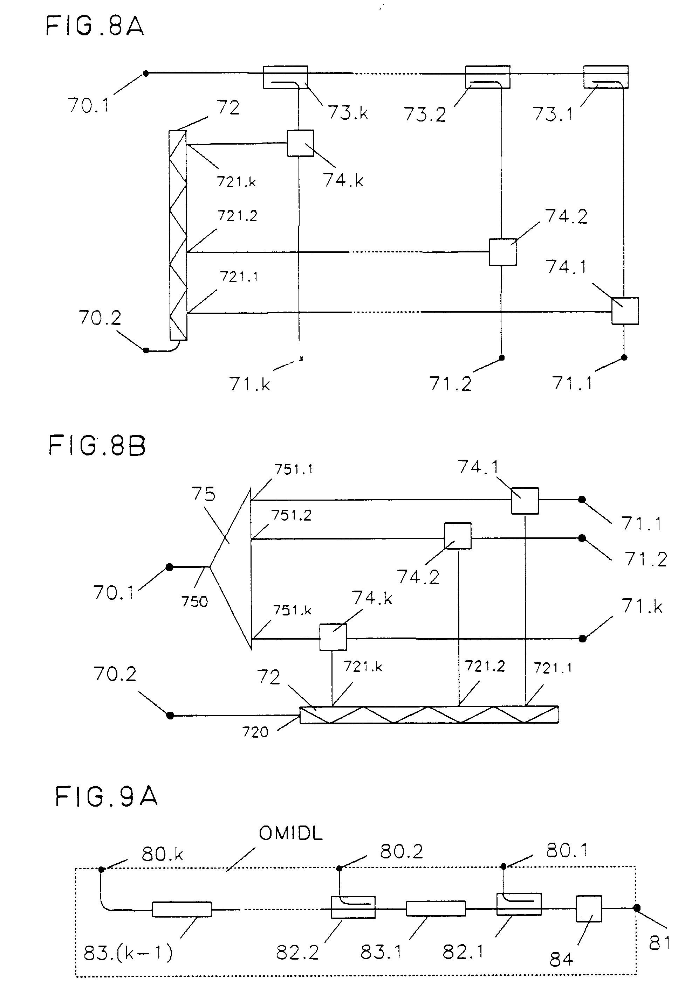

- les figures 8A à 9B représentent les schémas de principe des divers circuits constituant des moyens de commutation, MSTSU, mis en oeuvre dans ce second mode de réalisation, soit :

  . la figure 8A - un "circuit d'entrée" DUIC;

  . figure 8B - une variante d'un "circuit d'entrée" DUIC;

  . figure 9A - une "ligne optique à retard à entrées multiples" OMIDL;

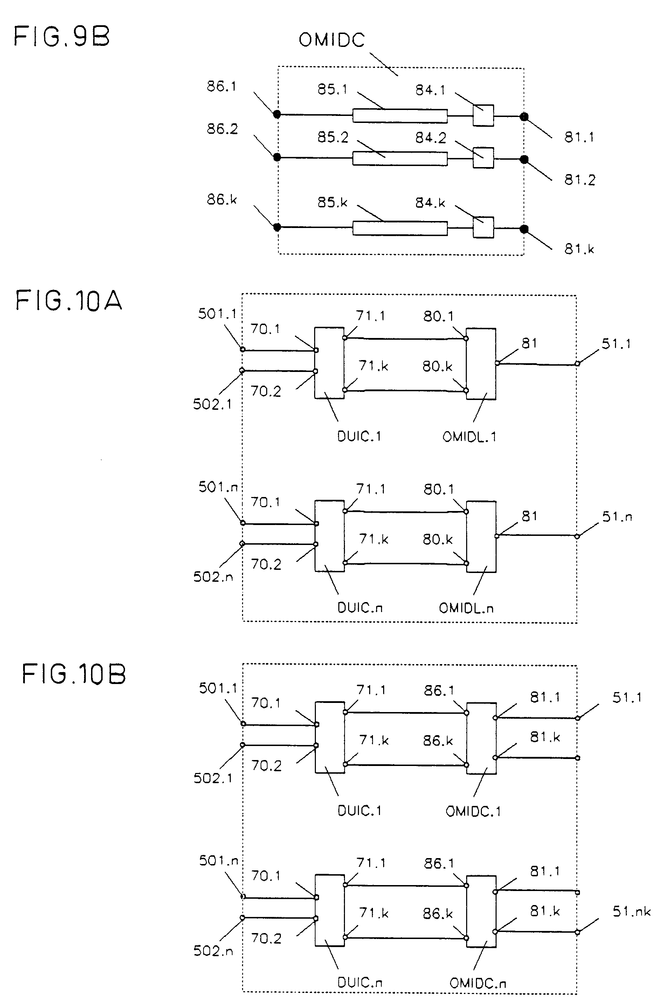

  . figure 9B - un "circuit optique de retard à entrées multiples" OMIDC;

- les figures 10A et 10B représentent chacune une variante d'un premier mode d'organisation des moyens optiques de commutation temporelle à propagation, MSTSU;

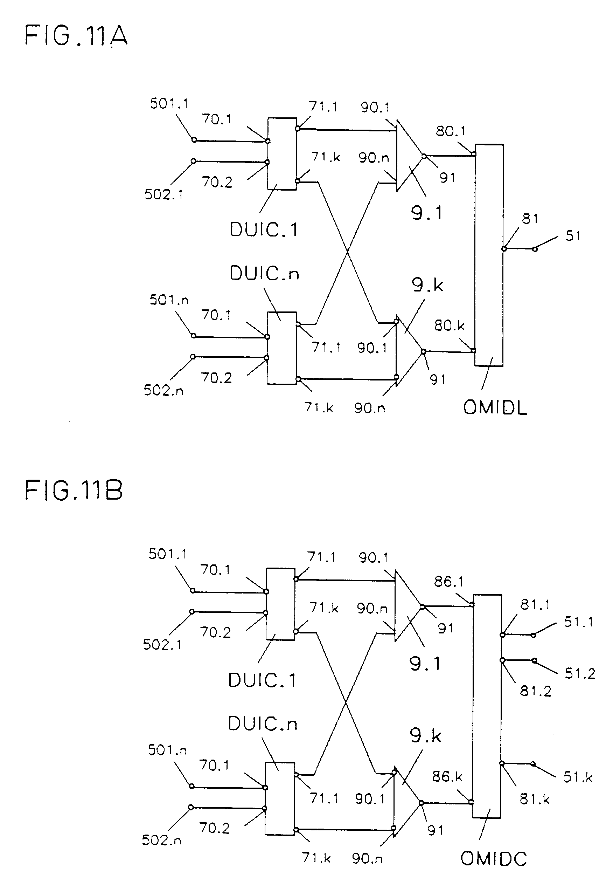

- les figures 11A et 11B représentent chacune une variante d'un second mode d'organisation des moyens optiques de commutation temporelle à propagation, MSTU.

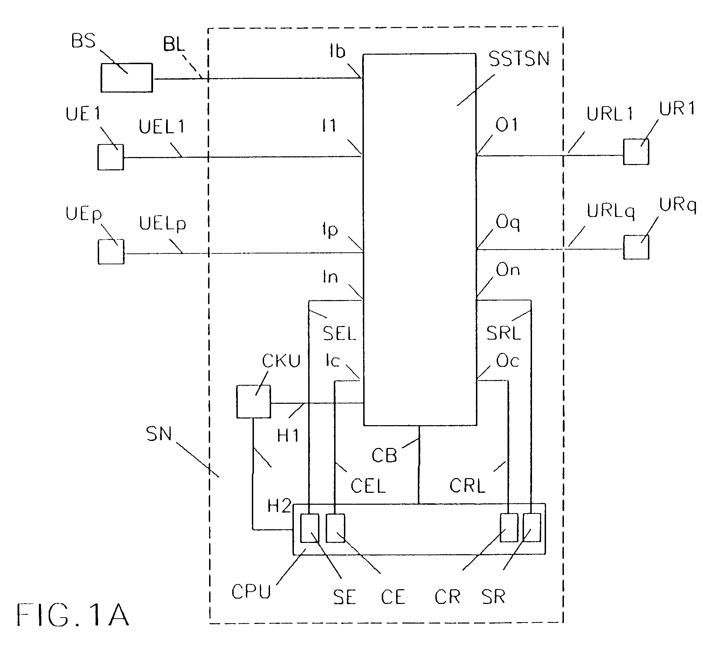

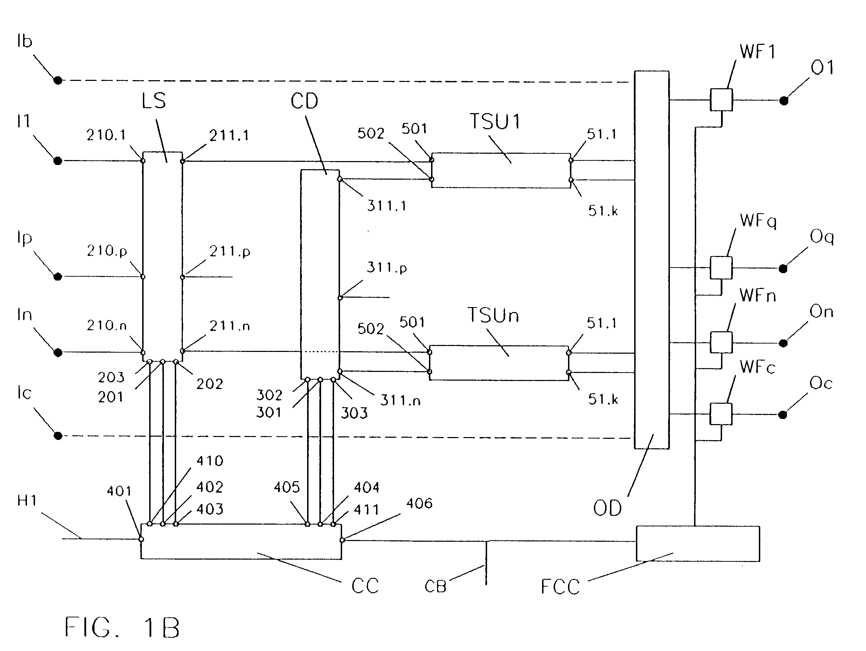

La figure 1A représente un exemple de réalisation de système de communication selon l'invention, qui met en oeuvre au moins un central de communication SN auquel sont raccordés, d'une part :

  . p circuits d'émission de terminal UE (UE1 à UEp), ayant chacun un émetteur optique de transmission relié à ladite liaison optique d'émission de terminal, un moyen d'accord fréquentiel optique dudit émetteur optique, des moyens sources de l'information à transmettre et des moyens de synchronisation temporelle et cadrage temporel de ladite information, chaque circuit étant raccordé par une liaison optique d'émission UEL (UEL1 à UELp);

  . q circuits de réception de terminal UR (UR1 à URq), ayant chacun un récepteur optique de transmission et au moins un récepteur optique de configuration reliés à ladite liaison optique de réception de terminal, un moyen d'accord fréquentiel optique dudit récepteur optique de transmission, un moyen de synchronisation temporelle et des moyens d'exploitation de l'information reçue, chaque circuit étant raccordé par une liaison optique de réception URL (URL1 à URLq);

et d'autre part, éventuellement, un ou plusieurs serveurs de diffusion BS, tels que par exemple de diffusion de programmes audiovisuels, chacun par une liaison optique de diffusion BL.

Les dits circuits d'émission de terminal UE et de réception de terminal UR sont répartis dans :

  .. x terminaux de communication ayant chacun un circuit d'émission UE et un circuit de réception UR, raccordés chacun par une liaison optique d'émission UEL et une liaison optique de réception URL,

  .. y terminaux d'émission ayant chacun un circuit d'émission UE, raccordés chacun par une liaison optique d'émission UEL,

  .. z terminaux de réception ayant chacun un circuit de réception UR, raccordés chacun par une liaison optique de réception URL.

Les nombres p et q de circuits d'émission et de circuits de réception sont tels que:

$$p = x + y \qquad q = x + z$$

Plusieurs serveurs de diffusion BS et/ou plusieurs terminaux d'émission peuvent être regroupés dans des centres serveurs. Les terminaux de réception sont généralement installés chez des abonnés ou des centres serveurs de collecte de données. Les terminaux de communication sont installés chez des abonnés, dans les centraux interconnectés au central SN ainsi que dans les centres serveurs dont ils permettent l'accès interactif par le central pour la gestion du fonctionnement et, éventuellement par les usagers, pour la gestion des prestations.

Outre lesdits circuits d'émission et de réception, chaque terminal de communication a divers autres moyens fonctionnels dont

  . un générateur synchronisable de signaux d'horloge,

  . un moyen de référence fréquentielle optique,

  . et un moyen de commande supervisant les divers autres moyens fonctionnels.

Les terminaux d'émission et/ou de réception regroupés dans un même centre serveur et les terminaux de réception localisés chez des abonnés sont gérés par les dits autres moyens fonctionnels du terminal de communication installé dans le centre serveur ou chez l'abonné.

Les liaisons optiques d'émission UEL et de réception URL raccordant un même terminal de communication sont supportées chacune par une fibre optique ou utilisent une même fibre optique équipée en ses extrémités de duplexeurs optiques séparant les deux sens de transmission, associés à des moyens d'isolation optique.

Une même fibre optique ne supporte qu'une seule liaison optique d'émission UEL.

Une même fibre optique peut supporter plusieurs liaisons optiques URL, laquelle fibre est alors équipée, en son extrémité distante du central, d'un diffuseur optique constitué par exemple d'un coupleur optique étoile.

Les liaisons optiques BL raccordant les serveurs BS d'un même centre serveur sont supportées chacune par une fibre optique ou regroupées par le moyen d'un coupleur optique dans le centre serveur sur une même fibre optique de raccordement du centre serveur.

Le central SN comprend les moyens suivants:

- un dispositif de commutation spectro-temporel SSTSN ayant:

  . deux groupes d'entrées de capacité respective n et m :

  .. un premier groupe de n entrées I1 à In, dont p sont chacune raccordée optiquement à une des liaisons optiques UEL, et dont au moins une des n-p restantes, telle In, est raccordée à une liaison optique émission de signalisation SEL;

  .. un deuxième groupe de m entrées, dont m1 entrées, telles l'entrée Ib, sont chacune raccordée à une fibre optique supportant une ou plusieurs liaisons BL raccordant chacune un serveur de diffusion BS, et au moins une des m2 = (m-m1) entrées restantes, telle l'entrée Ic, est raccordée à une liaison optique émission de configuration CEL;

  . un groupe de s sorties optiques identiques dont :

  .. q sorties (O1 à Oq) sont, dans le cas général, chacune raccordée à une liaison optique URL;

  .. au moins une sortie, telle la sortie On, est raccordée à une liaison optique réception de signalisation SRL;

  .. au moins une sortie, telle la sortie Oc, est raccordée à une liaison optique réception de configuration CRL;

  . un accès de synchronisation raccordé à une liaison de synchronisation H1;

  . un accès de commande raccordé à une liaison de commande CB;

- un moyen de commande CPU ayant :

  . au moins un circuit d'émission de configuration CE comportant un émetteur optique de configuration raccordé à une liaison optique d'émission de configuration CEL;

  . au moins un circuit de réception de configuration CR comportant un récepteur optique de transmission et au moins un récepteur optique de configuration, raccordés à une liaison de réception de configuration CRL;

  . au moins un circuit d'émission de signalisation SE comportant un émetteur optique de signalisation raccordé à une liaison optique d'émission de signalisation SEL;

  . au moins un circuit de réception de signalisation SR comportant un récepteur de signalisation et au moins un récepteur de configuration, raccordés à une liaison optique de réception de signalisation SRL;

- un générateur de signaux de synchronisation CKU raccordé :

  . au dispositif de commutation spectro-temporel SSTSN par la liaison de synchronisation H1;

  . au moyen de commande CPU par une liaison de synchronisation H2.

Le moyen de commande CPU est raccordé :

. au dispositif de commutation spectro-temporel SSTSN par lesdites liaisons optiques émission et réception de configuration et de signalisation (CEL, CRL ; SEL, SRL) et par une liaison de commande CB;

. au générateur de signaux de synchronisation CKU par la liaison de synchronisation H2.

Dans le cas où plusieurs liaisons optiques URL sont supportées par une même fibre optique, celle-ci est raccordée à une seule des sorties Oi du dispositif de commutation spectro-temporel SSTSN.

Chaque émetteur optique de configuration est accordé sur une fréquence optique d'un premier groupe Fa1 de fréquences optiques, ayant f1 fréquences optiques et appartenant à un premier ensemble de fréquences Fa qui est l'ensemble des fréquences optiques de transmission du dispositif de l'invention, et chaque récepteur optique de configuration est accordé, en fonction de son rang, sur une fréquence optique dudit premier groupe de fréquences optiques.

Les dits émetteurs optiques de transmission et récepteurs optiques de transmission sont accordables sur une fréquence optique quelconque d'un deuxième groupe Fa2 de fréquences optiques de l'ensemble Fa, ayant f2 fréquences, différentes des fréquences du premier groupe Fa1 de fréquences optiques.

Chaque liaison optique de diffusion BL d'un serveur de diffusion BS est raccordée dans le serveur BS à au moins un émetteur optique dit émetteur optique de diffusion, les circuits de réception UR comprennent éventuellement un ou plusieurs récepteurs optiques de diffusion.

Les dits émetteurs optiques de diffusion et récepteurs optiques de diffusion sont accordables sur une fréquence optique quelconque d'un troisième groupe Fa3 de fréquences optiques de l'ensemble Fa, ayant f3 fréquences, différentes des fréquences des premier et deuxième groupes Fa1 et Fa2 de fréquences optiques.

Selon une autre forme de réalisation de l'invention, chaque circuit de réception UR comprend au moins un récepteur optique, accordables sur une fréquence optique quelconque des trois groupes Fa1, Fa2, Fa3 de fréquences optiques constituant le premier ensemble Fa de fréquences optiques. Le dit premier ensemble de fréquences optiques Fa, ensemble des fréquences optiques de transmission du dispositif de l'invention, comprend donc les trois groupes de fréquences optiques Fa1, Fa2 et Fa3 ayant respectivement f1, f2 et f3 fréquences distinctes.

Le nombre fa des fréquences optiques du premier ensemble de fréquences optiques Fa est égal à la somme des nombres de fréquences de chaque groupe:

$$fa = f1 + f2 + f3$$

Le terme "fréquence" est utilisé dans la présente description pour la commodité de l'exposé: en fait, il s'agit d'une bande spectrale étroite, centrée sur une fréquence optique, discriminable soit par le moyen d'un dispositif de filtrage optique, soit par le moyen d'un dispositif de filtrage optoélectrique connu sous la dénomination de photorécepteur hétérodyne.

Le nombre maximal, famax, des fréquences optiques du dit premier ensemble Fa des fréquences optiques est égal au nombre maximal, fmax, des fréquences optiques techniquement discriminables dans un spectre optique par les moyens techniques cités ci- dessus.

$$fa \leqq famax = fmax$$

Chaque émetteur optique émet sur la liaison qui lui est raccordée un multiplex temporel, chaque récepteur optique reçoit par la liaison à laquelle il est raccordé au moins un multiplex temporel, lesquels multiplex temporels, à l'exception des multiplex CEM décrits ci-après, sont temporellement structurés en une suite de canaux temporels indifférenciés de durée T, et ne sont pas tramés. Dans les descriptions qui suivent, pour la commodité de l'exposé, il est supposé que chaque canal temporel d'une suite de canaux indifférenciés est identifiable par une référence temporelle Ti, relative à l'horloge du système de communication.

Les multiplex CEM sont des multiplex tramés dont la trame a c canaux et une période c.T.

Le premier canal de chaque trame achemine un code d'identification de début de trame, comme cela est connu dans les techniques temporelles. Les autres canaux sont indifférenciés et donc identiques aux canaux des autres multiplex.

Dans chaque canal temporel Ti est transmis un échantillon optique de durée T, porteur d'une information à transmettre. La fréquence optique porteuse de chaque échantillon est caractéristique de sa destination, soit fonctionnelle soit physique: l'encodage fréquentiel optique des échantillons est réalisé par le circuit d'émission en fonction de leur destination physique ou fonctionnelle.

L'information à transmettre peut être soit un signal numérique soit un signal analogique: dans le premier cas, le signal est formaté en cellules contenant chacune une multiplicité d'octets, par exemple 36 ou 53 octets, dans le second cas le signal est temporellement découpé en échantillons.

Chaque cellule ou échantillon de signal est transmis par échantillon optique encodé à une fréquence optique caractéristique de la destination du signal. La fréquence optique porteuse d'un échantillon constitue pour les moyens d'aiguillage du central la référence d'aiguillage et pour les moyens de réception des terminaux la référence de sélection.

Dans le mode de réalisation préféré de l'invention, chaque échantillon optique de durée T est temporellement formé d'une partie centrale, contenant l'information transmise, encadrée de part et d'autre de parties, non porteuses d'information, constituant des fenêtres de commutation. Les durées relatives des trois parties sont telles qu'il n'est pas nécessaire de réaliser avant commutation un alignement temporel parfait des échantillons par rapport aux horloges locales du dispositif de commutation pour éviter de dégrader l'information transmise.

Quand tous les échantillons optiques d'un multiplex sont portés par une même fréquence optique, le multiplex est désigné ci-après comme multiplex temporel. Quand les échantillons optiques successifs d'un multiplex peuvent être portés par des fréquences optiques différentes, le multiplex est désigné ci-après comme multiplex spectro-temporel.

Chaque circuit d'émission CE émet sur sa liaison CEL un multiplex temporel CEM, dit multiplex émission de configuration. Les multiplex temporels CEM sont, quel que soit le mode de fonctionnement du système de communication, des multiplex tramés. Ils sont systématiquement tous diffusés par le dispositif de commutation SSTSN sur chacune des liaisons CRL, SRL et URL et reçus par les dits récepteurs optiques de configuration des circuits de réception raccordés aux dites liaisons. Chaque multiplex temporel CEM est porté par une des f1 fréquences optiques du groupe de fréquences Fa1, laquelle fréquence optique est caractéristique du rang du multiplex dans l'ensemble des multiplex CEM. Les fréquences optiques du groupes Fa1 sont fonctionnellement caractéristiques de la fonctionnalité configuration.

Chaque circuit d'émission SE émet sur sa liaison SEL un multiplex spectro-temporel SEM, dit multiplex émission de signalisation, chaque circuit d'émission UE émet sur sa liaison UEL un multiplex spectro-temporel UEM, dit multiplex émission de communication, lesquels multiplex spectro-temporels SEM et UEM acheminent une succession d'échantillons optiques supportés, chacun en fonction de sa destination, par une des f2 fréquences du groupe Fa2 des fréquences optiques. Les fréquences optiques du groupe Fa2 sont fonctionnellement caractéristiques de la fonctionnalité communication, comprenant la fonctionnalité signalisation.

Chaque liaison CRL achemine un multiplex temporel CRM, dit multiplex réception de configuration, chaque liaison SRL achemine un multiplex temporel SRM, dit multiplex réception de signalisation, chaque liaison URL en activité achemine un multiplex temporel URM, dit multiplex réception de communication.

Les multiplex temporels CRM, SRM et URM sont portés chacun par une des f2 fréquences optique du groupe Fa2 des fréquences optiques, laquelle fréquence optique est caractéristique, pour les moyens de commutation, du rang du multiplex dans l'ensemble des multiplex CRM, SRM et URM, et donc d'une destination spatiale dans le système de communication, laquelle n'est pas nécessairement invariante dans le temps comme exposé dans la description du fonctionnement du système de communication.

Les multiplex temporels CRM, SRM et URM sont émis optiquement par le dispositif SSTSN sur les liaisons CRL, SRL et URL et reçus optiquement par lesdits récepteurs de transmission des circuits de réception raccordés aux dites liaisons.

Chaque liaison BL achemine au moins un multiplex désigné ci-après comme multiplex BCM; chacun des multiplex BCM est porté par une des f3 fréquences optiques du groupe Fa3, laquelle fréquence optique est caractéristique du rang du multiplex BCM dans l'ensemble des multiplex BCM et constitue donc, pour les moyens d'aiguillage du central et les circuits de réception des terminaux, le paramètre de sélection des multiplex BCM.

Les fréquences optiques du groupe Fa3 sont fonctionnellement caractéristiques de la fonctionnalité diffusion. Les multiplex BCM sont diffusés, éventuellement sélectivement, sur les liaisons URL par le dispositif de commutation SSTSN, et reçus par les dits récepteurs optiques de diffusion des circuits de réception raccordés à ces liaisons.

Dans l'application la plus courante de l'invention, une liaison URL en activité achemine un multiplex URM, l'ensemble des multiplex CEM et éventuellement des multiplex BCM, chaque liaison CRL achemine un multiplex CRM et les multiplex CEM, et chaque liaison SRL achemine un multiplex SRM et les multiplex CEM.

Dans le central de l'invention, le dispositif de commutation spectro-temporel SSTSN,

- distribue, en fonction de leur fréquence optique porteuse $Fa2_i$, chaque échantillon des multiplex spectro-temporels émission SEM et UEM, au multiplex temporel réception CRM, SRM ou URM porté par la fréquence $Fa2_i$;
- diffuse sur chacune des liaisons CRL et SRL les multiplex CEM et sur chacune des liaisons URL, outre les multiplex URM concernés, les multiplex CEM et éventuellement de manière sélective les multiplex BCM.

Si fmax est le nombre maximal des fréquences optiques techniquement discriminables dans un spectre optique, dans l'hypothèse où le central SN ne dessert que des terminaux de communication et ne met en oeuvre qu'une liaison de chacun des types CRL, CEL, SEL et SRL, hypothèse exprimée par les relations :

$$y = z = 0 \; ; \; p = q = x$$
$$f1 = 1 \; ; \; f3 = 0 \; ; \; f2 = fmax\text{-}1$$

Le nombre maximal xmax de terminaux de communication pouvant être raccordés au central est :

$$xmax = fmax\text{-}3$$

Le nombre maximal Emax des multiplex spectro-temporels d'émission (SEM,UEM) mis en oeuvre est :

$$Emax = fmax\text{-}2$$

Le nombre maximal Rmax des multiplex réception (CRM, SRM, URM) devant être gérés par le dispositif de commutation spectro-spatio-temporel SSTSN est :

$$Rmax = fmax\text{-}1$$

La figure 1B représente l'organisation du dispositif de commutation SSTSN équipant le système de communication spectro temporel de l'invention, figure dans laquelle:

- I1 à In, Ib et Ic sont les entrées optiques.
- O1 à Oq, On et Oc sont les sorties optiques.
- H1 et CB sont respectivement les liaisons de synchronisation et de commande du dispositif de commutation spectro-temporel SSTSN.
- LS est un circuit optique explorateur des lignes d'entrée acheminant les multiplex spectro-temporels émission UEM et SEM. LS est raccordé optiquement :
  . par ses entrées 210.1 à 210.n aux entrées I1 à In;
  . par chacune de ses sorties 211.1 à 211.n, à l'entrée 501 d'un commutateur temporel optique TSU;
  . et par ses entrée et sortie de commande 201 et 202 et sa sortie 203, respectivement à la sortie 402 et aux entrées 403 et 410 d'un circuit de commande CC.

LS échantillonne les échantillons optiques contemporains des multiplex UEM et SEM issus des entrées I1 à In de SSTSN et présents sur ses entrées 210.1 à 210.n, regroupe les signaux optiques obtenus dans un multiplex spectro-temporel cyclique, dit multiplex OLM qui est émis sur la sortie 203, et transfère sur ses sorties 211.1 à 211.n les échantillons optiques reçus sur ses entrées.

- OLM est un multiplex d'une capacité utile de n canaux associés chacun à une des entrées 210.1 à 210.n et donc à une des entrées I1 à In de SSTSN. Il a un temps de cycle égal à la durée T d'un canal des multiplex des liaisons raccordées aux entrées I1 à In. Les signaux optiques qu'il achemine sont, par leurs caractéristiques spectrales, semblables aux échantillons optiques présents sur les entrées I1 à In dont ils sont issus, et donc représentatifs des destinations des dits échantillons optiques. Ils sont donc chacun supporté par une fréquence optique du deuxième groupe des fréquences optiques Fa2.
- CC est le circuit de commande du dispositif de commutation spectro-temporel. Il est raccordé optiquement :
  .. par ses accès 402,403 et 410 à l'explorateur de lignes LS comme décrit ci-dessus;
  .. par ses sorties 404 et 411 et son entrée 405 respectivement aux entrées de commande 301 et 303 et à la sortie de commande 302 d'un distributeur CD;
  .. par son accès 401 à la liaison de synchronisation H1; Il est raccordé, en outre, par son accès 406, à la liaison de commande CB.

Le circuit de commande CC analyse optiquement les signaux du multiplex OLM reçu sur l'entrée 410, génère les ordres de commande des commutateurs temporels TSU en fonction de la disponibilité des liaisons destinataires des échantillons présents sur les entrées I1 à In du dispositif de commutation, désignées par les caractéristiques spectrales des signaux du multiplex OLM, et transmet ces ordres de commande au distributeur CD par un multiplex spectro-temporel cyclique, dit multiplex CLM, émis sur la sortie 411, ayant le même nombre n de canaux utiles et la même période cyclique que le multiplex OLM.

Chaque canal du multiplex CLM est en phase temporelle, à un temps de calcul près, avec le canal de même rang du multiplex OLM, et achemine les ordres successifs de commande du commutateur temporel TSU de même rang.

Les ordres de commande sont élaborés et transmis sous la forme de signaux optiques portés chacun par une des fb fréquences optiques d'un deuxième ensemble Fb de fréquences optiques dites fréquences de commande des commutateurs temporels TSU. Le deuxième ensemble Fb de fréquences optiques est indépendant du premier ensemble Fa de fréquences optiques et peut appartenir au même domaine spectral. Chacune des fb fréquences optiques du deuxième ensemble Fb de fréquences optiques est caractéristique d'une valeur particulière du décalage temporel que doit subir, dans le dispositif SSTSN, un échantillon incident quelconque d'un multiplex spectro-temporel émission pour être inséré dans un canal libre, ou un canal affecté, du multiplex temporel réception destinataire, c'est à dire d'une valeur de temps de traversée par l'échantillon d'un commutateur temporel TSU.

Dans la forme de réalisation des commutateurs TSU décrite dans les figures 5A, 5C ou 5D, dans laquelle le décalage temporel des échantillons est obtenu par le moyen d'une ligne à retard à sorties multiples connectées chacune à un point de connexion, chacune des fb fréquences optiques constitue à la fois l'adresse d'un point de connexion optique dans l'ensemble des points de connexion optiques équipant un même commutateur temporel TSU, et l'ordre de commande du dit point de connexion optique.

- CD est un circuit optique distributeur des ordres de commande aux commutateurs temporels TSU1 à TSUn, lesquels ordres de commande sont constitués par les signaux optiques acheminés par le multiplex CLM reçu sur l'entrée 303. Le circuit CD est raccordé optiquement par ses entrée et sortie de commande 301 et 302, et l'entrée 303, respectivement aux accès 404, 405 et 411 du circuit de commande CC; et par ses sorties 311.1 à 311.n, aux entrées de commande 502 des commutateurs temporels TSU. Le circuit CD aiguille vers chacune des sorties 311.1 à 311.n les ordres de commande acheminés par le multiplex CLM en fonction de leur rang dans la trame du multiplex, la succession des ordres de même rang des trames successives du multiplex CLM constituant le multiplex des ordres de commande du commutateur TSU de même rang.
- TSU1 à TSUn sont n commutateurs temporels optiques à propagation contrôlée, raccordés chacun :
  . par l'entrée 501 à la sortie de même rang du groupe des sorties 211.1 à 211.n de l'explorateur LS;
  . par l'entrée de commande 502 à la sortie de même rang du groupe des sorties 311.1 à 311.n du distributeur CD;
  . par chacune des sorties 51.1 à 51.k si les commutateurs sont du type décrit par la figure 5A, ou par la sortie 51 si les commutateurs sont du type décrit par l'une des figures 5C et 5D, à une entrée du diffuseur optique OD.

Chaque commutateur TSU reçoit sur son entrée 501 un multiplex temporel émission UEM ou SEM, et sur son entrée de commande 502 un multiplex de commande dont chaque ordre concerne l'échantillon optique contemporain du multiplex émission, et, en fonction des ordres de commande reçus, réalise le réarrangement temporel des échantillons optiques successifs du multiplex temporel d'entrée.

- OD est un diffuseur optique ayant :
  - . (m+(n.k)) entrées raccordées aux m entrées du deuxième groupe d'entrées de SSTSN et aux k sorties de chacun des n commutateurs temporels TSU quand ceux-ci sont du type de la figure 5A;
  - . ou (m+n) entrées quand les commutateurs TSU sont du type des figures 5C ou 5D;
  - . et s sorties raccordées chacune à l'entrée d'un filtre amplificateur optique d'un ensemble de s filtres WF, ensemble constitué par les filtres WF1 à WFq, WFn et WFc de la figure 1B.

Le diffuseur OD réalise un multiplexage spectral de tous les échantillons optiques présentés sur ses entrées et délivre sur chacune de ses sorties un multiplex spectral de tous les échantillons incidents. Un mode de réalisation d'un tel diffuseur optique est décrit dans la demande de brevet français publiée sous la référence 2 625 815 : "Diffuseur optique du type N par N".

- Les s filtres amplificateurs optiques WF ont chacun une entrée raccordée optiquement à une sortie du diffuseur OD, une sortie raccordée optiquement à une sortie Oi du dispositif de commutation spectro-temporel SSTSN et une entrée de commande raccordé à la sortie d'un circuit de configuration des filtres FCC, lequel circuit FCC est raccordé en entrée à la liaison de commande CB par laquelle il reçoit du moyen de commande CPU du central les ordres de configuration des filtres. Les filtres WF sont transparents pour les fréquences du premier groupe de fréquences optiques Fa1 et accordables chacun sur une des f2 fréquences du deuxième groupe de fréquences optiques Fa2, laquelle fréquence est alors caractéristique de la destination constituée par liaison optique réception, URL, CRL ou SRL, raccordée en sortie du filtre. Les filtres WF sont par ailleurs accordables sur une ou plusieurs fréquences du troisième groupe Fa3 des fréquences optiques.

Selon une autre forme de réalisation de l'invention, les filtres WF sont chacun accordés de manière :
  - . à être transparent pour un ou plusieurs sous groupes de fréquences optiques des groupes de fréquences optiques Fa1 et Fa2, et éventuellement du groupe de fréquences optiques Fa3, chaque sous groupe de fréquences optiques comprenant au moins une fréquence;
  - . et à bloquer la propagation de toute fréquence optique étrangère aux sous groupes d'accord.

Selon une autre forme de réalisation de l'invention, les filtres amplificateurs WF sont identiquement transparents pour les trois groupes de fréquences optiques Fa1, Fa2 et Fa3, leur fonction de filtrage se limitant à bloquer la propagation de toute fréquence optique étrangère aux trois groupes.

L'ensemble des filtres amplificateurs optiques WF constitue un dispositif de distribution spatiale aiguillant sur chacune des liaisons réception les seuls multiplex qui la concernent. Limitant spatialement la diffusion des multiplex, il assure la protection des communications.

Un mode de réalisation des différents circuits est décrit ci-après à titre d'exemple et constitue la forme la plus simple de réalisation de l'invention ; les échantillons optiques produits par les sources sont modulés entre deux niveaux d'énergie optique dont le niveau le plus faible est tel qu'il permet le fonctionnement des circuits de la figure 4C réalisant l'identification de la fréquence optique porteuse.

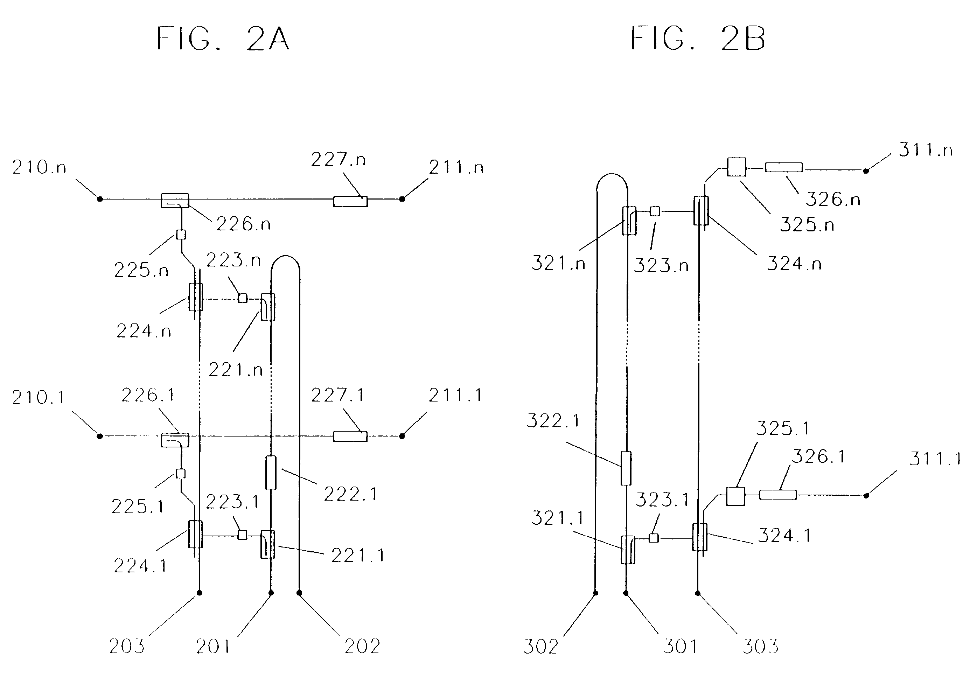

La figure 2A représente le schéma de principe d'un mode de réalisation du circuit d'exploration des lignes d'entrée LS de la figure 1A, circuit d'exploration constitué:
  - d'un dispositif de commande, dit "premier dispositif de commande", raccordé par son entrée 201 et sa sortie 202 au circuit de commande CC;
  - d'un sélecteur optique dont :
    - . les entrées 210.1 à 210.n sont raccordées chacune à une des entrées I1 à In du dispositif de commutation SSTSN;
    - . les sorties 211.1 à 211.n sont chacune raccordée à l'entrée d'un commutateur TSU;
    - . la sortie 203 est raccordée au circuit de commande CC.

Le dit premier dispositif de commande est formé d'un assemblage en série de n coupleurs optiques 221.1 à 221.n ayant chacun une entrée et une première et une seconde sorties, et de n-1 lignes à retard optiques identiques telle 222.1 ayant chacune une entrée et une sortie, l'assemblage étant tel que la première sortie de chaque coupleur, à l'exception du dernier, est raccordée à l'entrée d'une ligne à retard dont la sortie est elle-même raccordée à l'entrée du coupleur suivant, l'entrée du premier coupleur 221.1 et la première sortie du dernier coupleur 221.n étant raccordées respectivement à l'entrée 201 et à la sortie 202 dudit premier dispositif de commande la deuxième sorties de chacun des coupleurs 221.1 à 221.n étant raccordée, éventuellement par l'intermédiaire d'un amplificateur optique tel que 223.1 à une entrée de commande du sélecteur optique.

Le dit sélecteur optique est formé d'un assemblage de n commutateurs optiques 224.1 à 224.n ayant chacun une première et une deuxième entrées, une sortie et une entrée de commande, et de n coupleurs optiques 226.1 à 226.n ayant chacun une entrée, une première et une deuxième sorties, et de n lignes à retard 227.1 à 227.n identiques, ayant chacune une entrée et une sortie. Dans cet assemblage :
  - . les commutateurs optiques tel 224.1 sont mis en série par raccordement de la sortie de l'un à la première entrée du suivant, la sortie du commutateur 224.1 étant raccordée à la sortie 203 du sélecteur optique;

. la deuxième entrée de chaque commutateur optique tel 224.1 est raccordée à la deuxième sortie du coupleur de même rang, tel 226.1, éventuellement par l'intermédiaire d'un amplificateur optique, tel 225.1;

. les entrées de commande des commutateurs optiques constituent les entrées de commande du sélecteur optique et sont chacune raccordée à la deuxième sortie du coupleur optique de même rang tel 221.1 du dit premier dispositif de commande;

. l'entrée de chaque coupleur optique tel 226.1 est raccordée à l'entrée de même rang des n entrées 210.1 à 210.n de l'explorateur;

. la première sortie de chaque coupleur tel 226.1 est raccordée à l'entrée de la ligne à retard telle 227.1 dont la sortie est raccordée à la sortie de même rang telle 211.1 de l'explorateur.

La figure 2B représente le schéma de principe d'un mode de réalisation du distributeur CD des ordres de commande aux commutateurs temporels TSU. Le dit distributeur CD est constitué:

- d'un dispositif de commande, dit "deuxième dispositif de commande", dont l'entrée 301 et la sortie 302 sont raccordées au circuit de commande CC;

- d'une ligne de distribution dont l'entrée 303 est raccordée au circuit de commande CC et dont les sorties 311.1 à 311.n sont chacune raccordée à l'entrée de commande d'un commutateur TSU.

Le dit deuxième dispositif de commande est formée d'un assemblage de n coupleurs à une entrée et deux sorties, 321.1 à 321.n, et de n-1 lignes à retard identiques telle que 322.1, assemblage identique à celui, précédemment décrit, du dit premier dispositif de commande de l'explorateur LS des lignes d'entrée.

La dite ligne de distribution est formée d'un assemblage comprenant :

. n commutateurs optiques 324.1 à 324.n ayant chacun une entrée, une première et une deuxième sorties et une entrée de commande,

. n amplificateurs optiques à hystérésis 325.1 à 325.n,

. n lignes à retard 326.1 à 326.n ayant chacune une longueur différente caractéristique du rang de la ligne à retard.

Dans ledit assemblage :

..les n commutateurs optiques sont agencés en série par raccordement de la première sortie de l'un à l'entrée du suivant, l'entrée du commutateur 324.1 étant raccordée à l'entrée 303 de la ligne de distribution;

..les deuxièmes sorties de chacun des n commutateurs optiques sont chacune raccordée par l'intermédiaire d'un des n amplificateurs optiques à hystérésis à l'entrée d'une des n lignes à retard;

..les sorties des n lignes à retard sont raccordées chacune à une des sorties 311.1 à 311.n de la ligne de distribution; les entrées de commande des commutateurs optiques, tel 324.1, sont chacune reliée à la deuxième sortie du coupleur de même rang, tel 321.1, du dit deuxième dispositif de commande, éventuellement par l'intermédiaire d'un amplificateur tel 323.1.

Les amplificateurs optiques à hystérésis, tel 325.1, sont, par exemple, constitués d'un dispositif optoélectronique amplificateur fonctionnant comme un monostable.

Les figures 3A et 3B décrivent chacune un mode de réalisation de l'explorateur de ligne LS et du distributeur d'ordre CD dans lequel les dits premier et deuxième dispositifs de commande décrits dans les figures 2A et 2B, sont regroupés en un unique dispositif de commande dit "troisième dispositif de commande".

Dans le premier mode de réalisation représenté en figure 3A, le dit "troisième dispositif de commande" est constitué par assemblage en série des n coupleurs 221.1 à 221.n et des n coupleurs 321.1 à 321.n déjà décrits et de n premières lignes à retard 231.1 à 231.n et n-1 secondes lignes à retard telles la ligne à retard 331.1 selon le principe suivant:

. La première sortie du coupleur 221.i est raccordée à l'entrée de la ligne à retard 231.i dont la sortie est raccordée à l'entrée du coupleur 321.i dont la première sortie est elle-même raccordée à l'entrée de la ligne à retard 331.i, la sortie de cette dernière étant raccordée à l'entrée du coupleur 221.i+1.

. L'entrée du premier coupleur 221.1 et la première sortie du dernier coupleur 321.n étant raccordées respectivement à l'entrée 201 et à la sortie 202 du dit troisième dispositif de commande.

Le retard créé par un couple de lignes à retard tel que 231.1 et 331.1 est égal au retard créé par les lignes à retard 222.1 ou 322.1 des montages des figures 2A ou 2B.

Dans le cas de l'utilisation du montage de la figure 3A dans la forme préférée de réalisation de l'invention, les n-1 lignes à retard telles 331.1 du dit "troisième dispositif de commande" auraient une valeur de retard nulle. Dans cette utilisation, ces n-1 lignes à retard ne sont pas équipées mais remplacées par une connexion directe de la première sortie du coupleur 321.i à l'entrée du coupleur 221.i+1, le retard des lignes à retard telle 231.1 étant alors égal au retard créé par les lignes à retard 222.1 ou 322.1 des montages des figures 2A ou 2B. Cette variante de réalisation de l'explorateur de ligne LS et du distributeur d'ordre CD est représentée en figure 3B.

Les assemblages des autres moyens mis en oeuvre dans le montage pour la réalisation du sélecteur et de la ligne de distribution sont, dans les deux figures 3A et 3B identiques à ceux décrits dans les figures 2A et 2B.

Sauf indication particulière, dans la description qui suit les figures 3A et 3B, représentant le même objet fonctionnel, sont désignées par la référence figure 3.

La combinaison des figures 4A et 4C d'une part, et la combinaison des figures 4B et 4C d'autre part, décrivent la réalisation du circuit de commande CC respectivement :

. dans le cas où l'explorateur de ligne LS et le distributeur d'ordre CD sont réalisés selon les montages décrits par les figures 2A et 2B;

. et dans le cas où ils sont réalisés selon le montage décrit par la figure 3 (3A ou 3B).

Le circuit de commande CC comprend dans les deux cas un circuit d'élaboration de commande (fig. 4A ou 4B) et un générateur des ordres de commande (fig. 4C).

Les figures 4A et 4B décrivent le circuit d'élaboration de commande des dispositifs de commande, respectivement pour le premier et le deuxième cas définis ci-dessus, le raccordement du dit circuit de commande aux moyens externes étant le suivant:

. L'entrée optique 401 est raccordée optiquement à la liaison H1 de synchronisation du dispositif de commutation SSTSN, elle-même raccordée optiquement au générateur de signaux de synchronisation CKU.

. L'entrée électrique 406 est raccordée à la liaison de commande CB, elle-même raccordée au moyen de commande CPU du central.

. La sortie 402 et l'entrée 403 optiques (fig. 4A ou fig. 4B) sont raccordées respectivement à l'entrée 201 et la sortie 202 optiques du dispositif de commande (fig. 2A ou fig. 3).

. La sortie 404 et l'entrée 405 optiques (fig. 4A) sont optiquement raccordées respectivement à l'entrée 301 et à la sortie 302 du dispositif de commande (fig. 2B).

Dans la figure 4A, un générateur optique 421 d'impulsion optique de durée calibrée est raccordé par son entrée à l'entrée 401 du circuit et par sa sortie à l'entrée d'un coupleur optique 422 répartissant de façon égale l'énergie optique vers deux sorties dont la première est directement raccordée à la première entrée d'un commutateur optique 423.1 et la deuxième est raccordée à l'entrée d'une ligne à retard 424 dont la sortie est elle-même raccordée à la première entrée d'un commutateur optique 423.2, les commutateurs 423.1 et 423.2 ayant chacun deux entrées et deux sorties et étant commandables électriquement par la liaison de commande CB raccordée à l'entrée 406.

La deuxième sortie du commutateur optique 423.1 est raccordée à l'entrée d'une ligne à retard 425.1, dont la sortie est raccordée à la sortie 402 du circuit, et la deuxième entrée du commutateur optique 423.1 est raccordée, éventuellement par l'intermédiaire d'un amplificateur calibreur optique 427.1, à la sortie de la ligne à retard 426.1 dont l'entrée est elle-même raccordée à l'entrée 403 du circuit.

De même, la deuxième sortie du commutateur optique 423.2 est raccordée à l'entrée d'une ligne à retard 425.2, dont la sortie est raccordée à la sortie 404 du circuit, et la deuxième entrée du commutateur optique 423.2 est raccordée, éventuellement par l'intermédiaire d'un amplificateur calibreur optique 427.2, à la sortie de la ligne à retard 426.2 dont l'entrée est elle-même raccordée à l'entrée 405 du circuit.

Les lignes à retard 425.1, 425.2, 426.1 et 426.2 sont des lignes à retard ajustables optiques et les amplificateurs calibreurs optiques 427.1 et 427.2 sont, par exemple, constitués d'un dispositif optoélectronique fonctionnant comme un monostable à déclenchement retardé.

Le circuit décrit par la figure 4B met en oeuvre le même générateur optique 421 que ci dessus, dont la sortie est directement raccordée à la première entrée d'un commutateur optique 423, commandable électriquement par la liaison d'accès 406. La deuxième sortie du commutateur optique 423 est raccordée à l'entrée d'une ligne à retard 425, dont la sortie est raccordée à la sortie 402 du circuit, et la deuxième entrée du commutateur optique 423 est raccordée, éventuellement par l'intermédiaire d'un amplificateur calibreur optique 427, à la sortie de la ligne à retard 426 dont l'entrée est raccordée à l'entrée 403 du circuit.

Les lignes à retard optiques 425 et 426 sont des lignes à retard ajustables et l'amplificateur calibreur optique 427 est, par exemple, constitué d'un dispositif optoélectronique fonctionnant comme un monostable à déclenchement retardé.

La figure 4C décrit le générateur du multiplex CLM des ordres de commande des commutateurs temporels TSU. Le raccordement du dit générateur aux moyens externes est le suivant:

. Les accès optiques, entrée 410 et sortie 411, sont raccordés respectivement à la sortie 203 de l'explorateur de ligne (fig. 2A ou fig. 3) et à l'entrée 303 du distributeur de signaux de commande (fig. 2B ou fig. 3).

. Les accès électriques 490 sont raccordées à la liaison CB accédant au moyen de commande CPU du central.

L'entrée optique 410, qui reçoit le multiplex OLM, est raccordée, éventuellement par l'intermédiaire d'un amplificateur optique 43, à l'entrée 440 d'un démultiplexeur spectral 44, ayant f sorties, 441.1 à 441.f, raccordées chacune optiquement à un générateur élémentaire, tel 45.f, des ordres de commande optiques d'un commutateur temporel TSU.

Chacun des f générateurs élémentaires 45.1 à 45.f est raccordé :

.  optiquement par son entrée,telle 450.f,à l'une des sorties, telle 441.f, du démultiplexeur spectral 44, et par sa sortie, telle la sortie 451.f, à une entrée, telle 460.f, d'un coupleur optique 46 ayant f entrées, 460.1 à 460.f, et une sortie 461;

.  électriquement par un accès multiple, tel 453.f, à un accès tel 49f d'un groupe de f accès 49.1 à 49.f d'un superviseur 49;

.  électriquement par un accès tel 452.f à une des f sorties telle 481.f d'un circuit de synchronisation des fréquences de commande 48.

Le dit circuit 48 est lui-même raccordé optiquement par son entrée optique 480 à la deuxième sortie d'un coupleur optique 47 ayant une entrée et deux sorties, lequel coupleur 47 est par ailleurs raccordé optiquement par son entrée à la sortie 461 du coupleur optique 46 et par sa première sortie à l'entrée d'une ligne à retard ajustable optique 42 dont la sortie est raccordée à la sortie 411 du générateur du multiplex CLM des ordres de commande des commutateurs temporels à propagation.

Le dit démultiplexeur spectral 44 est d'un type mettant en oeuvre un réseau optique de diffraction, bien connu de l'homme de l'art, ou d'un type à filtres accordables dont un mode de réalisation est décrit ci-après.

La figure 4D décrit une réalisation d'un démultiplexeur spectral, tel le circuit 44 de la figure 4C. L'entrée optique 440 du démultiplexeur est connectée à un répartiteur passif 442 qui divise spatialement l'onde optique lui parvenant en f voies de sortie 443.1 à 443.f, lesquelles sont chacune raccordée optiquement à un filtre accordable tel 444.1, dont la sortie optique est raccordée, éventuellement par l'intermédiaire d'un amplificateur optique tel 446.1, à la sortie optique du démultiplexeur correspondant à la voie telle la sortie 441.1.

Les filtres accordables 444.1 à 444.f sont constitués chacun d'un dispositif amplificateur optique à semiconducteur, commandé électriquement par le circuit d'accord associé, tel 445.1 pour le filtre accordable 444.1, lequel permet de centrer la courbe de gain très étroite de l'amplificateur sur la fréquence optique de filtrage nominale.

En accordant chacun des filtres 444.1 à 444.f sur une des f fréquences optiques d'un groupe F de fréquences optiques, l'ensemble du répartiteur passif 442 et des filtres accordables 444.1 à 444.f se comporte donc comme un démultiplexeur spectral pour tout multiplex spectral ou spectro temporel, utilisant les f fréquences, présent sur l'entrée du répartiteur passif 442.

Dans le circuit de l'invention, le groupe F des fréquences optiques d'accord des filtres comprend au moins les f2 fréquences du groupe des fréquences optiques Fa2 précédemment défini. Le nombre f des sorties du répartiteur passif 442 et des filtres 444 de la figure 4D et des générateurs 45.1 à 45.f de la figure 4C est donc au moins égal à f2 et au plus égal à fmax, nombre maximal des fréquences optiques techniquement discriminables dans un spectre optique.

La figure 4E décrit dans son détail le circuit d'un générateur élémentaire d'ordre de commande des commutateurs temporels optiques à propagation TSU, tel le circuit 45.f de la figure 4C. L'entrée optique 450 est raccordée, éventuellement par l'intermédiaire d'un amplificateur optique 1, à l'entrée d'un coupleur optique 2 de type une entrée et deux sorties. Le coupleur 2 est raccordé :

.  par sa première sortie à la première entrée d'un interrupteur optique 3, réalisé par un commutateur optique, d'un type à deux entrées et deux sorties commandable électriquement, ou par un point de connexion optique commandable optiquement tel celui de la figure 5B, dont l'entrée de commande est raccordée électriquement à un accès 4534;

.  et par sa deuxième sortie à une ligne à retard optique 5 dont la sortie est raccordée à l'entrée optique d'un détecteur 7.

La sortie de l'interrupteur optique 3 est raccordée optiquement à l'entrée optique d'excitation 4a d'une source optique accordable 4 dont la sortie 4b est raccordée optiquement à la sortie 451 du générateur élémentaire et l'entrée 4c de commande d'accord est raccordée électriquement à la sortie d'un circuit 6 générateur d'un signal électrique d'accord de la source optique 4.

Le circuit 6 est raccordé par une première entrée de commande à la sortie d'un compteur 8 et par une deuxième entrée de commande à l'entrée 452 du générateur élémentaire. Le compteur 8 est raccordé électriquement par une première entrée à la sortie du détecteur 7, par ailleurs raccordée à un accès 4531, par une deuxième entrée à un accès 4532 et par une troisième entrée à un accès 4533, les dits accès et l'accès 4534 raccordé à l'entrée de commande de l'interrupteur 3 formant l'accès multiple tel 453.f de la figure 4C raccordé au superviseur 49.

La source optique 4 est accordable sur une quelconque fréquence Fbj des fb fréquences optiques du deuxième ensemble Fb de fréquences optiques défini lors de la description de la figure 1B, fb étant au plus égal au nombre maximal fmax des fréquences optiques techniquement discriminables dans un spectre optique, par exemple par le moyen de filtrage OF dans la figure 5B.

La figure 5A décrit une réalisation d'un commutateur temporel optique à propagation TSU, dans laquelle :

. 501 et 502 sont respectivement l'entrée du commutateur et l'entrée de commande du commutateur respectivement raccordées optiquement à une des sorties de l'explorateur de ligne LS et à la sortie de même rang du distributeur d'ordre CD comme déjà décrit;

. 51.1 à 51.k sont les k sorties du commutateur, chacune étant raccordée optiquement à une entrée du diffuseur optique OD, lequel est d'un type à $(m+(n.k))$ entrées et s sorties.

Le commutateur temporel est constitué :

- d'une première ligne à retard optique à prises multiples, formée de l'assemblage en série de k-1 lignes à retard optiques identiques 54.1 à 54.(k-1) et de k coupleurs optiques identiques 53.1 à 53.k, ayant chacun une entrée et une première et une deuxième sorties et aiguillant sur la deuxième sortie une fraction de l'énergie optique arrivant sur l'entrée et sur la première sortie le reste de l'énergie optique, assemblage tel que :

l'entrée 501 du commutateur est optiquement raccordé à l'entrée du coupleur 53.1;

les premières sorties des coupleurs 53.1 à 53.(k-1) sont chacune raccordée à l'entrée d'une des lignes à retard 54.1 à 54.(k-1), dont la sortie est elle-même raccordée à l'entrée du coupleur 53.i de rang suivant,la sortie de la dernière ligne à retard 54.(k-1) étant raccordée à l'entrée du dernier coupleur 53.k dont la première sortie n'est pas utilisée dans le montage;

- d'une deuxième ligne à retard à prises multiples toute optique, formée de l'assemblage en série de k coupleurs optiques identiques 56.1 à 56.k, d'un même modèle que le coupleur 53.1, et de k-1 lignes à retard 57.1 à 57.(k-1) identiques et de mêmes caractéristiques que la ligne à retard 54.1, cet assemblage étant identique à celui des coupleurs et lignes à retard 53.i et 54.i décrit ci-dessus, et dans lequel l'entrée de commande 502 est raccordée optiquement à l'entrée du coupleur 56.1;

- de k points de connexion optiques à commande optique (55.1 à 55.k), d'un modèle décrit par la figure 5B, ces points de connexion étant accordés chacun sur une des fréquences optiques du dit deuxième ensemble Fb de fréquences optiques, déjà défini dans la description de la figure 4E, dans l'ordre de succession croissant ou décroissant des fréquences; l'entrée de chaque point de connexion étant reliée optiquement à la deuxième sortie du coupleur de même rang de la première ligne à retard à prises multiples; sa sortie étant reliée à la sortie de même rang du groupe des sorties 51.1 à 51.k; et son entrée de commande étant reliée à la deuxième sortie du coupleur de même rang de la deuxième ligne à retard à prises multiples.

La figure 5B décrit un mode de réalisation d'un point de connexion tel 55.1, mis en oeuvre dans le commutateur temporel optique à propagation TSU décrit ci-dessus, constitué :

- d'un amplificateur optique OA, de type semiconducteur, dont l'entrée et la sortie optiques sont raccordées optiquement respectivement à l'entrée SI et la sortie SO optiques du point de connexion;

- d'un détecteur optoélectronique D dont la sortie est raccordée électriquement à l'entrée de commande de l'amplificateur optique OA et l'entrée optique à la sortie optique d'un filtre optique OF;

- d'un filtre optique OF, accordable sur une fréquence quelconque Fbj du groupe Fb de fréquences optiques, dont l'entrée optique est raccordée à l'entrée optique de commande SC du point de connexion.

Tout signal optique de fréquence Fbj se présentant sur l'entrée SC du point de connexion traverse le filtre OF et provoque le fonctionnement du détecteur D qui délivre sur sa sortie un signal électrique d'excitation de l'amplificateur optique OA, lequel émet dès lors sur sa sortie SO, en l'amplifiant, le signal optique présent sur son entrée SI, et ce tant que dure le signal optique de fréquence Fbj.

Les figures 5C et 5D décrivent chacune une réalisation d'un commutateur temporel TSU ayant une unique sortie 51. Outre les éléments constituant le montage de la figure 5A, le montage de la figure 5C met en oeuvre un coupleur optique 58 ayant k entrées, raccordées chacune à la sortie d'un des k points de connexion 55.1 à 55.k et une sortie raccordée à la sortie 51 du commutateur TSU; et le montage de la figure 5D met en oeuvre k coupleurs optiques 58.1 à 58.k, ayant chacun une première, une deuxième entrées et une sortie. Lesquels coupleurs sont associés en série par raccordement de la sortie du coupleur de rang i à la première entrée du coupleur de rang i+1, la première entrée du coupleur 58.1 n'étant pas raccordée et la sortie du coupleur 58.k étant raccordée à la sortie 51 du commutateur TSU. La deuxième entrée de chaque coupleur est raccordée à la sortie du point de connexion 55.1 à 55.K de même rang.

Dans le cas où le dispositif de commutation spectro-temporel SSTSN met en oeuvre des commutateurs temporels TSU tels ceux décrits par les figures 5C ou 5D, le diffuseur optique OD utilisé dans le dispositif SSTSN est d'un type ayant n+m entrées et s sorties.

La figure 6 représente schématiquement un terminal de communication comprenant :

- un circuit de réception 61, de type UR, raccordé par son entrée optique 6100 à une fibre optique 601 de raccordement au central SN, supportant la liaison URL sur laquelle sont transmis optiquement un multiplex émission de configuration CEM et le multiplex réception de communication URM;

- un circuit d'émission 62, de type UE, raccordé par sa sortie optique 6200 à une fibre optique 602 de raccordement au central supportant la liaison UEL sur laquelle est transmis le multiplex spectro-temporel émission de communication UEM;
- un moyen de référence fréquentielle optique 63 ayant une entrée raccordée à une sortie 6104 du circuit de réception 61, une première sortie raccordée à une entrée 6103 du circuit de réception 61 et à une entrée 6203 du circuit d'émission 62, et une deuxième sortie;
- un moyen de commande 64 ayant une entrée raccordée à une sortie 6105 du circuit de réception 61, une première sortie raccordée à une entrée 6102 du circuit de réception 61 et à une entrée 6202 du circuit d'émission 62, et une deuxième sortie;
- un générateur synchronisable de signaux d'horloge 65 ayant une entrée raccordée à la sortie 6105 du circuit de réception 61, une première sortie raccordée à une entrée 6101 du circuit de réception 61 et à une entrée 6201 du circuit d'émission 62, et une deuxième sortie;

Lesdites deuxièmes sorties desdits moyen de référence fréquentielle, moyen de commande et générateur synchronisable de signaux d'horloge sont éventuellement raccordées respectivement à des entrées 6103, 6102, 6101 d'autres circuits de réception identiques au circuit 61 constituant des terminaux de réception, et/ou à d'autres entrées 6203, 6202, 6201 d'autres circuits d'émission identiques au circuit 62 constituant des terminaux d'émission.

Le circuit de réception 61 comprend :
. un récepteur optique de configuration 611 accordé sur une des fréquence du premier groupe des fréquences optique Fa1, recevant ledit multiplex CEM;
. un récepteur optique de transmission 612, accordable sur une quelconque des fréquences optiques du deuxième groupe des fréquences Fa2, recevant ledit multiplex URM;
. un moyen d'accord fréquentiel 613 du récepteur optique de transmission 612;
. un moyen de synchronisation temporelle 614 des cellules d'information reçues;
. un moyen d'exploitation 615 de l'information reçue.

Le récepteur optique de configuration 611 est raccordé par son entrée optique à l'entrée optique 6100 du circuit de réception, par une première sortie, délivrant un signal de référence fréquentielle optique à la sortie 6104 et par une deuxième sortie délivrant l'information reçue du multiplex CEM à la sortie 6105 du circuit de réception.

Le récepteur optique de transmission 612 est raccordé par une entrée optique à l'entrée optique 6100 du circuit de réception, par une entrée de commande à une sortie du moyen d'accord fréquentiel 613, et par une sortie délivrant l'information reçue du multiplex URM à une entrée du moyen de synchronisation temporelle 614. Le moyen de synchronisation temporelle 614 est raccordé par une sortie à une entrée du moyen d'exploitation 615.

Les moyens d'accord fréquentiel 613, de synchronisation temporelle 614 et d'exploitation 615 sont chacun raccordés par une entrée de commande à l'entrée 6102 du circuit de réception 61, les moyens de synchronisation temporelle 614 et d'exploitation 615 étant aussi chacun raccordés par une entrée de synchronisation à l'entrée 6101 du circuit de réception et le moyen d'accord fréquentiel 613 étant lui-même raccordé par une entrée de référence fréquentielle à l'entrée 6103 du circuit de réception.

Le circuit d'émission 62 comprend :
. un émetteur optique de transmission 621, accordable sur une quelconque des fréquences optiques du deuxième groupe des fréquences Fa2;
. un moyen d'accord fréquentiel 622 de l'émetteur optique de transmission;
. un moyen de synchronisation temporelle 624 des cellules d'information à émettre;
. un moyen source 625 des cellules d'information à émettre,
. un moyen de cadrage temporel 623.

L'émetteur optique de transmission 621 est raccordé par une sortie optique à la sortie optique 6200 du circuit d'émission, par une entrée de commande à une sortie du moyen d'accord fréquentiel 622, et par une entrée de signal à une sortie du moyen de synchronisation temporelle 624 transmettant les cellules d'information à émettre optiquement dans le multiplex UEM.

Le moyen de synchronisation temporelle 624 est raccordé par une entrée à une sortie du moyen source 625 et par une entrée de synchronisation à une première sortie du moyen de cadrage temporel 623 dont une deuxième sortie est raccordée à une entrée de synchronisation du moyen d'accord fréquentiel 622.

Les moyens d'accord fréquentiel 622, de cadrage temporel 623 et source 625 sont chacun raccordés par une entrée de commande à l'entrée 6202 du circuit d'émission 62, les moyens de cadrage temporel 623 et source 625 étant aussi chacun raccordés par une entrée de synchronisation à l'entrée 6201 du circuit d'émission et le moyen d'accord fréquentiel 622 étant lui-même raccordé par une entrée de référence fréquentielle à l'entrée 6203 du circuit d'émission.

L'invention sera mieux comprise par les descriptions ci-après :
. du fonctionnement général du système de communication selon l'invention, en mode temporel asynchrone, qui est le mode fonctionnel préféré de l'invention;

. du fonctionnement élémentaire du dispositif de commutation spectro-temporel SSTSN de l'invention.

Pour simplifier la description du fonctionnement général, les dispositions et procédures couramment mises en oeuvre dans les systèmes de communication et donc bien connues, utilisées dans le cadre de l'invention, ne sont pas décrites en détail. Par ailleurs, il est supposé que le système de communication de l'invention est configuré comme suit :

. le moyen de gestion CPU (Fig.1) est raccordé au dispositif SSTSN par une seule liaison de chacun des types CEL, SEL, CRL, SRL acheminant chacune un multiplex CEM ou SEM ou CRM ou SRM;

. les terminaux raccordés au central SN sont des terminaux de communication, comprenant chacun :

..un circuit d'émission UE émettant sur sa liaison d'émission UEL un multiplex spectro-temporel émission UEM par l'intermédiaire d'un émetteur optique de transmission accordable;

..un circuit de réception UR recevant par la liaison de réception URL le multiplex de configuration CEM et un multiplex réception URM, le circuit de réception UR ayant un récepteur optique de configuration et un récepteur optique de transmission;

..et divers autres moyens fonctionnels dont des moyens d'accord fréquentiel optique desdits émetteurs et récepteurs optiques, un générateur synchronisable de signaux d'horloge, un moyen de syn- chronisation temporelle et un moyen de cadrage temporel du circuit d'émission, un moyen de synchronisation temporelle du circuit de réception, et un moyen de commande supervisant les divers autres moyens fonctionnels.

En référence aux descriptions précédentes, il est rappelé que :

- le multiplex CEM est un multiplex tramé :
  . chaque canal a une durée T,
  . la trame regroupe c canaux,
  . la période de la trame est égale à c.T,
  . le premier canal de chaque trame achemine un code d'identification de début de trame, comme cela est connu dans les techniques temporelles,
  . les autres canaux sont indifférenciés, ils sont utilisés par CPU pour transmettre les messages de configuration aux terminaux;
- les multiplex CRM, SEM, SRM, UEM et URM, sont organisés en une suite de canaux temporels indifférenciés de durée T;
- les canaux temporels indifférenciés acheminent l'information à transmettre sous la forme d'échantillons optiques de durée T comportant temporellement trois parties dont seule la deuxième partie porte l'information transmise, les première et troisième parties constituant des fenêtres de commutation évitant de devoir cadrer parfaitement les échantillon à commuter dans le système de temps local du dispositif de commutation SSTSN;

- l'information à transmettre, quand elle est numérique, est formatée en cellules qui sont chacune acheminée par un échantillon optique;
- les échantillons optiques sont encodés à l'émission à une fréquence optique caractéristique de leur destination, à l'exception des échantillons des multiplex diffusés, tel le multiplex CEM, qui sont tous encodés optiquement à une fréquence caractéristique de la fonction configuration;
- le dispositif de commutation spectro-temporel SSTSN :
  . diffuse sur chacune des liaisons réception CRL, SRL et URL le multiplex CEM;
  . commute les échantillons optiques des multiplex spectro-temporels émission SEM et UEM en fonction de leur fréquence optique porteuse qui est caractéristique de leur destination, d'abord temporellement en fonction de la disponibilité des canaux des multiplex destinataires, puis spatialement par multiplexage spectral, diffusion et sélection par filtrage spectral des échantillon ayant la même fréquence porteuse;
  . émet les échantillons commutés sur les liaisons réception CRL, SRL ou URL, dans les canaux des multiplex temporels réception CRM ou SRM ou URM;
- le multiplex CEM est diffusé sur chaque liaison réception et reçu par le récepteur optique de configuration des circuits de réception CR, SR, UR, et les multiplex CRM, SRM ou URM émis sur les liaisons CRL ou SRL ou URL sont respectivement reçu optiquement par le récepteur optique de transmission des circuits de réception CR ou SR ou UR.

A la mise en route du système :

- l'émetteur optique du circuit d'émission CE, le récepteur optique de configuration des circuits réception CR, SR et UR sont accordés sur la fréquence optique Fa1.1 et tous les filtres WF sont réglés pour être transparents à cette fréquence optique;
- le récepteur optique de transmission des circuits réception CR et SR, et les filtres WF raccordés aux liaisons CRL et SRL sont accordés respectivement sur les fréquences Fa2.1 et Fa2.2.

Dès que cette situation est établie, par les mécanismes décrits ci-après :

   . les générateurs de signaux d'horloge des terminaux se synchronisent sur le générateur de signaux de synchronisation CKU du central;

   . les terminaux disposent d'une référence fréquentielle permettant le fonctionnement des moyens d'accord fréquentiel optique de leurs émetteurs et récepteurs optiques de transmission ; les terminaux peuvent alors être initialisés par le moyen de commande CPU du central de raccordement.

Les mécanismes de synchronisation temporelle, d'accord fréquentiel, et d'initialisation des terminaux, dans le système de l'invention sont les suivants. Dans le central SN, le générateur de signaux de synchronisation CKU émet en permanence sur la liaison H2 un signal horloge de période T, délimitant les canaux temporels, et un signal horloge de période c.T, délimitant les trames, lesquels signaux sont utilisés par le moyen de commande CPU pour formater temporellement le multiplex CEM. Le multiplex CEM est émis par l'émetteur optique du circuit d'émission CE à la fréquence optique Fa1.1 sur la liaison CEL et diffusé par le diffuseur optique OD du dispositif de commutation spatio-spectro temporel SSTSN, les filtres WF étant transparents à la fréquence Fa1.1, sur toutes les liaisons réception, notamment les liaisons URL, raccordées au dispositif SSTSN.

Le récepteur de configuration de chaque circuit de réception, accordé sur la fréquence optique Fa1.1, reçoit en permanence le multiplex CEM. Le code d'identification de début de trame, acheminé par le premier canal du multiplex CEM, est exploité par générateurs de signaux d'horloge des terminaux pour se synchroniser sur l'horloge pilote du générateur de synchronisation CKU du central SN selon les procédés connus dans les systèmes temporels.

Chaque générateur de signaux d'horloge local transmet, entre autres, aux moyens de synchronisation des circuits émission et réception du terminal un signal de synchronisation de canal. La fréquence optique Fa1.1 du multiplex CEM est exploitée par les moyens d'accord en fréquence des terminaux comme fréquence de référence pour accorder les émetteurs optiques et récepteurs optiques de transmission des circuits d'émission et réception sur les fréquences du groupe Fa2 des fréquences optiques .

A la mise en service du système et à chaque mise en service d'un terminal, une procédure d'initialisation de chaque terminal à mettre en service est lancée par le moyen de commande CPU. Le moyen de commande CPU :

   . attribue une fréquence Fa2.i au circuit réception UR du terminal à initialiser;

   . positionne, dans SSTSN et par l'intermédiaire du circuit FCC de configuration des filtres, le filtre WF raccordé à la liaison URL du terminal à initialiser sur la dite fréquence Fa2.i;

   . transmet au terminal en initialisation, par le multiplex CEM, un message d'initialisation contenant:

     .. l'identité du terminal,

     .. un code désignant la fonction initialisation,

     .. les références Fa2.1 et Fa2.2 des fréquences optiques porteuses des multiplex CRM et SRM,

     .. la référence de la fréquence optique Fa2.i temporairement attribuée au circuit réception UR du terminal.

A réception du message d'initialisation, le moyen de commande du terminal en initialisation, accorde le récepteur optique de transmission du circuit de réception sur la fréquence optique Fa2.i et procède au réglage du moyen de cadrage temporel du circuit de synchronisation du circuit d'émission. Le moyen de cadrage temporel déphase l'horloge de canal reçue du générateurs de signaux d'horloge local de sorte que les canaux temporels du multiplex UEM, temporellement positionnés par l'horloge de canal déphasée, se présentent à l'entrée du dispositif de commutation SSTSN du central en phase avec l'horloge de canal du dit dispositif SSTSN, l'alignement temporel des canaux n'ayant cependant pas à être parfait du fait de l'organisation temporelle des échantillons optiques comme indiqué précédemment. Avant correction, le déphasage des canaux à l'entrée de SSTSN est au moins égal à la somme des temps de propagation des échantillons optiques du multiplex CEM sur la liaison URL et du multiplex UEM sur la liaison UEL.

La procédure de réglage du moyen de cadrage met en oeuvre la séquence d'opérations suivante:

   . inscription d'une valeur de déphasage dans le moyen de cadrage temporel du circuit de synchronisation du circuit d'émission;

   . émission d'un code de cadrage sous la forme d'un échantillon optique encodé par l'émetteur optique à la fréquence optique Fa2.i, dans un canal du multiplex UEM synchronisé sur l'horloge déphasée issue du moyen de cadrage;

   . commutation de l'échantillon par le dispositif SSTSN, et émission dans le premier canal temporellement accessible du multiplex URM de fréquence Fa2.i;

   . réception du code commuté par le circuit de réception du terminal, et contrôle du code reçu.

Cette séquence est répétée en faisant croître à chaque nouvelle séquence la valeur inscrite du déphasage, jusqu'à ce que le code reçu, dégradé par la commutation tant que la phase de l'échantillon est mauvaise à l'entrée du dispositif de commutation SSTSN, soit correct. La valeur du déphasage ayant permis la première transmission correcte est enregistrée par le moyen de commande du terminal et la procédure est poursuivie en augmentant la valeur du déphasage jusqu'à obtention d'une transmission incorrecte. Cette nouvelle valeur de déphasage est enregistrée et le moyen de cadrage temporel est alors règlé par le moyen de commande du terminal sur la valeur moyenne des deux valeurs de déphasage enregistrées. Le terminal est dès lors opérationnel.

Le réglage réalisé, le terminal émet par son multiplex UEM un message signalant que le cadrage est réalisé, porté par des échantillons optiques encodés à la fréquence Fa2.1 désignée comme étant celle du multiplex CRM, lesquels échantillons sont, après commutation dans SSTSN transmis sur le multiplex CRM et reçus par le moyen de commande CPU.

Au reçu du code "cadrage réalisé", CPU émet à destination du terminal un message de contrôle, encodé à la fréquence Fa2.i, transmis dans le multiplex SEM sur la liaison SEL puis aiguillé par SSTSN dans le multiplex URM du terminal. Le terminal répond à CPU en émettant dans son multiplex UEM un message, contenant le code de contrôle reçu, encodé optiquement à la fréquence Fa2.2, désignée comme étant celle du multiplex SRM, lequel message, commuté par SSTSN dans le multiplex SRM sur la liaison SRL, est reçu par CPU.

Au reçu de ce dernier message, et après contrôle du code reçu en retour, le moyen de commande CPU :

. positionne au repos, par l'intermédiaire du circuit FCC de configuration des filtres, le filtre WF raccordé à la liaison URL desservant le terminal, précédemment accordé sur la fréquence Fa2.i;

. commande, par un message encodé à la fréquence Fa1.1 et transmis dans le multiplex CEM, la mise en veille du terminal qui, dès réception, positionne au repos le récepteur optique de transmission de son circuit de réception, accuse réception à CPU par un message émis dans le multiplex UEM à la fréquence Fa2.1 désignée du multiplex CRM et se met en position de veille, laquelle consiste en une écoute permanente du multiplex CEM par le moyen du récepteur optique de configuration de son circuit de réception, accordé sur la fréquence Fa1.1;

. et, au reçu du message du terminal, libère la fréquence optique Fa2.i.

Un terminal en état de veille, ayant à établir une communication avec un autre terminal, émet sur son multiplex UEM, à la fréquence Fa2.1 désignée comme fréquence d'accès du multiplex CRM, un message à destination de CPU, contenant son identité et une demande d'allocation de fréquence de réception. A réception de ce message, CPU attribue une fréquence Fa2.j au terminal, accorde le filtre WF donnant accès à la liaison réception URL du terminal sur la dite fréquence attribuée et transmet au terminal par message émis par le multiplex CEM la référence de la fréquence Fa2.j allouée. Cette fréquence Fa2.j est conservée par le terminal pendant toute sa période d'activité.

En fin de période d'activité, le terminal émet sur son multiplex UEM à la fréquence Fa2.1 désignée comme fréquence d'accès du multiplex CRM, un message de fin d'activité à destination de CPU, contenant sa désignation et la référence Fa2.j de la fréquence à libérer, et se positionne en veille. A réception du message, CPU positionne au repos le filtre WF raccordé à la liaison URL du terminal et libère la fréquence Fa2.j.

Tout terminal positionné en activité ayant à établir une communication transmet à CPU, par le multiplex SRM, un message d'appel contenant son identité et celle du terminal demandé. Si le terminal demandé n'est pas en activité, CPU attribue à ce terminal une fréquence libre Fa2.k de réception, accorde le filtre WF raccordé à la liaison URL de ce terminal sur la fréquence Fa2.k, et transmet au terminal demandé par le multiplex CEM un message de mise en activité, contenant l'identité du terminal demandé, l'ordre de mise en activité et la référence de la fréquence Fa2.k attribuée. Le terminal demandé, ayant détecté le message et s'étant positionné, accuse réception à CPU par un message encodé optiquement à la fréquence Fa2.1 qui est aiguillé par SSTSN dans le multiplex CRM sur la liaison CRL de laquelle il est reçu par CPU.

Le moyen de commande CPU transmet ensuite au terminal demandeur la référence de la fréquence Fa2.k attribuée au demandé, par un message encodé à la fréquence Fa2.j du demandeur, émis dans le multiplex SEM sur la liaison SEL et aiguillé par SSTSN dans le multiplex URM sur la liaison URL du demandeur accessible par la fréquence Fa2.j.

Si le terminal demandé est en activité au moment de l'appel, CPU transmet, sitôt reçue la demande, par le multiplex SEM la référence de la fréquence Fa2.k déjà attribuée au terminal demandé. Au reçu de la référence fréquentielle Fa2.k du demandé, le terminal demandeur peut émettre vers celui-ci un message d'appel encodé à la fréquence Fa2.k contenant la désignation de sa propre fréquence de réception Fa2.j. En cas de non réponse du terminal demandé, le terminal demandeur renouvelle la procédure.

Un même terminal peut, à un moment donné, être en communication avec une multiplicité de terminaux différents. Soit par exemple un terminal j, auquel a été attribuée la fréquence d'accès Fa2.j, en communication avec un terminal v, dont la fréquence d'accès est Fa2.v, et un autre terminal w, dont la fréquence d'accès est Fa2.w. Les cellules d'information, relatives aux communications (j/v) et (j/w), sont multiplexées statistiquement à l'entrée du circuit d'émission du terminal j et émises dans le multiplex UEM.j sur la liaison UEL.j par l'émetteur optique du circuit d'émission sous la forme d'échantillons optiques respectivement encodés à la fréquence Fa2.v ou Fa2.w, caractéristique de leur destination.

Dans le dispositif de commutation SSTSN, les échantillons optiques encodés à la fréquence Fa2.v et les échantillons optiques encodés à la fréquence Fa2.w, provenant du multiplex UEM.j, sont d'abord décalés dans le temps par le même commutateur TSU.j pour être placés chacun dans le premier canal libre de leur multiplex destinataire, le multiplex URM.v pour les premiers et le multiplex URM.w pour les seconds ; le décalage des premiers est réalisé sous le contrôle du générateur élémentaire d'ordre de commande 45.v, le décalage des deuxièmes sous le contrôle du générateur élémentaire d'ordre de commande 45.w du groupe des générateurs élémentaires de commande 45.1 à 45.f de la figure 4C.

A leur sortie du commutateur TSUj, après diffusion par le diffuseur OD, ces échantillons sont sélectionnés spectralement par les filtres WF.v et WF.w et émis, les premiers dans le multiplex URM.v sur la liaison URL.v qui les transmet au terminal v, les deuxièmes dans le multiplex URM.w sur la liaison URL.w qui les transmet au terminal w. Dans ces terminaux, les échantillons sont reçus par le récepteur optique de transmission du circuit de réception du terminal accordé sur leur fréquence porteuse optique.

Les cellules d'information relatives à la communication (v/j), multiplexées statistiquement avec d'autres cellules de destination différentes, sont émises par le circuit d'émission du terminal v dans son multiplex UEM.v sur sa liaison UEL.v sous la forme d'échantillons optiques, encodés à la fréquence Fa2.j d'accès au terminal j.

De même et dans le même temps, les cellules d'information relatives à la communication (w/j), multiplexées statistiquement avec d'autres cellules de destination différentes, sont émises par le circuit d'émission du terminal w dans son multiplex UEM.w sur sa liaison UEL.w sous la forme d'échantillons optiques, encodés à la fréquence Fa2.j d'accès au terminal j.

Dans le dispositif de commutation SSTSN, les échantillons optiques encodés à la fréquence Fa2.j, provenant des multiplex UEM.v et UEM.w, sont successivement décalés dans le temps par les commutateurs TSU.v et TSU.w, sous le contrôle du même générateur élémentaire d'ordre de commande 45.j du groupe des générateurs élémentaires de commande 45.1 à 45.f de la figure 4C, pour être placés chacun, dans le multiplex destinataire URM.j, dans le premier canal réputé libre au moment de l'élaboration de l'ordre de commande de leur commutation temporelle. Puis, à leur sortie des commutateurs TSU, après diffusion par le diffuseur OD, ils sont sélectionnés spectralement par le filtre WF.j et émis dans le multiplex URM.j sur la liaison URL.j qui les transmet au terminal j. Dans ce terminal, ils sont successivement reçus par le récepteur optique de transmission du circuit de réception accordé sur la fréquence Fa2.j.

Il va de soi que les cellules émises par les différents terminaux comportent chacune un code identifiant la communication concernée pour permettre leur exploitation en sortie du circuit de réception, ce qui est bien connu dans la technique de transfert asynchrone.

La taxation des communications est réalisée par le moyen de commande CPU du central. Pour exécuter cette fonction, CPU dispose des références des terminaux communicants, obtenues lors de l'établissement des communications, et des données d'une mesure de débit d'échantillons optiques effectué par le circuit 49 de la figure 4C, au moyen de compteurs de débit activés par un signal de comptage défini dans la description ci-après du fonctionnement détaillé du dispositif de commutation SSTSN, lesquelles données comprennent :

. la référence de la source et la référence de la destination, lesquelles sont respectivement déduites par le circuit 49 de la référence temporelle du signal de comptage issu du multiplex OLM, et de la référence du générateur 45.i ayant délivré le signal de comptage;

. l'état de sortie d'un compteur de débit affecté à la surveillance de la communication définie par les deux précédentes références.

Le fonctionnement détaillé du dispositif de commutation SSTSN est décrit ci-après.

Un cadrage temporel des canaux étant réalisé à l'émission par le moyen de cadrage dont le réglage a été décrit, les canaux contemporains des différents multiplex spectro-temporel émission (UEM, SEM), se présentent sur les entrées I1 à In de SSTSN temporellement en phase, entre eux et par rapport à une horloge locale du générateur de signaux de synchronisation CKU du central SN (fig. 1A).

Ils acheminent chacun un échantillon optique porté par une fréquence Fa2.i caractéristique de sa destination. Ils sont donc en phase sur les entrées 210.1 à 210.n de l'explorateur des lignes d'entrée (figure 3), directement raccordées aux entrées telle In.

Ti et T sont respectivement la référence temporelle et la durée d'un canal des multiplex de transmission, n est le nombre des entrées de l'explorateur de ligne. Au début de chaque instant de canal Ti, le générateur d'impulsions optiques calibrées 421 du circuit de commande de la figure 4B, excité par une impulsion optique d'horloge reçue du générateur CKU par la liaison H1 sur l'entrée 401, formate une impulsion optique dite impulsion d'exploration de durée t=T/n+2. Cette impulsion est émise sur la sortie 402 décalée temporellement d'un temps t par la ligne à retard 425. Cette impulsion d'exploration, reçue sur l'entrée 201 du circuit de la figure 3B se propage dans le dit troisième dispositif de commande, décalée temporellement d'une durée t par chacune des lignes à retard 231.1 à 231.n, en commandant successivement les commutateurs optiques 224.1 à 224.n du dit sélecteur optique. Ces commutateurs transmettent successivement chacun sur la sortie 203, en le formatant à la durée t, un signal optique dit "signal adresse". Ce signal adresse est découpé par chaque commutateur tel 224.1 dans le signal présent sur son entrée, lequel signal présent est constitué de la part d'énergie prélevée par le coupleur associé, tel 226.1, sur l'échantillon optique du multiplex émission présent sur l'entrée du sélecteur optique, telle 210.1, pendant l'instant Ti, part d'énergie qui est éventuellement amplifiée et calibrée en niveau par l'amplificateur tel 225.1.

Les n signaux adresse successifs transmis sur la sortie 203 pendant l'instant Ti constituent la partie utile d'une trame du multiplex OLM décrit dans la description de la figure 1B, laquelle trame comporte n+2 canaux dont les premier et dernier servent au cadrage temporel du multiplex.

Le rang r d'un signal adresse dans les n signaux adresse d'une même trame est caractéristique de la provenance de l'échantillon optique du multiplex émission dont est issu le signal adresse.

La fréquence optique porteuse Fa2i de chacun de ces n signaux adresse est caractéristique de la destination de l'échantillon optique du multiplex émission dont est issu le signal adresse.

Les n signaux adresse de chaque trame du multiplex OLM, transitant par l'entrée 410 et l'amplificateur 43 du circuit de la figure 4C, sont successivement analysés par le démultiplexeur spectral 44 qui les aiguille en fonction de leur fréquence optique porteuse Fa2i vers un des générateurs élémentaires des ordres de commande tel 45.f, lesquels sont en charge chacun de la gestion des canaux d'un des multiplex de transmission réception CRM, SRM et URM, et de l'élaboration des ordres de commande des commutateurs TSU pour tous les échantillons optiques devant être aiguillés sur ces multiplex de transmission réception quelle qu'en soit la provenance.

Dans le générateur élémentaire des ordres de commande, tel 45.f, dont la réalisation est représentée en figure 4E, le signal optique adresse issu du démultiplexeur spectral est :

. appliqué sur l'entrée 450,
. amplifié par l'amplificateur optique 1,
. temporellement calibré par l'interrupteur optique 3 excité par un signal d'horloge de période t, délivré par le superviseur 49 de la figure 4C sur la liaison 4534, signal d'horloge dont le facteur de forme est tel qu'il permet d'inhiber les états transitoires entre les signaux optiques adresse successifs, et, une partie de son énergie ayant été prélevée par le coupleur 2 et émise dans la ligne à retard 5, se présente sur l'entrée 4a de la source optique 4.

La source optique 4, accordable sur une quelconque fréquence des fb fréquences optiques du deuxième ensemble Fb de fréquences optiques, est positionnée par le moyen du générateur 6 de signal d'accord pour émettre sur la fréquence Fbj désignée par l'information présente en sortie du compteur 8.

La fréquence Fbj désignée est caractéristique d'une part du retard temporel réel à introduire dans la propagation de l'échantillon optique à commuter, dont est issu le signal optique adresse se présentant sur l'entrée 4a, pour permettre son insertion dans le premier canal libre du multiplex de réception destinataire, et d'autre part du point de connexion à exciter dans le commutateur TSU (Fig. 5A, 5B ou 5C) traitant l'échantillon optique.

Recevant le signal optique adresse sur son entrée 4a, la source optique 4 de la figure 4E émet sur sa sortie 4b, pendant toute la durée de ce signal adresse , soit pendant une durée au plus égale à t, un signal optique de commande du commutateur TSU concerné à la fréquence optique Fbj.

A la fin de cette émission, le détecteur 7, excité par la partie d'énergie ayant transité dans la ligne à retard 5, émet une impulsion optique qui provoque une incrémentation de valeur +1 de l'information en sortie du compteur 8. La nouvelle information de sortie du compteur 8 positionne, par l'intermédiaire du générateur d'accord 6, la source 4 sur la nouvelle fréquence Fbj+1 à émettre pour que le prochain échantillon optique à commuter soit temporellement retardé de sorte à être acheminé par le nouveau premier canal disponible du multiplex destinataire.

L'impulsion de sortie du détecteur 7 est par ailleurs émise par la liaison 4531 vers le circuit 49 de la figure 4C qui l'exploite d'une part dans le cadre d'un processus de surveillance permanente des débits des différents terminaux, dite procédure "sentinelle"; et d'autre part comme signal de comptage pour l'incrémentation de compteurs de débits dont les états sont périodiquement transmis au moyen de commande CPU qui les exploite pour la taxation des communications.

En cas de saturation des liaisons de transmission réception destinataires, ou de dépassement des possibilités de connexion des commutateurs TSU, caractérisés par le débordement du compteur 8, un signal est émis par la liaison 4533 vers le circuit 49 qui bloque temporairement :

. le fonctionnement du générateur élémentaire en positionnant par la liaison 4534 l'interrupteur optique 3 en position non passant, ceci pour éviter l'écrasement d'échantillons optiques déjà en cours de commutation dans les commutateurs TSU;
. les incrémentations éventuelles de valeur +1 du compteur 8 par un ordre d'inhibition émis sur la liaison 4533.

Au début de l'instant Ti+1 correspondant à une nouvelle trame du multiplex OLM, une impulsion émise par le circuit 49 de la figure 4C sur l'entrée 4532 du compteur 8 de chacun des générateurs élémentaires des ordres de commande tel 45.f décrémente ces compteurs 8 d'une valeur -1 de sorte à les recaler à la valeur du retard réel à réaliser pour les prochaines connexions commandées dans les commutateurs TSU, sauf dans le cas où le compteur se trouve positionné à sa valeur minimale, auquel cas il reste positionné sur cette valeur.

Si à la fin d'un instant Ti, un compteur 8 affiche une valeur Fbj+1 différente de la valeur minimale FbO, au début de l'instant Ti+1, le compteur est positionné à la valeur Fbj; et s'il affiche la valeur minimale FbO, il reste positionné sur cette valeur FbO.

Lors des opérations d'initialisation du dispositif de commutation SSTSN, le circuit 49 positionne les compteurs 8 dans l'état initial (tel FbO), par la liaison 4533 dont les autres fonctions ont été décrites ci-dessus.

La nouvelle information de sortie du compteur 8 positionne, par l'intermédiaire du générateur d'accord 6, la source 4 sur la nouvelle fréquence Fbj+1 à émettre pour que le prochain échantillon optique à commuter soit temporellement retardé de sorte à être acheminé par le nouveau premier canal disponible du multiplex destinataire.

A chaque Ti, les ordres de commande successifs émis par les différents générateurs élémentaires tels 45.f de la figure 4C, sont aiguillés par le coupleur 46 et la ligne à retard ajustable 42, sur la sortie 411 où ils se succèdent et constituent la partie active d'une trame du multiplex des ordres de commande CLM, laquelle comporte, comme celle du multiplex OLM dont elle est issue n+2 canaux dont le premier et dernier servent au cadrage temporel du multiplex, et les n autres portent les éventuels ordres de commande.

La ligne à retard ajustable 42 est réglée de telle sorte que les canaux du multiplex CLM soient décalés par rapport aux canaux de même rang du multiplex OLM d'une durée t=T/n+2.

Si d est la durée des opérations précédemment décrites d'élaboration d'un ordre de commande, mesurée entre l'apparition de l'impulsion d'exploration sur la deuxième sortie du coupleur 221.1 du dit "troisième dispositif de commande" de la figure 3B et l'apparition à l'entrée de la ligne à retard 42 de l'ordre de commande, issu du signal adresse créé par le commutateur 224.1 commandé par la sortie de ce coupleur 221.1, la ligne à retard sera ajustée à la valeur de retard t-d.

Dans le cas où le montage de la figure 3A est utilisé en place du montage de la figure 3B, la ligne à retard 42 est ajustée à la valeur de retard 0, les lignes à retard telles 231.1 et 331.1 de la figure 3A réalisant respectivement un retard de valeur d et t-d.

Dans le cas où la durée d définie ci-dessus serait supérieure à la durée t, le montage décrit par les figures 3A ou 3B n'est pas mis en oeuvre. Il est remplacé par un montage associant les circuits décrits par les figures 2A et 2B, lesquels sont commandés par le circuit de commande décrit par la figure 4A, en place du circuit 4B cité ci-dessus. Dans ce cas, la ligne à retard 424 de la figure 4A a une valeur de retard égale à d et la ligne à retard 42 de la figure 4C a une valeur de retard nulle.

Le multiplex CLM est émis depuis la sortie 411 du générateur des ordres de commande de la figure 4C sur l'entrée 303 de la ligne de distribution de la figure 3B dans laquelle il se propage.

Successivement commandés par le signal apparaissant en sortie des coupleurs 321.1 à 321.n au passage de l'impulsion d'exploration se propageant dans le dit troisième dispositif de commande comme déjà décrit ci-dessus, les commutateurs 324.1 à 324.n aiguillent vers l'amplificateur à hystérésis, tel 325.1, raccordé à leur deuxième sortie, l'ordre de commande porté par le canal du multiplex CLM contemporain de leur impulsion de commande.

L'amplificateur à hystérésis, tel 325.1, recevant un ordre de commande de durée voisine de t et porté par la fréquence optique Fbj, affiche sur sa sortie un signal optique de même fréquence Fbj et d'une durée égale à T, lequel signal est ensuite retardé par la ligne à retard telle 326.1 d'une durée égale à (n+1-r)t, r étant le rang de la ligne à retard concernée dans le groupe des n lignes à retard 326.1 à 326.n.

Par ce mécanisme, les ordres de commande réalisés pendant l'instant de canal Ti des multiplex de transmission sortent en phase à Ti+1, chacun sur une des sorties 311.1 à 311.n de la ligne de distribution.

Les échantillons optiques issus des différents multiplex spectro- temporel émission (UEM, SEM), arrivant en phase à Ti sur les entrées 210.1 à 210.n de l'explorateur des lignes d'entrée et retardés d'un temps T dans leur cheminement dans les lignes à retard telle 227.1, sortent donc en phase à Ti+1, chacun sur une des sorties 211.1 à 211.n de l'explorateur des lignes d'entrée, et donc en simultanéité avec les ordres de commande devant provoquer leur commutation dans les commutateurs TSU.

Chaque échantillon optique et l'ordre de commande associé se présentent donc en phase, respectivement sur l'entrée 501 et l'entrée de commande 502 du commutateur temporel TSUr raccordé aux sorties 211.r du circuit LS et 311.r du circuit CD.

Dans ce commutateur TSUr, tel le commutateur TSU représenté en figure 5, ils se propagent en phase, respectivement dans les première et deuxième lignes à retard à prises multiples du commutateur temporel TSU, retardés d'un temps T par chacune des lignes à retard élémentaires traversées, telles 54.1 et 57.1.

Dans la première ligne à retard, chaque coupleur tel 53.1 prélève une part de l'énergie de l'échantillon optique qui le traverse et présente donc sur l'entrée du point de connexion tel 55.1 qui lui est raccordé un signal semblable, au niveau d'énergie près, à l'échantillon optique incident et notamment de même fréquence optique Fa2i.

Dans la deuxième ligne à retard, chaque coupleur tel 56.1 prélève une part de l'énergie de l'ordre de commande qui le traverse et présente donc sur l'entrée de commande du point de connexion tel 55.1 qui lui est raccordé un signal qui a la même fréquence optique Fbj et la même durée que l'ordre de commande incident.

Quand à Tj, le signal de commande traverse le coupleur 56.j, le signal prélevé provoque le fonctionnement du point de connexion 55.j accordé sur la fréquence de commande Fbj selon le mécanisme déjà décrit précédemment (fig. 5A). Le signal issu de l'échantillon optique présent à ce moment à l'entrée du point de connexion est donc amplifié et transféré sur la sortie du point de connexion où il reproduit l'échantillon optique incident et constitue l'échantillon optique commuté.

L'échantillon optique commuté se présente par la sortie 51.j (fig.5A) ou la sortie 51, par l'intermédiaire du coupleur 58 (fig.5C) ou de la série des coupleurs 58.j à 58.k (fig.5D), à l'entrée du diffuseur optique OD (fig. 1B).

A un instant Tj donné, une multiplicité d'échantillons, portés par des fréquences optiques différentes, se propageant dans un même commutateur TSU, peuvent être commutés simultanément et peuvent donc se présenter simultanément sur les ou la sortie du commutateur.

Mais à un instant Tj donné, par le fait du mécanisme d'élaboration des ordres de commande des commutateurs TSU décrit précédemment, il ne peut être commuté, dans l'ensemble des commutateurs TSU, qu'un échantillon et un seul porté par une fréquence optique Fa2i donnée. Tous les échantillons optiques parvenant à un instant Tj sur les entrées du diffuseur sont donc spectralement différents et de ce fait multiplexables spectralement sans risque de perturbation des informations transmises par leur support.

A chaque instant Tj, le diffuseur optique OD multiplexe spectralement tous les échantillons optiques commutés provenant des sorties des commutateurs TSU, portés chacun par une fréquence optique différente du groupe Fa2 des fréquences optiques, et les signaux optiques provenant des accès Ic et Ib, respectivement portés chacun par une des fréquences optiques soit du groupe Fa1 des fréquences optiques soit du groupe Fa3 selon le type d'accès, et diffuse sur chacune de ses sorties un multiplex spectral formé de tous les échantillons et signaux optiques présentés sur ses entrées, l'énergie de chaque signal ou échantillon incident étant équirépartie entre toutes les sorties.

Les s filtres amplificateurs optiques WF, tel WF1, raccordés chacun à une sortie du diffuseur, transparents pour les fréquences optiques des groupes Fa1, éventuellement accordés sur une ou plusieurs des fréquences Fa3, et accordés chacun sur une fréquence particulière du groupe des fréquences Fa2, ou une bande de fréquences du groupe de fréquences Fa2 comme déjà exposé dans la description de la figure 1B et la description du fonctionnement général, sélectionnent du multiplex spectral incident et amplifient les seuls échantillons et signaux optiques portés par les mêmes fréquences que leurs fréquences d'accord, et transmettent sur leur sortie et donc sur la sortie du dispositif SSTSN à laquelle leur sortie est optiquement raccordée, telle O1 pour le filtre WF1, un multiplex spectral contenant les seuls signaux et échantillons spectralement sélectionnés, dont la suite dans le temps forme les multiplex temporels CEM, BCM et URM ou CRM ou SRM, portés chacun par une des fréquences optiques respectivement du groupe Fa1, du groupe Fa3 et du groupe Fa2 des fréquences optiques de l'ensemble Fa des fréquences optiques de transmission.

Dans ce qui précède, on a décrit un premier mode de réalisation du dispositif de commutation spectro-temporel SSTSN comprenant n commutateurs temporels optiques à propagation contrôlée TSU, associés chacun à une ligne d'entrée, constitués chacun : d'un première et d'une deuxième lignes à retard à prises multiples dans lesquelles respectivement se propagent en synchronisme les échantillons à commuter et les ordres de commutation, et d'une multiplicité de points de connexion commandés optiquement, raccordés chacun par une entrée à une sortie de ladite première ligne à retard, et par une entrée de commande à une sortie de ladite deuxième ligne à retard, les sorties des points de connexion étant reliées aux sorties du commutateur. Ces commutateurs temporels TSU sont du type à commande par la sortie.

Ce type de commutateur à commande par la sortie, est satisfaisant quant au fonctionnement. Il présente cependant quelques inconvénients d'ordre économique :
- multiplicité des moyens de propagation,
- nécessité d'équiper un commutateur par ligne d'entrée.

Un second mode de réalisation du commutateur spectro-temporel SSTSN, qui n'a pas ces inconvénients, est décrit ci-dessous, en référence aux figures 7 à 11.

La figure 7 représente schématiquement un second mode de réalisation du dispositif de commutation spectro-temporel SSTSN de la figure 1A. Dans le second mode de réalisation du dispositif SSTSN commutateurs temporels optiques à propagation contrôlée, TSU1 à TSUn, du premier mode de réalisation sont remplacés par des moyens optiques de commutation temporelle, MTSU ; les autres moyens mis en oeuvre sont les mêmes que les divers autres moyens dudit premier mode de réalisation, soit :
. I1 à In, Ib et Ic sont des entrées optiques.

. O1 à Oq, On et Oc sont des sorties optiques.

. H1 et CB sont une liaison de synchronisation et une liaison de commande du dispositif de commutation spectro-spatio- temporel SSTSN.

. LS est un circuit optique explorateur des lignes d'entrée.

. CC est un circuit de commande du dispositif de commutation spectro-spatio-temporel.

. CD est un circuit optique distributeur des ordres de commande.

. OD est un diffuseur optique.

. WF1 à WFs sont des filtres optiques.

. FCC est un circuit de configuration des filtres WF1 à WFs.

Les moyens optiques de commutation temporelle à propagation MTSU du présent dispositif SSTSN, ont :

. n entrées 501.1 à 501.n reliées chacune optiquement à une sortie 211.1 à 211.n du circuit optique explorateur des lignes d'entrée LS;

. n entrées de commande 502.1 à 502.n reliées chacun optiquement à une sortie 311.1 à 311.n du circuit optique distributeur des ordres de commande CD;

. et des sorties optiques L51 reliées optiquement chacune à une entrée du diffuseur optique OD.

Les dits moyens optiques de commutation temporelle à propagation MTSU sont constitués de :

. n circuits d'entrée DUIC.1 à DUIC.n, ayant chacun une entrée optique reliée optiquement par une des entrées 501.1 à 501.n à une sortie du circuit optique d'exploration LS, une entrée optique de commande reliée optiquement par une des entrées de commande 502.1 à 502.n à une sortie du distributeur optique des ordres de commande CD;

. et un dispositif de sortie DUOC relié optiquement en entrée aux circuits d'entrée DUIC.1 à DUIC.n, et par chacune de ses sorties au diffuseur optique OD.

La figure 8A représente schématiquement une réalisation d'un circuit d'entrée DUIC, dans laquelle :

. 70.1 et 70.2 sont respectivement une entrée et une entrée de commande optiques reliées optiquement aux sorties de l'explorateur de ligne LS et du distributeur d'ordres CD comme déjà décrit.

. 71.1 à 71.k sont k sorties optiques, reliées optiquement à des entrées du dispositif de sortie DUOC selon les divers montages décrits dans la suite par les figures 4A à 5B.

Le circuit d'entrée DUIC est constitué :

. d'un dispositif optique de diffusion optique réalisé par l'assemblage en série de k coupleurs optiques 73.1 à 73.k ayant chacun une entrée, une première et une deuxième sorties, les coupleurs étant mis en série en reliant l'entrée de l'un à la première sortie du suivant à l'exception d'un dernier coupleur 73.k dont l'entrée est reliée à l'entrée 70.1 du circuit d'entrée;

. de k points de connexion optiques à commande optique 74.1 à 74.k, chaque point de connexion 74.i ayant une entrée raccordée à la deuxième sortie du coupleur optique de même rang 73.i et une sortie raccordée à la sortie de même rang 71.i du circuit d'entrée et une entrée optique de commande;

. et d'un démultiplexeur spectral 72 ayant une entrée optique raccordée à l'entrée de commande 70.2 du circuit d'entrée et k sorties 721.1 à 721.k raccordées chacune à l'entrée optique de commande du point de connexion 74.i de même rang.

La figure 8B représente schématiquement une variante de réalisation d'un circuit d'entrée DUIC, ayant un dispositif optique de diffusion optique, k points de connexion optiques à commande optique 74.1 à 74.k et un démultiplexeur spectral 72, dans laquelle le dispositif optique de diffusion optique est constitué d'un coupleur optique 75 ayant une entrée 750 raccordée à l'entrée 70.1 du circuit d'entrée et k sorties 751.1 à 751.k raccordées chacune à l'entrée du point de connexion 74.i de même rang, toutes les autres dispositions étant identiques aux dispositions simililaires déjà décrites par la figure 8A.

La figure 9A représente schématiquement la réalisation d'une ligne à retard optique à entrées multiples OMIDL, utilisée dans le dispositif de sortie DUOC. Cette ligne à retard optique à entrées multiples possède k entrées optiques 80.1 à 80.k et une sortie optique 81 reliée optiquement à une entrée du diffuseur optique OD; et est constituée par l'assemblage en série de k-1 lignes à retard optiques élémentaires identiques 83.1 à 83.(k-1), k-1 coupleurs optiques 82.1 à 82.(k-1) et un amplificateur optique 84 à large bande spectrale ayant une entrée et une sortie. Chaque coupleur optique 82.i a une première entrée reliée par une ligne à retard 83.i à une sortie du coupleur optique suivant, à l'exception d'un dernier coupleur 82.(k-1) dont la première entrée est reliée par l'intermédiaire d'une ligne à retard 83.(k-1) à l'entrée 80.k et à l'exception d'un premier coupleur 83.1 dont la sortie est reliée à l'entrée de l'amplificateur optique 84 dont la sortie est reliée à la sortie optique 81. Chaque coupleur 82.i a une deuxième entrée reliée à l'entrée 80.i de même rang.

La figure 9B représente schématiquement la réalisation d'un circuit optique de retard à entrées multiples OMIDC, utilisé dans le dispositif de sortie DUOC. Ce circuit optique de retard à entrées multiples possède k sorties optiques 81.1 à 81.k reliées chacune optiquement à une entrée du diffuseur OD, et k entrées optiques 86.1 à 86.k; et est constitué par k lignes à retard optiques différentes 85.1 à 85.k et k amplificateurs optiques 84.1 à 84.k à large bande. Chaque amplificateur a une entrée et une sortie. Chaque ligne à retard optique 85.i a une entrée raccordée à l'entrée de même rang 86.i du circuit OMIDC. et une sortie raccordée à l'entrée de l'amplificateur optique de même rang 84.i dont la sortie est reliée à la sortie de même rang 81.i du circuit OMIDC. Chaque ligne à retard 85.i réalise un retard dont la valeur est fonction de son rang.

Les figures 10A et 10B représentent chacune une variante d'un premier mode d'organisation des moyens optiques de commutation temporelle à propagation MTSU constitués de n circuits d'entrée DUIC.1 à DUIC.n, et d'un dispositif de sortie DUOC. Dans ce premier mode d'organisation, le dispositif de sortie DUOC est constitué de n moyens de réarrangement temporel associés chacun à un circuit d'entrée DUIC.i, qui sont :

. dans le montage de la figure 10A : n lignes à retard optiques à entrées multiples OMIDL.1 à OMIDL.n du type décrit par la figure 9A;

. et dans le montage de la figure 10B : n circuits optiques de retard à entrées multiples OMIDC.1 à OMIDC.n du type décrit par la figure 9B.

Dans ces figures, chaque ligne à retard optique à entrées multiples OMIDL.i ou chaque circuit optique de retard à entrées multiples OMIDC.i est associé à un circuit d'entrée DUIC.i, les sorties 71.1 à 71.k dudit circuit d'entrée étant optiquement raccordées à l'entrée de même rang 80.1 à 80.k de la ligne à retard OMIDL.i associée (Fig.10A) ou à l'entrée de même rang 86.1 à 86.k du circuit de retard OMIDC.i associé (Fig.10B).

Les figures 11A et 11B représentent chacune une variante d'un deuxième mode d'organisation des moyens optiques de commutation temporelle à propagation MTSU. Ils sont constitués de n circuits d'entrée DUIC.1 à DUIC.n et un dispositif de sortie DUOC. Dans ce deuxième mode d'organisation, le dispositif de sortie DUOC est constitué :

. de k combineurs optiques 9.1 à 9.k ayant chacun n entrées optiques 90.1 à 90.n et une sortie 91, chaque combineur étant relié optiquement en entrée à chacun des circuits d'entrée DUIC.1 à DUIC.n, l'entrée 90.j d'un combineur 9.i étant reliée à la sortie 71.i d'un circuit d'entrée DUIC.j;

. et d'un unique moyen de réarrangement temporel, qui est :

.. dans le montage de la figure 11A, une unique ligne à retard optique à entrées multiples OMIDL du type décrit en figure 3A, dont chacune des entrées 80.1 à 80.k est reliée à la sortie 91 du combineur optique 9.i de même rang;

.. ou, dans le montage de la figure 11B, un unique circuit optique de retard à entrées multiples OMIDC du type décrit en figure 3B, dont chacune des entrées 86.1 à 86.k est reliée à la sortie 91 du combineur optique 9.i de même rang.

Il faut rappeler les points suivants qui s'appliquent également au second mode de réalisation du dispositif SSTSN:

- Chaque liaison émission UEL et SEL achemine dans des canaux de durée T un échantillon optique constituant un message transmis, dont la fréquence optique Fa2.i est caractéristique d'une liaison destinataire.

- A un instant de canal Ti, le circuit d'exploration LS réalise un multiplex de destination OLM par échantillonnage des canaux présentés sur ses entrées I1 à In par les liaisons d'émission UEL et SEL.

- La trame du multiplex OLM a la même durée T que les canaux d'entrée et un nombre de canaux utiles au moins égal au nombre des liaisons d'émission.

- A partir des signaux du multiplex OLM et en fonction de la charge des liaisons destinataires, le circuit de commande CC élabore des ordres de commande de commutation des échantillons optiques.

- Lesdits ordres de commande sont constitués chacun par un signal optique à une fréquence optique Fbi, d'un deuxième ensemble de fréquences optiques Fb dont chaque fréquence optique est caractéristique d'un retard de propagation en temps réel que doit subir, dans les moyens optiques de commutation temporelle, l'échantillon à commuter, et est aussi caractéristique de l'adresse d'un point de connexion à commande optique dans les moyens de commutation.

- Lesdits ordres de commande sont multiplexés en un multiplex d'ordres de commande CLM dont la trame est identique à la trame du multiplex OLM et dont chaque canal est associé à une liaison d'émission et achemine à Ti un ordre de commutation relatif à l'échantillon transmis dans le canal de la liaison d'émission pendant le temps Ti.

- Au temps Ti+1, le circuit d'exploration LS émet sur ses sorties 211.1 à 211.n les échantillons présentés à Ti sur ses entrées par les liaisons d'émission, et le distributeur optique CD émet sur chacune de ses sorties 311.1 à 311.n les ordres de commande de commutation de ces échantillons, les dits échantillons et ordres de commande ayant la même durée T.

Dans le second mode de réalisation du dispositif SSTSN, représenté en figure 7, le fonctionnement est le suivant :

. Un circuit d'entrée DUIC.i reçoit sur son entrée 501.i un échantillon à commuter et sur son entrée 502.i l'ordre de commande de commutation dudit échantillon ; ci-après, échantillon à commuter et ordre de commande sont supposés portés respectivement par la fréquence optique Fa2.i et par la fréquence optique Fbj.

. L'échantillon se présente (Fig.8A) à l'entrée 70.1 du dispositif de diffusion optique qui en distribue un signal représentatif à l'entrée de chacun des points de connexion à commande optique 74.1 à 74.k.

. L'ordre de commande se présente à l'entrée 70.2 du démultiplexeur spectral qui l'aiguille en fonction de sa fréquence optique Fbj sur la sortie 721.j qui le transmet sur l'entrée de commande du point de connexion 74.j, pendant la durée T de l'ordre de commande. Le point de connexion 74.j est actif de sorte que le signal échantillon présent sur son entrée se propage de son entrée à la sortie 71.j.

. De cette sortie, par le combineur 9.j (Fig.11A), l'échantillon parvient sur l'entrée 80.j de la ligne à retard optique à entrées multiples OMIDL, dans laquelle (Fig.9) il est transféré par le coupleur 82.j dans la ligne à retard optique. Il se propage, retardé d'une durée T par chaque ligne à retard optique élémentaire traversée.

. A l'instant Ti+j, l'échantillon amplifié par l'amplificateur optique 84 se présente sur la sortie 81 puis se propage dans le diffuseur OD qui le diffuse sur toutes ses sorties où il est sélectionné et amplifié par le filtre WFi accordé sur sa fréquence optique porteuse Fa2.i, puis transmis sur la liaison destinataire.

Le système de communication selon l'invention, du fait qu'il transmet et qu'il commute les signaux de communication uniquement par des moyens optiques, évite la mise en oeuvre de dispositifs de conversion électro-optiques et opto-électriques entre les moyens de transmission optique et les moyens de commutation existant dans les systèmes temporels asynchrones actuellement connus. Il permet ainsi une économie de moyens, une simplification de la structure des réseaux de communication et en conséquence une simplification du fonctionnement et une amélioration de la fiabilité globale.

Du fait qu'il fonctionne en mode temporel asynchrone ATM, il permet de réduire les moyens d'émission et de réception des terminaux multiservices à un unique émetteur et un unique récepteur de communication, sans obérer la capacité du terminal à écouler une multiplicité de communications contemporaines, différentes quant à leurs destinations, ce qui n'est pas le cas des systèmes fréquentiels optiques actuellement connus.

Du fait qu'il gère dynamiquement les fréquences en les attribuant aux seuls terminaux en activité, il permet de raccorder un nombre de terminaux supérieur au nombre des fréquences discriminable dans le spectre, le nombre des terminaux raccordables étant une fonction des caractéristiques du trafic et non une fonction du seul nombre des fréquences discriminables.

Du fait qu'il transporte les informations sous la forme d'échantillons optiques codés en fréquence optique selon la destination, lesquelles fréquences optiques des échantillons suffisent pour élaborer, par des moyens optiques, les ordres de commutation sans autre opération sur les échantillons optiques qu'un prélèvement d'énergie optique, il permet une économie de moyens dans les dispositifs de commande, dans lesquels il n'est pas nécessaire de mettre en oeuvre les moyens de démodulation, d'analyse et de modulation des informations transmises existant dans les systèmes ATM actuellement connus; il simplifie, en regard de ce qui est connu de ces systèmes, le fonctionnent des moyens de commutation; et il améliore la sécurité de transmission des signaux, puisqu'aucune opération n'est faite sur l'information transmise.

Du fait qu'il transporte les information sous la forme d'échantillons optiques qui, dans la traversée des moyens de transmission et de commutation, ne subissent aucun autre traitement que des amplifications optiques, propagation dans des lignes à retard, multiplexage spectral et filtrage spectral, lesquels traitements sont connus comme n'altérant pas les signaux,

- il est donc insensible à la nature de l'information transmise, laquelle peut être indifféremment une information numérique ou un signal analogique;

- il peut donc traiter simultanément et sans discrimination particulière les deux types d'information;

- et il élargit donc le champ des applications potentielles des systèmes multiservices.

Du fait qu'il utilise uniquement la technologie optique pour la réalisation des moyens de commutation, et à cause de la simplicité des moyens et mécanismes mis en oeuvre, tout le dispositif de commutation, y compris sa commande fonctionnant sous le seul contrôle d'un signal d'horloge et de signaux optiques directement issus des échantillons à commuter, il offre une solution originale et économique aux problèmes complexes de la commutation ATM.

Le système selon l'invention marque ainsi un réel progrès en regard de l'art antérieur pour l'équipement des réseaux de communication multiservices à large bande, par les facilités qu'il offre pour l'organisation des dits réseaux, par l'économie de moyens qu'il permet, et par la sécurité qu'il assure dans la transmission des signaux d'information.

Bien entendu, l'invention n'est nullement limitée aux modes de réalisation décrits et représentés qui n'ont été donnés qu'à titre d'exemples ; en particulier on pourra, sans sortir du cadre de l'invention, modifier certaines dispositions ou remplacer certains moyens par des moyens équivalents.

## Revendications

1. Système de communication optique temporel asynchrone ayant : un central de communication (SN), q circuits de réception de terminal (UR1 à URq) reliés par au plus q liaisons optiques de réception de terminal (URL1 à URLq) au central de communication, p circuits d'émission de terminal (UE1 à UEp) reliés chacun par une liaison optique d'émission de terminal (UEL1 à UELp) au central, lesdits circuits d'émission de terminal et de réception de terminal étant répartis dans : x terminaux de communication distants ayant chacun un circuit d'émission et un circuit de réception, y terminaux d'émission ayant chacun un circuit d'émission, z terminaux de réception ayant chacun un circuit de réception;

le central de communication (SN) comprenant:

. un dispositif optique de commutation spectro-temporel (SSTSN) relié optiquement aux liaisons optiques d'émission et aux liaisons optiques de réception ;

. un moyen de commande (CPU) ;

. et un générateur de signaux de synchronisation (CKU)

caractérisé en ce que chaque circuit de réception de terminal comporte :

. au moins un récepteur optique de configuration accordé sur une fréquence optique (Fa1i) d'un premier groupe de fréquences optiques (Fa1) d'un premier ensemble de fréquences optiques (Fa);

. un récepteur optique de transmission accordable sur une fréquence optique quelconque d'un deuxième groupe de fréquences optiques (Fa2) dudit premier ensemble de fréquences optiques (Fa);

. un moyen d'accord fréquentiel optique dudit récepteur optique de transmission;

. et un moyen de synchronisation temporelle de l'information reçue;

en ce que chaque circuit d'émission de terminal comporte :

. un émetteur optique de transmission, accordable sur une fréquence optique quelconque dudit deuxième groupe de fréquences optiques (Fa2);

. un moyen d'accord fréquentiel optique dudit émetteur optique;

. et des moyens de synchronisation temporelle et de cadrage temporel de l'information à transmettre;

en ce que le moyen de commande (CPU) comprend :

. au moins un circuit d'émission de configuration (CE) ayant un émetteur optique de configuration accordé sur une fréquence optique (Fa1i) dudit premier groupe de fréquences optiques (Fa1);

. au moins un circuit d'émission de signalisation (SE) ayant un émetteur optique de transmission accordable sur une fréquence optique quelconque dudit deuxième groupe de fréquences optiques (Fa2);

. au moins un circuit de réception de configuration (CR) et au moins un circuit de réception de signalisation (SR), ayant chacun au moins un récepteur optique de configuration accordé sur une fréquence optique (Fa1i) dudit premier groupe de fréquences optiques (Fa1), et un récepteur optique de transmission, accordable sur une fréquence optique quelconque dudit deuxième groupe de fréquences optiques (Fa2);

en ce que ledit moyen de commande (CPU) est relié au dispositif de commutation (SSTSN) par :

. une liaison de commande (CB):

. au moins une liaison optique d'émission de configuration (CEL), chacune étant reliée optiquement à l'émetteur optique de configuration d'un circuit d'émission de configuration (CE);

. au moins une liaison optique de réception de configuration (CRL), chacune étant reliée optiquement aux récepteurs optiques de configuration et de transmission d'un circuit de réception de configuration (CR);

. et au moins une liaison optique d'émission de signalisation (SEL), chacune étant reliée optiquement à l'émetteur optique d'un circuit de signalisation (SE);

. au moins une liaison optique de réception de signalisation (SRL), chacune étant reliée optiquement aux récepteurs optiques de configuration et de transmission d'un circuit de réception de signalisation (SR);

et en ce que le générateur de signaux de synchronisation (CKU) est relié par une première liaison de synchronisation (H1) au dispositif de commutation (SSTSN) et par une deuxième liaison de synchronisation (H2) au moyen de commande (CPU).

2. Système de communication optique selon la revendication 1, caractérisé que chaque circuit d'émission de configuration (CE) émet sur sa liaison d'émission de configuration (CEL) un multiplex temporel émission de configuration (CEM) diffusé par le dispositif de commutation (SSTSN) sur chacune des liaisons optiques de réception de configuration (CRL), de réception de signalisation (SRL), et de réception de terminal (URL);

en ce que chaque multiplex temporel émission de configuration est porté par une fréquence optique du premier groupe de fréquences optiques (Fa1) du premier ensemble de fréquences optiques (Fa);

en ce qu'une fréquence optique du deuxième groupe de fréquences optiques (Fa2) dudit premier ensemble de fréquences optiques (Fa) est attribuée de manière dynamique par ledit moyen de commande (CPU) à chaque récepteur de transmission, en activité, des circuits de réception de configuration (CR), de réception de signalisation (SR), et de réception de terminal (UR); chaque circuit d'émission de terminal (UE) et d'émission de signalisation (SE) communiquant avec un récepteur de transmission quelconque, en activité, en émettant un message sous la forme d'une suite d'échantillons optiques encodés à la fréquence optique attribuée au dit récepteur de transmission en activité; lesdits échantillons optiques étant émis par chaque circuit d'émission de terminal (UE) dans un multiplex spectro-temporel émission de communication (UEM) sur sa liaison d'émission de terminal (UEL), et par chaque circuit d'émission de signalisation (SE) dans un multiplex spectro-temporel émission de signalisation (SEM), sur sa liaison d'émission de signalisation (SEL);

en ce que chaque multiplex spectro-temporel émission (UEM, SEM) comporte une succession non tramée de canaux temporels de même durée (T) acheminant chacun un échantillon optique de fréquence optique caractéristique du récepteur de transmission destinataire;

en ce que chaque échantillon optique est optiquement commuté temporellement par le dispositif de commutation (SSTSN) et en fonction de sa fréquence optique porteuse; puis est optiquement aiguillé sur une desdites liaisons optiques de réception, dans laquelle il est acheminé par un premier canal libre d'un multiplex temporel de réception de la dite liaison de réception;

et en ce que chaque multiplex temporels de réception (CRM, SRM, URM) comporte une succession de canaux temporels indifférenciés, de même durée (T), acheminant chacun un échantillon optique, les échantillons optiques d'un même multiplex temporel de réception ayant tous la même fréquence optique.

3. Système de communication optique selon la revendication 1, caractérisé en ce qu'il comprend également au moins un serveur de diffusion (BS), chaque serveur étant relié optiquement au dispositif de commutation (SSTSN) par une liaison optique de diffusion (BL) raccordée dans le serveur à au moins un émetteur optique de diffusion;

en ce que les circuits de réception de terminal (UR) ont au moins un récepteur optique de diffusion, lesdits récepteurs optiques de diffusion d'un circuit de réception de terminal étant reliés optiquement à la liaison de réception de terminal (URL) raccordant ledit terminal au dispositif de commutation (SSTSN);

en ce que lesdits émetteurs optiques de diffusion et récepteurs optiques de diffusion sont accordables sur une fréquence optique quelconque d'un troisième groupe de fréquences optiques (Fa3) dudit premier ensemble des fréquences optiques (Fa);

et en ce qu'au moins une fréquence optique dudit troisième groupe de fréquences optiques (Fa3) est attribuée à chaque émetteur de diffusion, chaque émetteur de diffusion émettant, sur ladite fréquence attribuée, un message diffusé par le dispositif de commutation (SSTSN) sur chacune des liaisons de réception de terminal (URL), chaque récepteur de diffusion recevant ledit message en s'accordant sur ladite fréquence attribuée à l'émetteur de diffusion l'ayant émis.

4. Système de communication optique selon la revendication 1, caractérisé par le fait que le dispositif de commutation spectro-temporel (SSTSN) comprend :

. un circuit optique d'exploration (LS) relié optiquement aux liaisons optiques d'émission de terminal (UEL1 à UELp), et aux liaisons optiques d'émission de signalisation (SEL), lesdites liaisons optiques d'émission (UEL, SEL) acheminant chacune un multiplex spectro-temporel d'émission constitué par des canaux acheminant chacun un échantillon optique d'information;

. un distributeur optique (CD) d'ordres de commande;

. un circuit de commande (CC) relié d'une part, optiquement :

.. au circuit optique d'exploration (LS) par une première liaison optique acheminant un multiplex spectro-temporel (OLM) de destination comportant autant de canaux qu'il y a de liaisons d'émission;

.. au distributeur optique (CD) par une deuxième liaison optique acheminant un multiplex spectro-temporel (CLM) d'ordres de commande ayant un nombre de canaux égal à celui dudit multiplex de destination, chaque canal du multiplex d'ordres de commande étant en phase temporelle avec un canal de même rang dudit multiplex de destination et acheminant un ordre de commande;

..et au générateur de synchronisation (CKU) par la première liaison de synchronisation (H1);

et relié, d'autre part, au moyen de commande (CPU) par une liaison de commande (CB);

. n commutateurs temporels optiques (TSU1 à TSUn), à propagation contrôlée, chacun étant relié optiquement à une sortie du circuit optique d'exploration (LS) et à une sortie du distributeur optique (CD) des ordres de commande;

. un diffuseur optique (OD) relié optiquement en sortie des commutateurs temporels (TSU) et aux liaisons optiques émission de configuration (CEL), et ayant des sorties reliées optiquement chacune en entrée d'un filtre optique (WF1 à WFs);

. s filtres optiques (WF1 à WFs) relié chacun optiquement en sortie à une des liaisons optiques réception de terminal (URL1 à URLq), réception de signalisation (SRL), réception de configuration (CRL);

. un circuit de configuration des filtres (FCC) raccordé en entrée à la liaison de commande (CB) et en sortie à une entrée de commande de chaque filtre optique (WF1 à WFs).

5. Système de communication optique selon la revendication 4, caractérisé en ce que le multiplex de destination (OLM) est constitué par échantillonnage des canaux se présentant à un même instant en entrée du circuit d'exploration (LS) sur chacune des liaisons d'émission (UEL et SEL);

en ce que chaque canal du multiplex d'ordres de commande (CLM) ayant même rang qu'une liaison d'émission achemine un ordre de commande constitué par un signal optique à une fréquence optique (Fbi) d'un deuxième ensemble de fréquences optiques (Fb) dont chaque fréquence optique est caractéristique d'un retard de propagation en temps réel que doit subir, dans un commutateur temporel (TSU), le message acheminé par le canal de ladite liaison d'émission; ladite fréquence optique (Fbi) étant déterminée par le circuit de commande (CC);

et en ce que le distributeur optique (CD) délivre à chaque commutateur temporel (TSU), correspondant au rang d'un canal du multiplex d'ordres de commande (CLM), l'ordre de commande acheminé par ledit canal du multiplex d'ordres de commande.

6. Système de communication optique selon la revendication 4, caractérisé en ce que des sorties du diffuseur optique (OD) sont reliées optiquement à des entrées des serveurs de diffusion (BS) par des liaisons optiques de diffusion (BL).

7. Système de communication optique selon la revendication 4, caractérisé en ce que le circuit optique d'exploration (LS) comprend un sélecteur optique et un premier dispositif de commande;

et en ce que le sélecteur optique est constitué par :

. n commutateurs optiques (224.1 à 224.n) en série, chacun ayant une première et une deuxième entrées, une sortie et une entrée de commande;

. n coupleurs optiques (226.1 à 226.n) ayant chacun une entrée, une première et une deuxième sorties;

. et n lignes à retard optiques (227.1 à 227.n) identiques;

en ce que les commutateurs optiques sont mis en série par raccordement de la sortie de l'un à la première entrée du suivant, la sortie d'un dernier commutateur optique étant reliée optiquement au circuit de commande (CC) par ladite première liaison optique;

en ce que la deuxième entrée de chaque commutateur optique (224.i) est raccordée à la deuxième sortie du coupleur optique de même rang (226.i);

en ce que chaque coupleur optique (226.i) a : son entrée reliée à une entrée du circuit optique d'exploration (LS), et sa première sortie reliée en entrée d'une ligne à retard optique (227.i); la sortie de ladite ligne à retard étant reliée optiquement à un commutateur temporel (TSU.i) à propagation contrôlée;

en ce que le premier dispositif de commande est constitué par n coupleurs optiques de commande (221.1 à 221.n) ayant chacun : une entrée, une première, et une deuxième sorties, et n-1 lignes à retard optiques de commande (222.1 à 222.n-1);

en ce que la première sortie de chaque coupleur optique de commande (221.i), à l'exception du dernier, est reliée en entrée d'une ligne à retard optique de commande (222.i); la sortie de ladite ligne à retard étant reliée à l'entrée du coupleur optique de commande suivant;

en ce que l'entrée d'un premier coupleur optique de commande et la première sortie d'un dernier coupleur optique de commande sont reliées optiquement au circuit de commande (CC);

et en ce que la deuxième sortie de chaque coupleur optique de commande (221.i) est reliée optiquement à l'entrée de commande d'un commutateur optique de même rang (224.i) du sélecteur optique.

8. Système de communication optique selon la revendication 7, caractérisé par le fait que la deuxième entrée de chaque commutateur optique (224.i) est raccordée par un amplificateur optique (225.i) à la deuxième sortie du coupleur optique de même rang (226.i); et que la deuxième sortie de chaque coupleur optique de commande (221.i) est reliée optiquement par un amplificateur optique (223.i) à l'entrée de commande d'un commutateur optique de même rang (224.i) du sélecteur optique.

9. Système de communication optique selon la revendication 4, caractérisé en ce que le distributeur optique (CD) d'ordres de commande comprend un deuxième dispositif de commande et une ligne de distribution;

en ce que le deuxième dispositif de commande est constitué par n coupleurs optiques de commande (321.1 à 321.n) et n-1 lignes à retard optiques de commande (322.1 à 322.n-1), chaque coupleur optique de commande ayant une entrée, une première et une deuxième sorties;

en ce que la première sortie de chaque coupleur optique de commande (321.i), à l'exception du dernier, est reliée en entrée d'une ligne à retard optique de commande (322.i) elle même reliée en sortie à l'entrée du coupleur optique suivant;

en ce que l'entrée d'un premier coupleur optique de commande et la première sortie d'un dernier coupleur optique de commande sont reliées au circuit de commande (CC);

en ce que la ligne de distribution est constituée par n commutateurs optiques (324.1 à 324.n) ayant chacun une entrée, une première et une deuxième sorties et une entrée de commande, n amplificateurs optiques à hystérésis (325.1 à 325.n) et n lignes à retard optiques (326.1 à 326.n) ayant chacune une longueur différente caractéristique du rang i de la ligne à retard;

en ce que les commutateurs optiques sont mis en série par raccordement de la première sortie de l'un à l'entrée du suivant, l'entrée d'un premier commutateur optique étant reliée optiquement au circuit de commande (CC) par ladite deuxième liaison optique;

en ce que la deuxième sortie de chaque commutateur optique (324.i) est reliée par l'intermédiaire d'un amplificateur optique à hystérésis (325.i) en entrée d'une ligne à retard optique (326.i) elle même reliée optiquement en sortie à un commutateur temporel à propagation contrôlée (TSU.i);

et en ce que la deuxième sortie de chaque coupleur optique de commande (321.i) du deuxième dispositif de commande est reliée à l'entrée de commande du commutateur optique de même rang (324.i) de la ligne de distribution.

10. Système de communication optique selon la revendication 9, caractérisé par le fait que la deuxième sortie de chaque coupleur optique de commande (321.i) du deuxième dispositif de commande est reliée par un amplificateur optique (323.i) à l'entrée de commande du commutateur optique de même rang (324.i) de la ligne de distribution.

11. Système de communication optique selon la revendication 4, caractérisé en ce que le circuit optique d'exploration (LS) et le distributeur optique (CD) d'ordres de commande ont un troisième dispositif de commande commun;

en ce que le circuit optique d'exploration est constitué par un sélecteur optique ayant :

. n commutateurs optiques de sélection (224.1 à 224.n) en série, chacun ayant une première et une deuxième entrées, une sortie et une entrée de commande;

. n coupleurs optiques de sélection (226.1 à 226.n) ayant chacun une entrée, une première et une deuxième sorties,

. et n lignes à retard optiques de sélection identiques (227.1 à 227.n);

en ce que les commutateurs optiques de sélection sont mis en série par raccordement de la sortie de l'un à la première entrée du suivant, la sortie d'un dernier commutateur optique de sélection étant reliée optiquement au circuit de commande (CC) par ladite première liaison optique;

en ce que la deuxième entrée de chaque commutateur optique de sélection (224.i) est raccordée à la deuxième sortie du coupleur optique de sélection de même rang (226.i);

en ce que chaque coupleur optique de sélection (226.i) a son entrée reliée à une entrée du circuit optique d'exploration (LS), et sa première sortie reliée en entrée d'une ligne à retard optique de sélection (227.i); la sortie de ladite ligne à retard étant reliée à un commutateur optique temporel (TSU.i) à propagation contrôlée;

en ce que la ligne de distribution est constituée par :

. n commutateurs optiques de distribution (324.1 à 324.n) ayant chacun une entrée, une première et une deuxième sorties et une entrée de commande;

. n amplificateurs optiques à hystérésis (325.1 à 325.n) et n lignes à retard optiques de distribution (326.1 à 326.n) ayant chacune une longueur différente caractéristique du rang i de la ligne à retard de distribution;

en ce que les commutateurs optiques de distribution sont mis en série par raccordement de la première sortie de l'un à l'entrée du suivant, l'entrée d'un premier commutateur optique de distribution étant reliée optiquement au circuit de commande (CC) par ladite deuxième liaison optique;

en ce que la deuxième sortie de chaque commutateur optique de distribution (324.i) est reliée par l'intermédiaire d'un amplificateur optique à hystérésis (325.i) en entrée d'une ligne à retard optique de distribution (326.i), la sortie de ladite ligne à retard étant reliée optiquement à un commutateur temporel à propagation contrôlée (TSU.i);

en ce que le troisième dispositif de commande est constitué par :

. n coupleurs optiques de commande de sélection (221.1 à 221.n),

. n coupleurs optiques de commande de distribution (321.1 à 321.n),

. n premières lignes à retard optiques (231.1 à 231.n);

. et n-1 deuxièmes lignes à retard optiques (331.1 à 331.n-1); chaque coupleur optique de commande de sélection et chaque coupleur optique de commande de distribution ayant une entrée, une première et une deuxième sorties;

en ce que la première sortie d'un coupleur optique de commande de sélection (221.i) est reliée à une des premières lignes à retard optiques (231.i) elle-même reliée à l'entrée d'un coupleur optique de commande de distribution (321.i); une première sortie dudit coupleur étant reliée par une des deuxièmes lignes à retard optiques (331.i) à l'entrée d'un coupleur optique de commande de sélection suivant, à l'exception du dernier coupleur optique de commande de distribution dont la première sortie est reliée optiquement au circuit de commande (CC), l'entrée d'un premier coupleur optique de commande de sélection étant reliée optiquement au circuit de commande;

en ce que la deuxième sortie de chaque coupleur optique de commande de sélection (221.i) est reliée à l'entrée de commande d'un commutateur optique de sélection de même rang (224.i);

et en ce que la deuxième sortie de chaque coupleur optique de commande de distribution (321.i) est reliée à l'entrée de commande d'un commutateur optique de distribution (324.i) de même rang.

12. Système de communication optique selon la revendication 4, caractérisé en ce que le circuit optique d'exploration (LS) et le distributeur optique (CD) d'ordres de commande ont un quatrième dispositif de commande commun;

en ce que le circuit optique d'exploration est constitué par un sélecteur optique ayant :

. n commutateurs optiques de sélection (224.1 à 224.n) en série, chacun ayant une première et une deuxième entrées, une sortie et une entrée de commande;

. n coupleurs optiques de sélection (226.1 à 226.n) ayant chacun une entrée, une première et une deuxième sorties;

. et n lignes à retard optiques de sélection (227.1 à 227.n) identiques;

en ce que les commutateurs optiques de sélection sont mis en série par raccordement de la sortie de l'un à la première entrée du suivant, la sortie d'un dernier commutateur optique de sélection étant reliée optiquement au circuit de commande (CC) par ladite première liaison optique;

en ce que la deuxième entrée de chaque commutateur optique de sélection (224.i) est raccordée à la deuxième sortie du coupleur optique de sélection de même rang (226.i);

en ce que chaque coupleur optique de sélection (226.i) a son entrée reliée optiquement à une entrée du circuit optique d'exploration (LS), et sa première sortie reliée en entrée d'une ligne à retard optique de sélection (227.i); une sortie de ladite ligne à retard étant reliée optiquement à un commutateur optique temporel (TSU.i) à propagation contrôlée;

en ce que la ligne de distribution est constituée par :

. n commutateurs optiques de distribution (324.1 à 324.n) ayant aucun une entrée, une première et une deuxième sorties et une entrée de commande;

. n amplificateurs optiques à hystérésis (325.1 à 325.n) et n lignes à retard optiques de distribution (326.1 à 326.n) ayant chacune une longueur différente caractéristique du rang i de la ligne à retard optique de distribution;

en ce que les commutateurs optiques de distribution sont mis en série par raccordement de la première sortie de l'un à l'entrée du suivant, l'entrée d'un premier commutateur optique de distribution étant reliée optiquement au circuit de commande (CC) par ladite deuxième liaison optique;

en ce que la deuxième sortie de chaque commutateur optique de distribution (324.i) est reliée par l'intermédiaire d'un amplificateur optique à hystérésis (325.i) en entrée d'une ligne à retard optique de distribution (326.i); la sortie de ladite ligne à retard étant reliée optiquement à un commutateur temporel à propagation contrôlée (TSU.i);

en ce que le quatrième dispositif de commande est constitué par :

. n coupleurs optiques de commande de sélection (221.1 à 221.n);

. n coupleurs optiques de commande de distribution (321.1 à 321.n);

. n lignes à retard optiques de commande (231.1 à 231.n), chaque coupleur optique de commande de sélection et chaque coupleur optique de commande de distribution ayant une entrée, une première et une deuxième sorties;

en ce que la première sortie d'un coupleur optique de commande de sélection (221.i) est reliée par une ligne à retard optique de commande (231.i) à l'entrée d'un coupleur optique de commande de distribution (321.i) dont la première sortie est reliée à l'entrée d'un coupleur optique de commande de sélection suivant, à l'exception du dernier coupleur optique de commande de distribution dont la première sortie est reliée optiquement au circuit de commande (CC), l'entrée d'un premier coupleur optique de commande de sélection étant reliée optiquement au circuit de commande;

en ce que la deuxième sortie de chaque coupleur optique de commande de sélection (221.i) est reliée à l'entrée de commande d'un commutateur optique de sélection de même rang (224.i);

et en ce que la deuxième sortie de chaque coupleur optique de commande de distribution (321.i) est reliée à l'entrée de commande d'un commutateur optique de distribution (324.i) de même rang.

13. Système de communication optique selon l'une des revendications 11 et 12, caractérisé par le fait que la deuxième entrée de chaque commutateur optique de sélection (224.i) est raccordée à la deuxième sortie du coupleur optique de sélection de même rang (226.i) par un amplificateur optique (225.i); que la deuxième sortie de chaque coupleur optique de commande de sélection (221.i) est reliée par un amplificateur optique (223.i) à l'entrée de commande d'un commutateur optique de sélection de même rang (224.i); et que la deuxième sortie de chaque coupleur optique de commande de distribution (321.i) est reliée par un amplificateur optique (323.i) à l'entrée de commande d'un commutateur optique de distribution (324.i) de même rang.

14. Système de communication optique selon la revendication 5, caractérisé par le fait que le circuit de commande (CC) comprend :

. un circuit d'élaboration de commande relié d'une part optiquement au circuit d'exploration (LS), au distributeur (CD) et au générateur de synchronisation (CKU) par la première liaison de synchronisation (H1) et d'autre part au moyen de commande (CPU) par la liaison de commande (CB);

. et un générateur des ordres de commande relié, d'une part : optiquement au circuit d'exploration (LS) par la première liaison, et au distributeur (CD) par la deuxième liaison; et relié, d'autre part, au moyen de commande (CPU) par la liaison de commande (CB).

15. Système de communication optique selon la revendication 14, caractérisé en ce que le circuit d'élaboration de commande comprend un générateur optique (421) d'impulsion calibrée, ayant : une entrée reliée optiquement à la première liaison de synchronisation (H1) et une sortie reliée à une entrée d'un coupleur optique (422); ledit coupleur ayant une première sortie reliée à une première entrée d'un premier commutateur optique (423.1) et une deuxième sortie reliée par une première ligne à retard optique (424) à une première entrée d'un deuxième commutateur optique (423.2);

en ce que les premier et deuxième commutateurs optiques ont chacun une entrée de commande reliée à ladite liaison de commande (CB);

en ce que le premier commutateur optique (423.1) a une deuxième entrée reliée optiquement par une deuxième ligne à retard optique (426.1) au circuit d'exploration (LS), et une sortie reliée optiquement par une troisième ligne à retard optique (425.1) au circuit d'exploration (LS);

et en ce que le deuxième commutateur optique (423.2) a une deuxième entrée reliée par une quatrième ligne à retard optique (426.2) au distributeur (CD) et une sortie reliée par une cinquième ligne à retard optique (425.2) au distributeur (CD).

16. Système de communication optique selon la revendication 14, caractérisé en ce que le circuit d'élaboration de commande comprend un générateur optique (421) d'impulsion calibrée, relié optiquement en entrée à la première liaison de synchronisation (H1) et en sortie à une première entrée d'un commutateur optique (423); ledit commutateur ayant : une deuxième entrée reliée par une ligne à retard optique (426) au circuit d'exploration (LS), une sortie reliée optiquement par une autre ligne à retard optique (425) au circuit d'exploration (LS) et une entrée de commande reliée à ladite liaison de commande (CB).

**17.** Système de communication optique selon la revendication 14, caractérisé en ce que le générateur des ordres de commande comprend :

. un démultiplexeur spectral (44) ayant une entrée reliée optiquement au circuit d'exploration (LS) par la première liaison et f sorties;

. f générateurs élémentaires d'ordres de commande (45.1 à 45.f);

. un superviseur (49) ayant f sorties et une entrée reliée à la liaison de commande (CB);

. un circuit de synchronisation (48) ayant une entrée et f sorties;

. et un coupleur optique (46) ayant f entrées et une sortie reliée à une entrée d'un coupleur optique de sortie (47) ayant : une première sortie reliée optiquement par une ligne à retard (42) à la deuxième liaison, et une deuxième sortie reliée optiquement à l'entrée du circuit de synchronisation (48);

et en ce que chaque générateur élémentaire (45.i) a : une première entrée reliée optiquement à une sortie du démultiplexeur spectral (44), une deuxième entrée reliée à une sortie du superviseur (49), une troisième entrée reliée à une sortie du circuit de synchronisation (48), et une sortie reliée à une entrée du coupleur optique (46); chaque générateur élémentaire (45.i) délivrant des ordres de commande optiques des commutateurs temporels à propagation contrôlée (TSU); chaque ordre de commande étant émis sur la deuxième liaison à une fréquence (FBi) dudit deuxième ensemble de fréquences optiques (Fb); ladite fréquence étant caractéristique d'un temps de propagation dans le commutateur temporel (TSU) destinataire de l'ordre.

**18.** Système de communication optique selon la revendication 17, caractérisé en ce que chaque générateur élémentaire (45.i) comprend : un coupleur optique (2) ayant une entrée reliée à la première entrée (450) du générateur élémentaire, et ayant une première et une deuxième sorties; un interrupteur optique (3) ayant une entrée reliée à la première sortie du coupleur; une source optique (4) ayant une entrée d'excitation (4a) reliée en sortie de l'interrupteur optique et ayant une sortie (4b) qui constitue la sortie (451.i) du générateur élémentaire; un détecteur optique (7) ayant une entrée reliée par une ligne à retard optique (5) à la deuxième sortie du coupleur optique (2); un compteur (8) ayant une sortie reliée à une première entrée d'un circuit générateur de signal d'accord (6) lui-même relié en sortie à une entrée de commande constituant la troisième entrée (452) du générateur élémentaire; ledit compteur (8) ayant : une première entrée reliée d'une part en sortie du détecteur optique (7) et d'autre part à un premier accès (4531), une deuxième entrée reliée à un deuxième accès (4532), et une troisième entrée reliée à un troisième accès (4533); ledit interrupteur optique (3) ayant une entrée de commande reliée à un quatrième accès (4534); lesdits premier, deuxième, troisième et quatrième accès constituant la deuxième entrée du générateur élémentaire, reliée au superviseur (49).

**19.** Système de communication optique selon la revendication 17, caractérisé par le fait que le démultiplexeur spectral (44) comprend un répartiteur passif (42), f filtres optiques accordables (444.i) associés chacun à un circuit d'accord (445.i), et que le répartiteur passif a une entrée reliée optiquement au circuit d'exploration (LS) et f sorties reliées optiquement chacune à un filtre optique accordable lui-même relié optiquement en sortie à un générateur élémentaire (45.i).

**20.** Système de communication optique selon la revendication 4, caractérisé en ce que chaque commutateur temporel optique (TSU) à propagation contrôlée est constitué d'une première et d'une deuxième lignes à retard optiques à prises multiples, identiques, et de k points de connexion optiques (55.1 à 55.k) à commande optique, ayant chacun une première et une deuxième entrées et une sortie;

en ce que chaque ligne à retard optique à prises multiples est constituée de k coupleurs optiques (53.1 à 53.k ; 56.1 à 56.k) identiques, en série avec k-1 lignes à retard optiques (54.1 à 54.(k-1) ; 57.1 à 57.(k-1)) identiques, chaque coupleur optique ayant une première sortie reliée par une ligne à retard optique à une entrée d'un coupleur optique suivant, à l'exception d'un dernier coupleur optique dont la première sortie est inutilisée;

en ce qu'un premier coupleur optique (53.1) de la première ligne à retard à prises multiples a son entrée reliée optiquement à une sortie du circuit d'exploration (LS) duquel il reçoit les canaux d'une liaison d'émission reliée optiquement en entrée dudit circuit d'exploration;

en ce qu'un premier coupleur optique (56.1) de la deuxième ligne à retard à prises multiples a son entrée reliée optiquement à une sortie du distributeur (CD) duquel il reçoit, pour chaque canal d'une liaison d'émission, un ordre de commande constitué par un signal optique à une fréquence optique (Fbi) d'un deuxième ensemble de fréquences optiques (Fb), ladite fréquence optique étant caractéristique d'un temps de propagation dans ladite première ligne à retard;

en ce que chaque coupleur optique de la première ligne à retard à prises multiples a une deuxième sortie reliée à la première entrée d'un point de connexion optique;

en ce que chaque coupleur optique de la deuxième ligne à retard à prises multiples a une deuxième sortie reliée à la deuxième entrée d'un point de connexion optique, ladite deuxième entrée étant une entrée de commande du point de connexion optique, chaque point de connexion optique étant commandé par un ordre de commande porté par un signal optique à une fréquence optique correspondant à une fréquence de fonctionnement dudit point de connexion;

en ce que la sortie de chaque point de connexion optique constitue une sortie optique du commutateur temporel (TSU).

21. Système de communication optique selon la revendication 20, caractérisé par le fait que chaque sortie d'un point de connexion optique est reliée optiquement à une entrée dudit diffuseur optique (OD).

22. Système de communication optique selon la revendication 20, caractérisé par le fait que les sorties des k points de connexion optiques sont reliées en entrée d'un coupleur optique (58) à k entrées et une sortie, et que ladite sortie est reliée optiquement à une entrée dudit diffuseur optique (OD).

23. Système de communication optique selon la revendication 20, caractérisé en ce que chaque commutateur temporel (TSU) comporte également k coupleurs optiques de sortie (58.1 à 58.k) ayant chacun une première et une deuxième entrées et une sortie;

en ce que que lesdits coupleurs optiques de sortie sont mis en série en reliant la sortie de l'un à la deuxième entrée du suivant, à l'exception d'un dernier coupleur optique de sortie dont la sortie est reliée optiquement à une entrée dudit diffuseur optique (OD) et d'un premier coupleur optique de sortie dont la deuxième entrée est inutilisée;

et en ce que chaque coupleur optique de sortie a sa première entrée reliée à la sortie d'un point de connexion optique.

24. Système de communication optique selon la revendication 20, caractérisé par le fait que chaque point de connexion optique (55.i) est constitué :

. d'un amplificateur optique (OA) ayant une entrée, une sortie et une entrée de commande;

. d'un détecteur optoélectronique (D) ayant une sortie reliée à ladite entrée de commande, et une entrée;

. et d'un filtre optique (OF) accordable ayant une entrée optique qui constitue la deuxième entrée du point de connexion optique, et une sortie reliée à l'entrée dudit détecteur optoélectronique (D); et que l'entrée et la sortie de l'amplificateur optique (OA) constituent la première entrée et la sortie optiques du point de connexion optique.

25. Système de communication optique selon la revendication 1, caractérisé en ce que le dispositif de commutation spectro-temporel (SSTSN) comprend :

. un circuit optique d'exploration (LS) relié optiquement aux liaisons optiques d'émission de terminal (UEL1 à UELp), et aux liaisons optiques d'émission de signalisation (SEL), lesdites liaisons optiques d'émission (UEL, SEL) acheminant chacune un multiplex spectro-temporel d'émission constitué par des canaux acheminant chacun un échantillon optique d'information;

. un distributeur optique (CD) d'ordres de commande;

. un circuit de commande (CC) relié, d'une part, optiquement : au circuit optique d'exploration (LS) par une première liaison optique acheminant un multiplex spectro-temporel (OLM) de destination comportant autant de canaux qu'il y a de liaisons d'émission; au distributeur optique (CD) par une deuxième liaison optique acheminant un multiplex spectro-temporel (CLM) d'ordres de commande; ayant un nombre de canaux égal à celui dudit multiplex de destination, chaque canal du multiplex d'ordres de commande étant en phase temporelle avec un canal de même rang dudit multiplex de destination et acheminant un ordre de commande; et au générateur de synchronisation (CKU) par la première liaison de synchronisation (H1); et relié d'autre part, au moyen de commande (CPU), par la liaison de commande (CB);

. des moyens optiques de commutation temporelle à propagation (MTSU) ayant :

.. n circuits d'entrée (DUIC.1 à DUIC.n) reliés chacun optiquement à une sortie du circuit optique d'exploration (LS) et à une sortie du distributeur optique (CD) des ordres de commande;

.. et un dispositif de sortie (DUOC) relié optiquement en entrée aux circuits d'entrée (DUIC.1 à DUIC.n);

. un diffuseur optique (OD) relié optiquement en sortie du dispositif de sortie (DUOC), et aux liaisons optiques émission de configuration (CEL), et ayant des sorties reliées optiquement chacune en entrée d'un filtre optique (WF1 à WFs);

. s filtres optiques (WF1 à WFs) relié chacun optiquement en sortie à une des liaisons optiques réception de terminal (URL1 à URLq), réception de signalisation (SRL), réception de configuration (CRL),

. un circuit de configuration des filtres (FCC) raccordé en entrée à la liaison de commande (CB) et en sortie à une entrée de commande de chaque filtre optique (WF1 à WFs).

26. Système de communication optique selon la revendication 25, caractérisé par en ce que le multiplex de destination (OLM) est constitué par échantillonnage des canaux se présentant à un même instant en entrée du circuit d'exploration (LS) sur chacune des liaisons d'émission (UEL et SEL);

en ce que chaque canal du multiplex d'ordres de commande (CLM) ayant même rang qu'une liaison d'émission achemine un ordre de commande constitué par un signal optique à une fréquence optique (Fbi) d'un deuxième ensemble de fréquences optiques (Fb) dont chaque fréquence optique est caractéristique d'un retard de propagation en temps réel que doit subir, dans les moyens optiques de commutation temporelle (MTSU), le message acheminé par le canal de ladite liaison d'émission, ladite fréquence optique (Fbi) étant déterminée par le circuit de commande (CC);

et en ce que le distributeur optique (CD) délivre à chaque circuit d'entrée (DUIC) correspondant au rang d'un canal du multiplex d'ordres de commande (CLM) l'ordre de commande acheminé par ledit canal du multiplex d'ordres de commande.

27. Système de communication optique selon la revendication 25, caractérisé en ce que chaque circuit d'entrée (DUIC.1 à DUIC.n) est constitué par un : dispositif optique de diffusion optique, k points de connexion optiques (74.1 à 74.k) à commande optique, et un démultiplexeur spectral (72); le dispositif optique de diffusion optique ayant une entrée reliée à une sortie du circuit d'exploration (LS) et k sorties;

en ce que chaque point de connexion optique (74.i) a : une entrée reliée à la sortie de même rang du dispositif optique de diffusion optique, une sortie reliée en entrée du dispositif de sortie (DUOC), et une entrée de commande; et

en ce que le démultiplexeur spectral (72) a une entrée (70.2) reliée à une sortie du distributeur (CD) et a k sorties (721.1 à 721.k) reliées aux entrées de commande des k points de connexion optiques.

28. Système de communication optique selon la revendication 27, caractérisé par le fait que le dispositif optique de diffusion optique est constitué par k coupleurs optiques (73.1 à 73. k) en série, chaque coupleur optique ayant une entrée, une première et une deuxième sorties, la deuxième sortie de chaque coupleur étant reliée à l'entrée d'un point de connexion, les coupleurs étant mis en série en reliant l'entrée de l'un à la première sortie du suivant à l'exception d'un dernier coupleur (73.k) dont l'entrée est reliée à une sortie du circuit d'exploration (LS).

29. Système de communication optique selon la revendication 27, caractérisé par le fait que le dispositif optique de diffusion optique est constitué par un coupleur optique (75) ayant une entrée (750) reliée à une sortie du circuit d'exploration (LS) et k sorties (751.1 à 751.k) reliées chacune à une entrée d'un point de connexion.

30. Système de communication optique selon la revendication 27, caractérisé en ce que le dispositif de sortie (DUOC) est constitué par n lignes à retard optiques à entrées multiples;

en ce que chaque ligne à retard optique à entrées multiples est associée à un circuit d'entrée et est constituée par k-1 coupleurs optiques (82.1 à 82.(k-1)) identiques en série avec k-1 lignes à retard (83.1 à 83.(k-1)) identiques, et par un amplificateur optique (84) ayant une entrée et une sortie, chaque coupleur optique (82.i) ayant une première entrée reliée par une ligne à retard (83.i) à une sortie du coupleur optique suivant, à l'exception d'un dernier coupleur (82.(k-1)) dont la première entrée est reliée par l'intermédiaire d'une ligne à retard (83.(k-1)) à une sortie d'un point de connexion et à l'exception d'un premier coupleur (83.1) dont la sortie est reliée à l'entrée de l'amplificateur optique (84) dont la sortie est reliée en entrée du diffuseur optique (OD);

et en ce que chaque coupleur a une deuxième entrée reliée à une sortie d'un point de connexion.

31. Système de communication optique selon la revendication 27, caractérisé en ce que le dispositif de sortie (DUOC) est constitué par une ligne à retard optique à entrées multiples et k combineurs optiques (91.1 à 91.k) ayant n entrées et une sortie;

en ce que ladite ligne à retard optique à entrées multiples est constituée par k-1 coupleurs optiques (82.1 à 82.(k-1)) identiques en série avec k-1 lignes à retard (83.1 à 83.(k-1)) identiques et par un amplificateur optique (84); chaque coupleur optique (83.i) ayant une première entrée reliée par une ligne à retard (83.i) à une sortie du coupleur optique suivant, à l'exception d'un dernier coupleur (82.(k-1)) dont la première entrée est reliée par l'intermédiaire d'une ligne à retard (83.(k-1)) à la sortie d'un dernier combineur optique (91.k) et à l'exception d'un premier coupleur (83.1) dont la sortie est reliée à l'entrée de l'amplificateur optique (84) dont la sortie est reliée en entrée du diffuseur optique (OD);

en ce que chaque coupleur a une deuxième entrée reliée à une sortie d'un combineur optique de même rang;

et en ce que chaque combineur optique (91.i) est relié en entrée à une sortie d'un point de connexion de même rang (74.i) de chacun des circuits d'entrée (DUIC.1 à DUIC.n).

32. Système de communication optique selon la revendication 27, caractérisé en ce que le dispositif de sortie (DUOC) est constitué par n circuits optiques de retard à entrées multiples;

et en ce que chaque circuit optique de retard à entrées multiples est associé à un circuit d'entrée et est constitué par k lignes à retard optiques distinctes (85.1 à 85.k), réalisant chacune un retard dont la valeur est fonction de son rang, et k amplificateurs optiques (84.1 à 84.k) ayant chacun une entrée et une sortie; chaque ligne à retard optique (85.i) ayant une entrée reliée à une sortie d'un point de connexion et une sortie reliée à une entrée d'un amplificateur optique (84.i) dont la sortie est reliée en entrée du diffuseur optique (OD).

33. Système de communication optique selon la revendication 27, caractérisé en ce que le dispositif de sortie (DUOC) est constitué par un circuit optique de retard à entrées multiples et k combineurs optiques (91.1 à 91.k) ayant chacun n entrées et une sortie;

en ce que ledit circuit optique de retard à entrées multiples est constitué par k lignes à retard optiques distinctes (85.1 à 85.k), réalisant chacune un retard dont la valeur est fonction de son rang, et k amplificateurs optiques (84.1 à 84.k) ayant chacun une entrée et une sortie; chaque ligne à retard optique (85.i) ayant une entrée reliée à la sortie d'un combineur optique de même rang (91.i) et une sortie reliée à une entrée d'un amplificateur optique (84.i) dont la sortie est reliée en entrée du diffuseur optique (OD);

et en ce que chaque combineur optique (91.i) est relié en entrée à une sortie d'un point de connexion de même rang (74.i) de chacun des circuits d'entrée (DUIC.1 à DUIC.n).

**Patentansprüche**

1. Optisches Nachrichtensystem vom asynchronen Zeitmultiplextyp mit einer Vermittlungszentrale (SN), mit q Endgeräte-Empfangsschaltungen (UR1 bis URq), die über höchstens q optische Endgeräte-Empfangsverbindungen (URL1 bis URLq) mit der Vermittlungszentrale verbunden sind, mit p Endgeräte-Sendeschaltungen (UE1 bis UEp), die je über eine optische Endgeräte-Sendeverbindung (UEL1 bis UELp) mit der Zentrale verbunden sind, wobei die Endgeräte-Sende- und Empfangsschaltungen aufgeteilt sind in x entfernte Nachrichten-Endgeräte mit je einer Sende- und einer Empfangsschaltung, y Sende-Endgeräte mit je einer Sendeschaltung, z Empfangs-Endgeräte mit je einer Empfangsschaltung;

wobei die Vermittlungszentrale (SN) aufweist:

. eine optische spektral-zeitliche Vermittlungsvorrichtung (SSTSN), die optisch mit den optischen Sendeverbindungen und den optischen Empfangsverbindungen verbunden ist;

. ein Steuermittel (CPU),

. und einen Synchronisationssignalgenerator (CKU),

dadurch gekennzeichnet,

- daß jede Endgeräte-Empfangsschaltung aufweist:

. mindestens einen optischen Konfigurationsempfänger, der auf eine optische Frequenz (Fa1i) aus einer ersten Gruppe von optischen Frequenzen (Fa1) in einer ersten Einheit von optischen Frequenzen (Fa) abgestimmt ist,

. einen optischen Übertragungsempfänger, der auf eine beliebige optische Frequenz aus der zweiten Gruppe von optischen Frequenzen (Fa2) in der ersten Einheit optischer Frequenzen (Fa) abstimmbar ist,

. ein Mittel zur Abstimmung der optischen Frequenz des optischen Übertragungsempfängers,

. und ein Mittel zur zeitlichen Synchronisation der empfangenen Information,

- daß jede Endgeräte-Sendeschaltung aufweist:

. einen optischen Übertragungssender, der auf eine beliebige optische Frequenz aus der zweiten Gruppe von optischen Frequenzen (Fa2) abstimmbar ist,

. ein Mittel zur optischen Frequenzabstimmung des optischen Senders,

. und Mittel zur zeitlichen Synchronisation und zur zeitlichen Formatierung der zu übertragenden Information,
- daß das Steuermittel (CPU) aufweist:
  . mindestens eine Konfigurations-Sendeschaltung (CE) mit einem optischen Konfigurationssender, der auf eine optische Frequenz (Fa1i) aus der ersten Gruppe optischer Frequenzen (Fa1) abgestimmt ist,
  . mindestens eine Signalisations-Sendeschaltung (SE) mit einem optischen Übertragungssender, der auf eine beliebige optische Frequenz aus der zweiten Gruppe von optischen Frequenzen (Fa2) abstimmbar ist,
  . mindestens eine Konfigurations-Empfangsschaltung (CR) und mindestens eine Signalisations-Empfangsschaltung (SR), die je mindestens einen optischen Konfigurationsempfänger, der auf eine optische Frequenz (Fa1i) aus der ersten Gruppe von optischen Frequenzen (Fa1) abgestimmt ist, und einen optischen Übertragungsempfänger enthält, der auf eine beliebige optische Frequenz aus der zweiten Gruppe von optischen Frequenzen (Fa2) abstimmbar ist,
- daß das Steuermittel (CPU) an die Vermittlungsvorrichtung (SSTSN) angeschlossen ist
  . über eine Steuerverbindung (CB),
  . über mindestens eine optische Konfigurations-Sendeverbindung (CEL), die je optisch an den optischen Konfigurationssender einer Konfigurations-Sendeschaltung (CE) angeschlossen sind,
  . über mindestens eine optische Konfigurations-Empfangsverbindung (CRL), die je optisch mit den optischen Konfigurations- und Übertragungsempfängern einer Konfigurations-Empfangsschaltung (CR) verbunden sind,
  . und über mindestens eine optische Signalisations-Sendeverbindung (SEL), die je optisch mit dem optischen Sender einer Signalisationsschaltung (SE) verbunden sind,
  . über mindestens eine optische Signalisations-Empfangsverbindung (SRL), die je optisch mit den optischen Konfigurations- und Übertragungsempfängern einer Signalisations-Empfangsschaltung (SR) verbunden sind,
- und daß der Synchronisationssignalgenerator (CKU) über eine erste Synchronisationsverbindung (H1) mit der Vermittlungsvorrichtung (SSTSN) und über eine zweite Synchronisationsverbindung (H2) mit dem Steuermittel (CPU) verbunden ist.

2. Optisches Nachrichtensystem nach Anspruch 1, dadurch gekennzeichnet,
  - daß jede Konfigurations-Sendeschaltung (CE) auf ihrer Konfigurations-Sendeverbindung (CEL) ein Konfigurations-Sendezeitmultiplexsystem (CEM) aussendet, das von der Vermittlungsvorrichtung (SSTSN) auf jede der optischen Konfigurations-Signalisations- und Endgeräte-Empfangsverbindungen (CRL, SRL, URL) verteilt wird,
  und daß jedes Konfigurations-Sendezeitmultiplexsystem mit einer optischen Frequenz aus der ersten Gruppe von optischen Frequenzen (Fa1) der ersten Einheit optischer Frequenzen (Fa) übertragen wird,
  - daß eine optische Frequenz aus der zweiten Gruppe von optischen Frequenzen (Fa2) der ersten Einheit von optischen Frequenzen (Fa) dynamisch durch das Steuermittel (CPU) jedem aktiven Übertragungsempfänger der Konfigurations-Empfangsschaltungen (CR), der Signalisations-Empfangsschaltungen (SR) und der Endgeräte-Empfangsschaltungen (UR) zugeteilt ist, wobei jede Endgeräte-Sendeschaltung (UE) und Signalisations-Sendeschaltung (SE) mit einem beliebigen aktiven Übertragungsempfänger verkehrt, indem eine Nachricht in Form einer Folge optischer Tastproben ausgesendet wird, die mit der dem aktiven Übertragungsempfänger zugeteilten optischen Frequenz kodiert wird, wobei die optischen Tastproben durch jede Endgeräte-Sendeschaltung (UE) in einem spektral-zeitlichen Nachrichten-Sendemultiplexsystem (UEM) auf der Endgeräte-Sendeverbindung (UEL) und über jede Signalisations-Sendeschaltung (SE) in einem spektral-zeitlichen Signalisations-Sendemultiplexsystem (SEM) auf der Signalisations-Sendeverbindung (SEL) ausgesendet werden,
  - daß jedes spektral-zeitliche Sendemultiplexsystem (UEM, SEM) eine nicht in Rahmen strukturierte Folge von Zeitkanälen gleicher Dauer (T) enthält, die je eine optische Tastprobe auf einer für den Zielempfänger der Übertragung charakteristischen optischen Frequenz übertragen,
  - daß jede optische Tastprobe optisch durch die Zeitmultiplex-Vermittlungsvorrichtung (SSTSN) und in Abhängigkeit von der optischen Trägerfrequenz durchgeschaltet und dann optisch auf eine der optischen Empfangsverbindungen gelenkt wird, auf der sie in einem ersten freien Kanal eines Empfangs-Zeitmultiplexsystems der Empfangsverbindung übertragen wird,

- und daß jedes Empfangs-Zeitmultiplexsystem (CRM, SRM, URM) eine Folge von undifferenzierten Zeitkanälen gleicher Dauer (T) besitzt, die je eine optische Tastprobe übertragen, wobei die optischen Tastproben eines gemeinsamen Empfangs-Zeitmultiplexsystems alle die gleiche optische Frequenz besitzen.

3. Optisches Nachrichtensystem nach Anspruch 1, dadurch gekennzeichnet,
- daß es weiter mindestens einen Diffusionsserver (BS) aufweist, wobei jeder Server optisch mit der Vermittlungsvorrichtung (SSTSN) über eine optische Diffusionsverbindung (BL) verbunden ist, die im Server an mindestens einen optischen Diffusionssender angeschlossen ist,
- daß die Endgeräte-Empfangsschaltungen (UR) mindestens einen optischen Diffusionsempfänger besitzen, der in einer Endgeräte-Empfangsschaltung optisch an die Endgeräte-Empfangsverbindung (URL) angeschlossen ist, die dieses Endgerät mit der Vermittlungsvorrichtung (SSTSN) verbindet,
- daß die optischen Diffusionssender und die optischen Diffusionsempfänger auf eine beliebige optische Frequenz aus einer dritten Gruppe (Fa3) von optischen Frequenzen in der ersten Einheit von optischen Frequenzen (Fa) abstimmbar sind,
- und daß mindestens eine optische Frequenz aus der dritten Gruppe von optischen Frequenzen (Fa3) jedem Diffusionssender zugewiesen ist, der auf der zugeteilten Frequenz eine Nachricht aussendet, die von der Vermittlungsvorrichtung (SSTSN) auf jede der Endgeräte-Empfangsverbindungen (URL) verteilt wird, wobei jeder Diffusionsempfänger die Nachricht empfängt und sich auf die Frequenz des Diffusionssenders abstimmt, der sie ausgesendet hat.

4. Optisches Nachrichtensystem nach Anspruch 1, dadurch gekennzeichnet, daß die spektral-zeitliche Vermittlungsvorrichtung (SSTSN) aufweist:
. eine optische Abfrageschaltung (LS), die optisch mit den optischen Endgeräte-Sendeverbindungen (UEL1 bis UELp) und mit den optischen Signalisations-Sendeverbindungen (SEL) verbunden sind, wobei die optischen Sendeverbindungen (UEL, SEL) je ein spektral-zeitliches Sendemultiplexsystem übertragen, das aus Kanälen besteht, die je eine optische Informationstastprobe übertragen,
. einen optischen Steuerbefehlsverteiler (CD),
. eine Steuerschaltung (CC), die einerseits optisch verbunden ist:
.. mit der optischen Abfrageschaltung (LS) über eine erste optische Verbindung, die ein spektral-zeitliches Zielmultiplexsystem (OLM) überträgt, das ebensoviele Kanäle besitzt, wie es Sendeverbindungen gibt,
.. mit dem optischen Diffusor(CD) über eine zweite optische Verbindung, auf der ein spektral-zeitliches Multiplexsystem (CLM) von Steuerbefehlen mit einer Anzahl von Kanälen gleich der des Zielmultiplexsystems übertragen wird, wobei jeder Kanal des Steuerbefehls-Multiplexsystems in zeitlicher Phase mit einem Kanal gleichen Rangs des Zielmultiplexsystems liegt und einen Steuerbefehl überträgt,
.. und mit dem Synchronisationsgenerator (CKU) über die erste Synchronisationsverbindung,
und die andererseits mit dem Steuermittel (CPU) über eine Steuerverbindung (CB) verbunden ist,
. n optische Zeitschalter (TSU1 bis TSUn) mit kontrollierter Laufzeit, die je optisch an einen Ausgang der optischen Abfrageschaltung (LS) und an einen Ausgang des optischen Steuerbefehlsverteilers (CD) angeschlossen sind,
. einen optischen Diffusor (OD), der optisch an den Ausgang der Zeitschalter (TSU) und an die optischen Konfigurations-Sendeverbindungen (CEL) angeschlossen ist und dessen Ausgänge je optisch an den Eingang eines optischen Filters (WF1 bis WFs) angeschlossen sind,
. s optische Filter (WF1 bis WFs), die je optisch ausgangsseitig an eine der optischen Endgeräte-Empfangsverbindungen (URL1 bis URLq), der optischen Signalisations-Empfangsverbindungen (SRL) und der optischen Konfigurations-Empfangsverbindungen (CRL) angeschlossen sind,
. eine Filterkonfigurationsschaltung (FCC), die eingangsseitig an die Steuerverbindung (CB) und ausgangsseitig an einen Steuereingang jedes der optischen Filter (WF1 bis WFs) angeschlossen ist.

5. Optisches Nachrichtensystem nach Anspruch 4, dadurch gekennzeichnet,

- daß das Zielmultiplexsystem (OLM) aus der Tastung der Kanäle besteht, die in einem gegebenen Augenblick am Eingang der Abfrageschaltung (LS) auf jeder der Sendeverbindungen (UEL und SEL) vorliegen,
- daß jeder Kanal des Steuerbefehls-Multiplexsystems (CLM), der den gleichen Rang wie eine Sendeverbindung hat, einen Steuerbefehl bestehend aus einem optischen Signal mit einer optischen Frequenz (Fbi) aus einer zweiten Einheit von optischen Frequenzen (Fb) überträgt, wobei jede dieser optischen Frequenzen für eine Echtzeitverzögerung charakteristisch ist, der in einem Zeitschalter (TSU) die in dem Kanal auf der Sendeverbindung übertragene Nachricht unterworfen werden soll, wobei diese optische Frequenz (Fbi) durch die Steuerschaltung (CC) bestimmt wird,
- und daß der optische Diffusor(CD) an jeden Zeitschalter (TSU) entsprechend dem Rang eines Kanals des Steuerbefehls-Multiplexsystems (CLM) den auf diesem Kanal des Steuerbefehls-Multiplexsystems übertragenen Steuerbefehl liefert.

6. Optisches Nachrichtensystem nach Anspruch 4, dadurch gekennzeichnet, daß Ausgänge des optischen Diffusors (OD) optisch mit Eingängen der Diffusionsserver (BS) über optische Diffusionsverbindungen (BL) verbunden sind.

7. Optisches Nachrichtensystem nach Anspruch 4, dadurch gekennzeichnet,
- daß die optische Abfrageschaltung (LS) ein optisches Selektionsorgan und eine erste Steuervorrichtung enthält,
- daß das optische Selektionsorgan besteht aus:
  . n optischen Schaltern (224.1 bis 224.n) in Reihe, von denen jeder einen ersten und einen zweiten Eingang, einen Ausgang und einen Steuereingang besitzt,
  . n optischen Kopplern (226.1 bis 226.n) mit je einem Eingang, einem ersten und einem zweiten Ausgang,
  . und n identischen optischen Verzögerungsleitungen (227.1 bis 227.n),
- daß die optischen Schalter durch Verbindung des Ausgangs eines Schalters mit dem ersten Eingang des nächsten in Reihe geschaltet werden, wobei der Ausgang eines letzten optischen Schalters optisch mit der Steuerschaltung (CC) über die erste optische Verbindung verbunden ist,
- daß der zweite Eingang jedes optischen Schalters (224.i) an den zweiten Ausgang des optischen Kopplers gleichen Rangs (226.i) angeschlossen ist,
- daß jeder optische Koppler (226.i) mit seinem Eingang an einen Eingang der optischen Abfrageschaltung (LS) und mit seinem ersten Ausgang an den Eingang einer optischen Verzögerungsleitung (227.i) angeschlossen ist, wobei der Ausgang der Verzögerungsleitung optisch an einen Zeitschalter (TSU.i) mit kontrollierter Laufzeit angeschlossen ist,
- daß die erste Steuervorrichtung aus n optischen Steuerkopplern (221.1 bis 221.n) mit je einem Eingang, einem ersten und einem zweiten Ausgang sowie aus n-1 optischen Steuerverzögerungsleitungen (222.1 bis 222.n-1) besteht,
- daß der erste Ausgang jedes optischen Steuerkopplers (221.i) mit Ausnahme des letzten an den Eingang einer optischen Steuerverzögerungsleitung (222.i) angeschlossen ist, wobei der Ausgang dieser Verzögerungsleitung mit dem Eingang des nächstfolgenden optischen Steuerkopplers verbunden ist,
- daß der Eingang eines ersten optischen Steuerkopplers und der erste Ausgang eines letzten optischen Steuerkopplers optisch mit der Steuerschaltung (CC) verbunden sind,
- und daß der zweite Ausgang jedes optischen Steuerkopplers (221.i) optisch mit dem Steuereingang eines optischen Schalters gleichen Rangs (224.i) des optischen Selektionsorgans verbunden ist.

8. Optisches Nachrichtensystem nach Anspruch 7, dadurch gekennzeichnet, daß der zweite Eingang jedes optischen Schalters (224.i) über einen optischen Verstärker (225.i) an den zweiten Ausgang des optischen Kopplers gleichen Rangs (226.i) angeschlossen ist, und daß der zweite Ausgang jedes optischen Steuerkopplers (221.i) optisch über einen optischen Verstärker (223.i) an den Steuereingang eines optischen Schalters gleichen Rangs (224.i) des optischen Selektionsorgans angeschlossen ist.

9. Optisches Nachrichtensystem nach Anspruch 4, dadurch gekennzeichnet,
- daß der optische Verteiler (CD) für Steuerbefehle eine zweite Steuervorrichtung und eine Verteilleitung besitzt,
- daß die zweite Steuervorrichtung aus n optischen Steuerkopplern (321.1 bis 321.n) und n-1 optischen Steuerverzögerungsleitungen (322.1 bis 322.n-1) besteht, wobei jeder optische Steuerkoppler einen Eingang, einen ersten und eine zweiten Ausgang besitzt,

- daß der erste Ausgang jedes optischen Steuerkopplers (321.i) mit Ausnahme des letzten an den Eingang einer optischen Steuerverzögerungsleitung (322.i) angeschlossen ist, die ihrerseits ausgangsseitig mit dem Eingang des nächstfolgenden optischen Kopplers verbunden ist,
- daß der Eingang eines ersten optischen Steuerkopplers und der erste Ausgang eines letzten optischen Steuerkopplers mit der Steuerschaltung (CC) verbunden sind,
- daß die Verteilleitung aus n optischen Schaltern (324.1 bis 324.n) mit je einem Eingang, einem ersten und einem zweiten Ausgang sowie einem Steuereingang, aus n optischen Hysterese-Verstärkern (325.1 bis 325.n) und n optischen Verzögerungsleitungen (326.1 bis 326.n) mit je einer für den Rang i der Verzögerungsleitung charakteristischen Länge gebildet wird,
- daß die optischen Schalter durch Anschluß des ersten Ausgangs eines Schalters an den Eingang des nächsten in Reihe geschaltet sind, wobei der Eingang des ersten optischen Schalters optisch mit der Steuerschaltung (CC) über die zweite optische Verbindung verbunden ist,
- daß der zweite Ausgang jedes optischen Schalters (324.i) über einen optischen Hysterese-Verstärker (325.i) an den Eingang einer optischen Verzögerungsleitung (326.i) angeschlossen ist, die ihrerseits optisch ausgangsseitig an einen Zeitschalter mit kontrollierter Laufzeit (TSU.i) angeschlossen ist,
- und daß der zweite Ausgang jedes optischen Steuerkopplers (321.i) der zweiten Steuervorrichtung mit dem Steuereingang des optischen Schalters gleichen Rangs (324.i) der Verteilleitung verbunden ist.

10. Optisches Nachrichtensystem nach Anspruch 9, dadurch gekennzeichnet, daß der zweite Ausgang jedes optischen Steuerkopplers (321.i) der zweiten Steuervorrichtung über einen optischen Verstärker (323.i) an den Steuereingang des optischen Schalters gleichen Rangs (324.i) der Verteilleitung angeschlossen ist.

11. Optisches Nachrichtensystem nach Anspruch 4, dadurch gekennzeichnet,
- daß die optische Abfrageschaltung (LS) und der optische Steuerbefehlsverteiler (CD) eine gemeinsame dritte Steuervorrichtung enthalten,
- daß die optische Abfrageschaltung aus einem optischen Selektionsorgan besteht, das aufweist:
. n optische Selektionsschalter in Reihe (224.1 bis 224.n) mit je einem ersten und einem zweiten Eingang, einem Ausgang und einem Steuereingang,
. n optische Selektionskoppler (226.1 bis 226.n) mit je einem Eingang, einem ersten und einem zweiten Ausgang,
. und n identische optische Selektions-Verzögerungsleitungen (227.1 bis 227.n),
- daß die optischen Selektionsschalter durch Anschluß des Ausgangs eines der Schalter an den ersten Eingang des nächstfolgenden in Serie geschaltet wird, während der Ausgang des letzten optischen Selektionsschalters optisch an die Steuerschaltung (CC) über die erste optische Verbindung angeschlossen ist,
- daß der zweite Eingang jedes optischen Selektionsschalters (224.i) an den zweiten Ausgang des optischen Selektionskopplers gleichen Rangs (226.i) angeschlossen ist,
- daß jeder optische Selektionskoppler (226.i) mit seinem Eingang an einen Eingang der optischen Abfrageschaltung (LS) und mit seinem ersten Ausgang an den Eingang einer optischen Selektions-Verzögerungsleitung (227.i) angeschlossen ist, während der Ausgang der Verzögerungsleitung mit einem optischen Zeitschalter (TSU.i) mit kontrollierter Laufzeit verbunden ist,
- daß die Verteilleitung besteht aus:
. n optischen Verteilschaltern (324.1 bis 324.n) mit je einem Eingang, einem ersten und einem zweiten Ausgang und einem Steuereingang,
. n optischen Hysterese-Verstärkern (325.1 bis 325.n) und n optischen Verteil-Verzögerungsleitungen (326.1 bis 326.n), deren jeweilige Länge für den Rang i der Verteil-Verzögerungsleitung charakteristisch ist,
- daß die optischen Verteilschalter durch Anschluß des ersten Ausgangs eines dieser Schalter an den Eingang des nächsten in Reihe geschaltet sind, wobei der Eingang eines ersten optischen Verteilschalters optisch mit der Steuerschaltung (CC) über die zweite optische Verbindung verbunden ist,
- daß der zweite Ausgang jedes optischen Verteilschalters (324.i) über einen optischen Hysterese-Verstärker (325.i) an den Eingang einer optischen Verteil-Verzögerungsleitung (326.i) angeschlossen ist, wobei der Ausgang der Verzögerungsleitung optisch mit einem Zeitschalter mit kontrollierter Laufzeit (TSU.i) verbunden ist,

- daß die dritte Steuervorrichtung besteht aus:
  . n optischen Selektions-Steuerkopplern (221.1 bis 221.n),
  . n optischen Verteil-Steuerkopplern (321.1 bis 321.n),
  . n ersten optischen Verzögerungsleitungen (231.1 bis 231.n),
  . und n-1 zweiten optischen Verzögerungsleitungen (331.1 bis 331.n-1), wobei jeder optische Selektions-Steuerkoppler und jeder optische Verteil-Steuerkoppler einen Eingang, einen ersten und einen zweiten Ausgang besitzt,

- daß der erste Ausgang eines optischen Selektions-Steuerkopplers (221.i) an eine der ersten optischen Verzögerungsleitungen (231.i) angeschlossen ist, die ihrerseits an den Eingang eines optischen Verteil-Steuerkopplers (321.i) angeschlossen ist, während ein erster Ausgang dieses Kopplers über eine der zweiten optischen Verzögerungsleitungen (331.i) an den Eingang eines nachfolgenden optischen Selektions-Steuerkopplers angeschlossen ist, mit Ausnahme des letzten optischen Verteil-Steuerkopplers, dessen erster Ausgang optisch an die Steuerschaltung (CC) angeschlossen ist, während der Eingang eines ersten optischen Selektions-Steuerkopplers optisch mit der Steuerschaltung verbunden ist,

- daß der zweite Ausgang jedes optischen Selektions-Steuerkopplers (221.i) an den Steuereingang eines optischen Selektionsschalters gleichen Rangs (224.i) angeschlossen ist,

- und daß der zweite Ausgang jedes optischen Verteil-Steuerkopplers (321.i) mit dem Steuereingang eines optischen Verteilschalters (324.i) gleichen Rangs verbunden ist.

**12.** Optisches Nachrichtensystem nach Anspruch 4, dadurch gekennzeichnet,

- daß die optische Abfrageschaltung (LS) und der optische Steuerbefehlsverteiler (CD) eine vierte gemeinsame Steuervorrichtung besitzen,

- daß die optische Abfrageschaltung aus einem optischen Selektionsorgan besteht,
  . mit n optischen Selektionsschaltern (224.1 bis 224.n) in Reihe, die je einen ersten und einen zweiten Eingang, einen Ausgang und einen Steuereingang besitzen,
  . mit n optischen Selektionskopplern (226.1 bis 226.n), die je einen Eingang, einen ersten und eine zweiten Ausgang besitzen,
  . und mit n identischen optischen Selektions-Verzögerungsleitungen (227.1 bis 227.n),

- daß die optischen Selektionsschalter durch Verbindung des Ausgangs eines Schalters mit dem ersten Eingang des nächsten in Reihe geschaltet werden, wobei der Ausgang eines letzten optischen Selektionsschalters optisch an die Steuerschaltung (CC) über die erste optische Verbindung angeschlossen ist,

- daß der zweite Eingang jedes optischen Selektionsschalters (224.i) mit dem zweiten Ausgang des optischen Selektionskopplers gleichen Rangs (226.i) verbunden ist,

- daß jeder optische Selektionskoppler (226.i) mit seinem Eingang optisch an einen Eingang der optischen Abfrageschaltung (LS) und mit seinem ersten Ausgang an den Eingang einer optischen Selektions-Verzögerungsleitung (227.i) angeschlossen ist, während ein Ausgang der Verzögerungsleitung optisch mit einem optischen Zeitschalter (TSU.i) mit kontrollierter Laufzeit angeschlossen ist,

- daß die Verteilleitung besteht aus:
  . n optischen Verteilschaltern (324.1 bis 324.n) mit je einem Eingang, einem ersten und einem zweiten Ausgang sowie einem Steuereingang,
  . n optischen Hysterese-Verstärkern (325.1 bis 325.n) sowie n optischen Verteil-Verzögerungsleitungen (326.1 bis 326.n), deren unterschiedliche Längen für den Rang i der optischen Verteil-Verzögerungsleitung charakteristisch sind,

- daß die optischen Verteilschalter durch Anschluß des ersten Ausgangs eines von ihnen an den Eingang des nächsten in Reihe geschaltet sind, wobei der Eingang eines ersten optischen Verteilschalters optisch mit der Steuerschaltung (CC) über die zweite optische Verbindung verbunden ist,

- daß der zweite Ausgang jedes optischen Verteilschalters (324.i) über einen optischen Hysterese-Verstärker (325.i) an den Eingang einer optischen Verteil-Verzögerungsleitung (326.i) angeschlossen ist, wobei der Ausgang der Verzögerungsleitung optisch an einen Zeitschalter mit kontrollierter Laufzeit (TSU.i) angeschlossen ist,

- daß die vierte Steuervorrichtung besteht aus:

. n optischen Selektions-Steuerkopplern (221.1 bis 221.n),

. n optischen Verteil-Steuerkopplern (321.1 bis 321.n),

. n optischen Steuer-Verzögerungsleitungen (231.1 bis 231.n), wobei jeder optische Selektions-Steuerkoppler und jeder optische Verteil-Steuerkoppler einen Eingang, einen ersten und einen zweiten Ausgang besitzt,

- daß der erste Ausgang eines optischen Selektions-Steuerkopplers (221.i) über eine optische Steuer-Verzögerungsleitung (231.i) an den Eingang eines optischen VerteilSteuerkopplers (321.i) angeschlossen ist, dessen erster Ausgang mit dem Eingang des nächstfolgenden optischen Selektions-Steuerkopplers verbunden ist, mit Ausnahme des letzten optischen Verteil-Steuerkopplers, dessen erster Ausgang optisch mit der Steuerschaltung (CC) verbunden ist, während der Eingang eines ersten optischen Selektions-Steuerkopplers optisch mit der Steuerschaltung verbunden ist,

- daß der zweite Ausgang jedes optischen Selektions-Steuerkopplers (221.i) an den Steuereingang eines optischen Selektionsschalters gleichen Rangs (224.i) angeschlossen ist,

- und daß der zweite Ausgang jedes optischen Verteil-Steuerkopplers (321.i) an den Steuereingang eines optischen Verteilschalters (324.i) gleichen Rangs angeschlossen ist.

13. Optisches Nachrichtensystem nach einem der Ansprüche 11 und 12, dadurch gekennzeichnet, daß der zweite Eingang jedes optischen Selektionsschalters (224.i) mit dem zweiten Ausgang des optischen Selektionskopplers gleichen Rangs (226.i) über einen optischen Verstärker (225.i) verbunden ist, daß der zweite Ausgang jedes optischen Selektions-Steuerkopplers (221.i) über einen optischen Verstärker (223.i) an den Steuereingang eines optischen Selektionsschalters gleichen Rangs (224.i) und der zweite Ausgang jedes optischen Verteil-Steuerkopplers (321.i) über einen optischen Verstärker (323.i) an den Steuereingang eines optischen Verteilschalters (324.i) gleichen Rangs angeschlossen ist.

14. Optisches Nachrichtensystem nach Anspruch 5, dadurch gekennzeichnet, daß die Steuerschaltung (CC) aufweist:

. eine Schaltung zur Erzeugung von Befehlen, die einerseits optisch mit der Abfrageschaltung (LS), dem Verteiler (CD) und dem Synchronisationsgenerator (CKU) über die erste Synchronisationsverbindung (H1) und andererseits mit dem Steuermittel (CPU) über die Steuerverbindung (CB) verbunden ist,

. und einen Steuerbefehlsgenerator, der einerseits optisch an die Abfrageschaltung (LS) über die erste Verbindung und an den Verteiler (CD) über die zweite Verbindung sowie andererseits an das Steuermittel (CPU) über die Steuerverbindung (CB) angeschlossen ist.

15. Optisches Nachrichtensystem nach Anspruch 14, dadurch gekennzeichnet,

- daß die Schaltung zur Befehlserzeugung einen optischen Generator (421) zur Erzeugung kalibrierter Impulse enthält, der einen optisch an die erste Synchronisationsverbindung (H1) angeschlossenen Eingang und einen an einen Eingang eines optischen Kopplers (422) angeschlossenen Ausgang aufweist, wobei der Koppler mit einem ersten Ausgang an einen ersten Eingang eines ersten optischen Schalters (423.1) und mit einem zweiten Ausgang über eine erste optische Verzögerungsleitung (424) an einen ersten Eingang eines zweiten optischen Schalters (423.2) angeschlossen ist,

- daß der erste und der zweite optische Schalter je einen Steuereingang besitzen, der an die Steuerverbindung (CB) angeschlossen ist,

- daß der erste optische Schalter (423.1) mit einem zweiten Eingang optisch über eine zweite Verzögerungsleitung (426.1) an die Abfrageschaltung (LS) und mit einem Ausgang optisch über eine dritte Verzögerungsleitung (425.1) an die Abfrageschaltung (LS) angeschlossen ist,

- und daß der zweite optische Schalter (423.2) mit einem zweiten Eingang über eine vierte optische Verzögerungsleitung (426.2) an den Verteiler (CD) und mit einem Ausgang über eine fünfte optische Verzögerungsleitung (425.2) an den Verteiler (CD) angeschlossen ist.

16. Optisches Nachrichtensystem nach Anspruch 14, dadurch gekennzeichnet, daß die Schaltung zur Befehlserzeugung einen optischen Generator (421) für kalibrierte Impulse enthält, der optisch eingangsseitig an die erste Synchronisationsverbindung (H1) und ausgangsseitig an einen ersten Eingang eines optischen Schalters (423) angeschlossen ist, wobei der Schalter mit einem zweiten Eingang über eine optische Verzögerungsleitung (426) an die Abfrageschaltung (LS), mit einem Ausgang optisch über eine optische Verzögerungsleitung (425) an die Abfrageschaltung (LS) und mit einem Steuereingang an die Steuerverbindung (CB) angeschlossen ist.

17. Optisches Nachrichtensystem nach Anspruch 14, dadurch gekennzeichnet, daß der Steuerbefehlsgenerator aufweist:
   . einen spektralen Demultiplexer (44), dessen Eingang optisch über die erste Verbindung an die Abfrageschaltung (LS) angeschlossen ist und der f Ausgänge besitzt,
   . f elementare Steuerbefehlsgeneratoren (45.1 bis 45.f),
   . ein Überwachungsorgan (49) mit f Ausgängen und einem an die Steuerverbindung (CB) angeschlossenen Eingang,
   . eine Synchronisationsschaltung (48) mit einem Eingang und f Ausgängen,
   . einen optischen Koppler (46) mit f Eingängen und einem Ausgang, der an einen Eingang eines optischen Ausgangskopplers (47) mit einem ersten Ausgang, der optisch über eine Verzögerungsleitung (42) an die zweite Verbindung angeschlossen ist, und mit einem zweiten Ausgang angeschlossen ist, der optisch an den Eingang der Synchronisationsschaltung (48) angeschlossen ist,
   und daß jeder Elementargenerator (45.i) einen ersten Eingang, der optisch an einen Ausgang des spektralen Demultiplexers (44) angeschlossen ist, einen zweiten Eingang, der an einen Ausgang des Überwachungsorgans (49) angeschlossen ist, einen dritten Eingang, der an einen Ausgang der Synchronisationsschaltung (48) angeschlossen ist, und einen Ausgang besitzt, der an einen Eingang des optischen Kopplers (46) angeschlossen ist, wobei jeder Elementargenerator (45.i) optische Steuerbefehle für die Zeitschalter mit kontrollierter Laufzeit (TSU) liefert und jeder Steuerbefehl auf der zweiten Verbindung mit einer Frequenz (Fbi) aus der zweiten Einheit optischer Frequenzen (Fb) ausgesendet wird, die für eine Verzögerungszeit in demjenigen Zeitschalter (TSU) charakteristisch ist, für den der Befehl bestimmt ist.

18. Optisches Nachrichtensystem nach Anspruch 17, dadurch gekennzeichnet, daß jeder Elementargenerator (45.i) aufweist: einen optischen Koppler (2) mit einem an den ersten Eingang (450) des Elementargenerators angeschlossenen Eingang und mit einem ersten und einem zweiten Ausgang, einen optischen Unterbrecher (3) mit einem an den ersten Ausgang des Kopplers angeschlossenen Eingang, eine optische Quelle (4) mit einem Anregungseingang (4a), der an den Ausgang des optischen Unterbrechers angeschlossen ist, und mit einem Ausgang (4b), der den Ausgang (451.i) des Elementargenerators bildet, einen optischen Detektor (7) mit einem Eingang, der über eine Verzögerungsleitung (5) an den zweiten Ausgang des optischen Kopplers (2) angeschlossen ist, einen Zähler (8), dessen Ausgang an einen ersten Eingang einer Schaltung zur Erzeugung eines Abstimmungssignals (6) angeschlossen ist, die ihrerseits ausgangsseitig an einen Steuereingang führt, der den dritten Eingang (452) des Elementargenerators bildet, wobei der Zähler (8) einen ersten einerseits an den Ausgang des optischen Verstärkers (7) und andererseits an einen ersten Zugang (4531) angeschlossenen Eingang, einen zweiten an einen zweiten Zugang (4532) angeschlossenen Eingang und einen dritten an einen dritten Zugang (4533) angeschlossenen Eingang besitzt und der optische Unterbrecher (3) mit einem Steuereingang an einen vierten Zugang (4534) angeschlossen ist, wobei die vier Zugänge den zweiten Eingang des Elementargenerators bilden, der mit dem Überwachungsorgan (49) verbunden ist.

19. Optisches Nachrichtensystem nach Anspruch 17, dadurch gekennzeichnet, daß der spektrale Demultiplexer (44) einen passiven Verteiler (42) und f abstimmbare optische Filter (444.i) aufweist, die je einer Abstimmschaltung (445.i) zugeordnet sind, und daß der passive Verteiler mit einem Eingang optisch an die Abfrageschaltung (LS) angeschlossen ist und f Ausgänge besitzt, die je optisch mit einem abstimmbaren optischen Filter verbunden sind, das seinerseits ausgangsseitig an einen Elementargenerator (45.i) angeschlossen ist.

20. Optisches Nachrichtensystem nach Anspruch 4, dadurch gekennzeichnet, daß
   - jeder optische Zeitschalter (TSU) mit kontrollierter Laufzeit aus einer ersten und einer zweiten optischen Verzögerungsleitung mit mehreren identischen Abgriffen und aus k optischen Anschlußpunkten (55.1 bis 55.k) mit optischer Steuerung gebildet wird, die je einen ersten und einen zweiten Eingang und einen Ausgang besitzen,
   - daß jede optische Verzögerungsleitung mit Mehrfachabgriff aus k identischen optischen Kopplern (53.1 bis 53.k; 56.1 bis 56.k) in Reihe mit k-1 identischen optischen Verzögerungsleitungen (54.1 bis 54.(k-1); 57.1 bis 57.(k-1)) besteht, wobei jeder optische Koppler mit einem ersten Ausgang über eine optische Verzögerungsleitung mit einem Eingang eines nächstfolgenden optischen Kopplers verbunden ist, mit Ausnahme eines letzten optischen Kopplers, dessen erster Ausgang nicht verwendet ist,
- daß ein erster optischer Koppler (53.1) der ersten verzögerungsleitung mit Mehrfachabgriff mit seinem Eingang optisch an einen Ausgang der Abfrageschaltung (LS) angeschlossen ist, von der er die Kanäle einer Sendeverbindung empfängt, die optisch an den Eingang der Abfrageschaltung angeschlossen ist,
- daß ein erster optischer Koppler (56.1) der zweiten Verzögerungsleitung mit Mehrfachabgriff mit seinem Eingang optisch an den Ausgang des Verteilers (CD) angeschlossen ist, von dem er für jeden Kanal einer Sendeverbindung einen Steuerbefehl empfängt, der aus einem optischen Signal mit einer optischen Frequenz (Fbi) aus der zweiten Einheit von optischen Frequenzen (Fb) besteht, wobei diese optische Frequenz für eine Verzögerungszeit in der ersten Verzögerungsleitung charakteristisch ist,
- daß jeder optische Koppler der ersten Verzögerungsleitung mit Mehrfachabgriff einen zweiten Ausgang besitzt, der an den ersten Eingang eines optischen Anschlußpunkts angeschlossen ist,
- daß jeder optische Koppler der zweiten Verzögerungsleitung mit Mehrfachabgriff einen zweiten Ausgang besitzt, der mit dem zweiten Eingang eines optischen Anschlußpunkts verbunden ist, wobei dieser zweite Eingang einen Steuereingang für den optischen Anschlußpunkt bildet und jeder optische Anschlußpunkt von einem Steuerbefehl gesteuert wird, der von einem optischen Signal mit einer optischen Frequenz entsprechend einer Betriebsfrequenz des Anschlußpunkts getragen wird,
- und daß der Ausgang jedes optischen Anschlußpunkts einen optischen Ausgang des Zeitschalters (TSU) bildet.

21. Optisches Nachrichtensystem nach Anspruch 20, dadurch gekennzeichnet, daß jeder Ausgang eines optischen Anschlußpunkts optisch mit einem Eingang des optischen Diffusors (OD) verbunden ist.

22. Optisches Nachrichtensystem nach Anspruch 20, dadurch gekennzeichnet, daß die Ausgänge der k optischen Anschlußpunkte an den Eingang eines optischen Kopplers (58) mit k Eingängen und einem Ausgang angeschlossen sind und daß jeder dieser Ausgänge optisch an einen Eingang des optischen Diffusors (OD) angeschlossen ist.

23. Optisches Nachrichtensystem nach Anspruch 20, dadurch gekennzeichnet,
- daß jeder Zeitschalter (TSU) weiter k optische Ausgangskoppler (58.1 bis 58.k) enthält, die je einen ersten und einen zweiten Eingang sowie einen Ausgang besitzen,
- daß die optischen Ausgangskoppler durch Verbindung des Ausgangs je eines von ihnen mit dem zweiten Eingang des nächstfolgenden in Reihe geschaltet sind, mit Ausnahme eines letzten optischen Ausgangskopplers, dessen Ausgang optisch mit dem Eingang des optischen Diffusors (OD) verbunden ist, und eines ersten optischen Ausgangskopplers, dessen zweiter Eingang nicht verwendet ist,
- und daß jeder optische Ausgangskoppler mit seinem ersten Eingang an den Ausgang eines optischen Anschlußpunkts angeschlossen ist.

24. Optisches Nachrichtensystem nach Anspruch 20, dadurch gekennzeichnet, daß jeder optische Anschlußpunkt (55.1) besteht aus:
. einem optischen Verstärker (OA) mit einem Eingang, einem Ausgang und einem Steuereingang,
. einem optoelektronischen Detektor (D) mit einem an den Steuereingang angeschlossenen Ausgang und einem Eingang,
. und einem abstimmbaren optischen Filter (OF) mit einem optischen Eingang, der den zweiten Eingang des optischen Anschlußpunkts bildet, und einem an den Eingang des optoelektronischen Detektors (D) angeschlossenen Ausgang, und daß der Eingang und der Ausgang des optischen Verstärkers (OA) den ersten optischen Eingang bzw. den Ausgang des optischen Anschlußpunkts bilden.

25. Optisches Nachrichtensystem nach Anspruch 1, dadurch gekennzeichnet, daß die spektral-zeitliche Vermittlungsvorrichtung (SSTSN) aufweist:
. eine optische Abfrageschaltung (LS), die optisch an die optischen Endgeräte-Sendeverbindungen (UEL1 bis UELp) und an die optischen Signalisations-Sendeverbindungen (SEL) angeschlossen ist, wobei die optischen Sendeverbindungen (UEL, SEL) je ein spektral-zeitliches Sendemultiplexsystem übertragen, das aus je eine optische Informationstastprobe enthaltenden Kanälen besteht,
. einen optischen Steuerbefehlsverteiler (CD),

. eine Steuerschaltung (CC), die einerseits optisch an die optische Abfrageschaltung (LS) über eine erste optische Verbindung, die ein spektral-zeitliches Zielmultiplexsystem (OLM) mit ebensovielen Kanälen überträgt, wie es Sendeverbindungen gibt, an den optischen Verteiler (CD) über eine zweite optische Verbindung, die ein spektral-zeitliches Steuerbefehls-Multiplexsystem (CLM) über eine Anzahl von Kanälen überträgt, die der des Zielmultiplexsystems gleicht, wobei jeder Steuerbefehls-Multiplexkanal in zeitlicher Phase mit einem Kanal gleichen Rangs des Zielmultiplexsystems liegt und einen Steuerbefehl überträgt, und an den Synchronisationsgenerator (CKU) über die erste Synchronisationsverbindung (H1) sowie andererseits an das Steuermittel (CPU) über die Steuerverbindung (CB) angeschlossen ist,

. optische Zeitschaltmittel mit Laufzeitsteuerung, die aufweisen:

..n Eingangsschaltungen (DUIC.1 bis DUIC.n), die je optisch an einen Ausgang der optischen Abfrageschaltung (LS) und an einen Ausgang des optischen Verteilers (CD) für die Steuerbefehle angeschlossen sind,

..und eine Ausgangsvorrichtung (DUOC), die optisch eingangsseitig an die Eingangsschaltungen (DUIC.1 bis DUIC.n) angeschlossen ist,

. einen optischen Diffusor (OD), der optisch an den Ausgang der Ausgangsvorrichtung (DUOC) und an die optischen Konfigurations-Sendeverbindungen (CEL) angeschlossen ist und dessen Ausgänge optisch je an den Eingang eines optischen Filters (WF1 bis WFs) führen,

. s optische Filter (WF1 bis WFs), die je optisch ausgangsseitig an eine der optischen Endgeräte-Empfangsverbindungen (URL1 bis URLq), der optischen Signalisations-Empfangsverbindungen (SRL) und der optischen Konfigurations-Empfangsverbindungen (CRL) angeschlossen sind,

. eine Filterkonfigurationsschaltung (FCC), die eingangsseitig an die Steuerverbindung CB) und ausgangsseitig an einen Steuereingang jedes optischen Filters (WF1 bis WFs) angeschlossen ist.

26. Optisches Nachrichtensystem nach Anspruch 25, dadurch gekennzeichnet,

- daß das Zielmultiplexsystem (OLM) aus der Tastung der Kanäle besteht, die in einem gegebenen Augenblick am Eingang der Abfrageschaltung (LS) auf jeder der Sendeverbindungen (UEL und SEL) vorliegen,

- daß jeder Kanal des Steuerbefehls-Multiplexsystems (CLM) mit gleichem Rang wie eine Sendeverbindung einen Steuerbefehl überträgt, der aus einem optischen Signal mit einer optischen Frequenz (Fbi) aus einer zweiten Einheit von optischen Frequenzen (Fb) besteht, wobei jede dieser optischen Frequenzen charakteristisch für eine tatsächliche Zeitverzögerung ist, die die auf der Sendeverbindung übermittelte Nachricht in den optischen Zeitschaltmitteln (MTSU) erfahren soll, wobei diese optische Frequenz (Fbi) durch die Steuerschaltung (CC) bestimmt wird;

- und daß der optische Verteiler (CD) jeder Eingangsschaltung (DUIC) entsprechend dem Rang eines Kanals des Befehls-Steuermultiplexsystems (CLM) den auf diesem Kanal des Befehls-Steuermultiplexsystems übertragenen Befehl liefert.

27. Optisches Nachrichtensystem nach Anspruch 25, dadurch gekennzeichnet,

- daß jede Eingangsschaltung (DUIC.1 bis DUIC.n) aus einer optischen Vorrichtung zur optischen Diffusion, aus k optischen Anschlußpunkten (74.1 bis 74.k) mit optischer Steuerung und aus einem spektralen Demultiplexer (72) besteht, wobei die optische Vorrichtung zur optischen Diffusion einen mit dem Ausgang der Abfrageschaltung (LS) verbundenen Eingang und k Ausgänge besitzt,

- daß jeder optische Anschlußpunkt (74.i) einen mit dem Ausgang gleichen Rangs der optischen Vorrichtung zur optischen Diffusion verbundenen Eingang, einen an den Eingang der Ausgangsvorrichtung (DUOC) angeschlossenen Ausgang und einen Steuereingang besitzt,

- und daß der spektrale Demultiplexer (72) einen Eingang (70.2), der mit einem Ausgang des Verteilers (CD) verbunden ist, und k Ausgänge (721.1 bis 721.k) besitzt, die mit den Steuereingängen der k optischen Anschlußpunkte verbunden sind.

28. Optisches Nachrichtensystem nach Anspruch 27, dadurch gekennzeichnet, daß die optische Vorrichtung zur optischen Verteilung aus k optischen Kopplern (73.1 bis 73.k) in Reihe besteht, wobei jeder optische Koppler einen Eingang, einen ersten und einen zweiten Ausgang besitzt und der zweite Ausgang jedes Kopplers an den Eingang eines Anschluß angeschlossen ist, und daß die Koppler in Reihe geschaltet sind, indem der Eingang eines von ihnen an den ersten Ausgang des nächstfolgenden angeschlossen ist, mit Ausnahme des letzten Kopplers (73.k), dessen Eingang mit einem Ausgang der Abfrageschaltung (LS) verbunden ist.

29. Optisches Nachrichtensystem nach Anspruch 27, dadurch gekennzeichnet, daß die optische Vorrichtung zur optischen Diffusion von einem optischen Koppler (75) mit einem an einen Ausgang der Abfrageschaltung (LS) angeschlossenen Eingang (750) und k je an einen Eingang eines Anschluß angeschlossenen Ausgängen (751.1 bis 751.k) gebildet wird.

30. Optisches Nachrichtensystem nach Anspruch 27, dadurch gekennzeichnet,
    - daß die Ausgangsvorrichtung (DUOC) aus n optischen Verzögerungsleitungen mit Mehrfacheingang besteht,
    - daß jede optische Verzögerungsleitung mit Mehrfacheingang einer Eingangsschaltung zugeordnet ist und aus k-1 identischen optischen Kopplern (82.1 bis 82.(k-1)) in Reihe mit k-1 identischen Verzögerungsleitungen (83.1 bis 83.(k-1)) sowie aus einem optischen Verstärker (84) mit einem Eingang und einem Ausgang besteht, wobei jeder optische Koppler (82.i) mit einem ersten Eingang über eine Verzögerungsleitung (83.i) an einen Ausgang des nächstfolgenden optischen Kopplers angeschlossen ist, mit Ausnahme des letzten Kopplers (82.(k-1)), dessen erster Eingang über eine Verzögerungsleitung (83.(k-1)) an einen Ausgang eines Anschlußpunkts angeschlossen ist, und mit Ausnahme eines ersten Kopplers (83.1), dessen Ausgang an den Eingang des optischen Verstärkers (84) angeschlossen ist, dessen Ausgang am Eingang des optischen Verteilers (OD) liegt,
    - und daß jeder Koppler mit einem zweiten Eingang an den Ausgang eines Anschlußpunkts angeschlossen ist.

31. Optisches Nachrichtensystem nach Anspruch 27, dadurch gekennzeichnet,
    - daß die Ausgangsvorrichtung (DUOC) aus einer optischen Verzögerungsleitung mit Mehrfacheingang und aus k optischen Kombinationsgliedern (91.1 bis 91.k) mit n Eingängen und einem Ausgang besteht,
    - daß die optische Verzögerungsleitung mit Mehrfacheingang aus k-1 identischen optischen Kopplern (82.1 bis 82.(k-1)) in Reihe mit k-1 identischen Verzögerungsleitungen (83.1 bis 83.(k-1)) und aus einem optischen Verstärker (84) besteht, wobei jeder optische Koppler (82.i) mit einem ersten Eingang über eine Verzögerungsleitung (83.i) an einen Ausgang des nächstfolgenden optischen Kopplers angeschlossen ist, mit Ausnahme des letzten Kopplers (82.(k-1)), dessen erster Eingang über eine Verzögerungsleitung (83.(k-1)) an den Ausgang eines letzten optischen Kombinationsglieds (91.k) angeschlossen ist, und eines ersten Kopplers (82.1), dessen Ausgang an den Eingang des optischen Verstärkers (84) angeschlossen ist, dessen Ausgang zum Eingang des optischen Diffusors (OD) führt,
    - daß jeder Koppler mit einem zweiten Eingang an einen Ausgang eines optischen Kombinationsorgans gleichen Rangs angeschlossen ist,
    - und daß jedes optische Kombinationsglied (91.i) eingangsseitig an einen Ausgang eines Anschlußpunkts gleichen Rangs (74.i) jeder der Eingangsschaltungen (DUIC.1 bis DUIC.n) angeschlossen ist.

32. Optisches Nachrichtensystem nach Anspruch 27, dadurch gekennzeichnet,
    - daß die Ausgangsvorrichtung (DUOC) aus n optischen Verzögerungsschaltungen mit Mehrfacheingang besteht,
    - und daß jede optische Verzögerungsschaltung mit Mehrfacheingang einer Eingangsschaltung zugeordnet ist und aus k unterschiedlichen optischen Verzögerungsleitungen (85.1 bis 85.k) besteht, die je eine Verzögerung bewirken, deren Wert von ihrem Rang abhängt, wobei k optische Verstärker (84.1 bis 84.k) je einen Eingang und einen Ausgang besitzen und jede optische Verzögerungsleitung (85.i) einen mit dem Ausgang eines Anschlußpunkts verbundenen Eingang und einen mit dem Eingang eines optischen Verstärkers (84) verbundenen Ausgang besitzt und wobei der Ausgang dieses Verstärkers an den optischen Diffusor (OD) führt.

33. Optisches Nachrichtensystem nach Anspruch 27, dadurch gekennzeichnet,
    - daß die Ausgangsvorrichtung (DUOC) aus einer optischen Verzögerungsschaltung mit Mehrfacheingang und aus k optischen Kombinationsgliedern (91.1 bis 91.k) mit je n Eingängen und einem Ausgang besteht,
    - daß die optische Verzögerungsschaltung mit Mehrfacheingang aus k unterschiedlichen optischen Verzögerungsleitungen (85.1 bis 85.k), die je eine Verzögerung abhängig von ihrem Rang bewirken, und aus k optischen Verstärkern (84.1 bis 84.k) mit je einem Eingang und einem Ausgang besteht, wobei jede optische Verzögerungsleitung (85.i) mit einem Eingang an den Ausgang eines optischen Kombinationsglieds gleichen Rangs (91.i) und mit einem Ausgang an einen Eingang eines optischen Verstärkers (84.i) angeschlossen ist, dessen Ausgang an den Eingang des optischen Verteilers (OD) führt,

- und daß jedes optische Kombinationsglied (91.i) eingangsseitig mit dem Ausgang eines Anschlußpunkts gleichen Rangs (74.i) jeder der Eingangsschaltungen (DUIC.1 bis DUIC.n) verbunden ist.

## Claims

1. Asynchronous time-division multiplex optical communication system comprising: a switching network (SN), $q$ user receiver circuits (UR1 through URq) connected by at most $q$ optical user receiver lines (URL1 through URLq) to the switching network, $p$ user transmitter circuits (UE1 through UEp) each connected to the switching network by an optical user transmitter line (UEL1 through UELp), said user transmitter circuits and user receiver circuits being divided between: $x$ remote communication terminals each having a user transmitter circuit and a user receiver circuit, $y$ transmit terminals each having a user transmitter circuit, $z$ receive terminals each having a user receiver circuit;

   the switching network (SN) comprising:
   . an optical spectro-time-division switching network (SSTSN) connected optically to the optical transmitter lines and to the optical receiver lines;
   . a control processor unit (CPU);
   . and a clock unit (CKU);
      characterised in that each user receiver circuit comprises:
   . at least one optical control receiver tuned to an optical frequency (Fa1i) from a first group (Fa1) of optical frequencies of a first set (Fa) of optical frequencies;
   . an optical transmission receiver which can be tuned to any optical frequency of a second group (Fa2) of optical frequencies of said first set (Fa) of optical frequencies;
   . optical frequency tuning means for said optical transmission receiver;
   . and means for temporal synchronisation of the received information;
      in that each user transmitter circuit comprises:
   . an optical transmission transmitter that can be tuned to any optical frequency of said second group (Fa2) of optical frequencies;
   . optical frequency tuning means for said optical transmitter;
   . and temporal synchronisation and phase alignment means for the information to be transmitted;
      in that the control processor unit (CPU) comprises:
   . at least one control transmitter circuit (CE) having an optical control transmitter tuned to an optical frequency (Fa1i) of said first group (Fa1) of optical frequencies;
   . at least one signalling transmitter (SE) having an optical transmission transmitter that can be tuned to any optical frequency of said second group (Fa2) of optical frequencies;
   . at least one control receiver circuit (CR) and at least one signalling receiver (SR) each having at least one optical control receiver tuned to an optical frequency (Fa1i) of said first group (Fa1) of optical frequencies and an optical transmission receiver which can be tuned to any optical frequency of said second group (Fa2) of optical frequencies;
      in that said control processor unit (CPU) is connected to the spectro-time-division switching network (SSTSN) by:
   . a control bus (CB);
   . at least one optical control transmitter line (CEL), each of which is connected optically to the optical control transmitter of a control transmitter circuit (CE);
   . at least one optical control receiver line (CRL), each of which is connected optically to the optical control and transmission receivers of a control receiver circuit (CR);
   . and at least one optical signalling transmitter line (SEL), each of which is connected optically to the optical transmitter of a signalling transmitter (SE);
   . at least one optical signalling receiver line (SRL), each of which is connected optically to the optical control and transmission receivers of a signalling receiver (SR);
      and in that the clock unit (CKU) is connected by a first synchronisation line (H1) to the switching network (SSTSN) and by a second synchronisation line (H2) to the control processor unit (CPU).

2. Optical communication system according to claim 1 characterised in that each control transmitter circuit (CE) transmits on its control transmitter line (CEL) a control transmitter multiplex (CEM) distributed by the switching network (SSTSN) to each of the optical control receiver lines (CRL), signalling receiver lines (SRL) and user receiver lines (URL);

in that each control transmitter multiplex has an optical carrier frequency from the first group (Fa1) of optical frequencies of the first set (Fa) of optical frequencies;

in that an optical frequency of the second group (Fa2) of optical frequencies of said first set (Fa) of optical frequencies is allocated dynamically by said control processor unit (CPU) to each active transmission receiver of the control receiver (CR), signalling receiver (SR) and user receiver (UR) circuits; each user transmitter circuit (UE) and signalling transmitter (SE) communicating with any active transmission receiver by transmitting a message in the form of a series of optical samples encoded at the optical frequency allocated to said active transmission receiver; said optical samples being transmitted by each user transmitter circuit (UE) in a user transmitter multiplex (UEM) on its user transmitter line (UEL) and by each signalling transmitter (SE) in a signalling transmitter multiplex (SEM) on its signalling transmitter line (SEL);

in that each transmit spectro-time-division multiplex (UEM, SEM) comprises a frameless succession of time slots with the same duration (T) each carrying an optical sample at an optical frequency characterising the destination transmission receiver;

in that each optical sample is optically time-division switched by the spectro-time-division switching network (SSTSN) according to its optical carrier frequency; and is then optically switched to one of said receive optical lines, on which it is carried by a first free time slot of a receive time-division multiplex of said receiver line;

and in that each receive time-division multiplex (CRM, SRM, URM) comprises a succession of identical time slots with the same duration (T) each carrying one optical sample, the optical samples of the same receive time-division multiplex all having the same optical frequency.

3. Optical communication system according to claim 1 characterised in that it further comprises at least one broadcast server (BS), each server being connected optically to the switching network (SSTSN) by an optical broadcasting line (BL) connected in the server to at least one optical broadcast transmitter;

in that the user receiver circuits (UR) have at least one optical broadcast receiver, said optical broadcast receivers of a user receiver circuit being connected optically to the user receiver line (URL) connecting said terminal to the switching network (SSTSN);

in that said optical broadcast transmitters and optical broadcast receivers can be tuned to any optical frequency from a third group (Fa3) of optical frequencies of said first set (Fa) of optical frequencies;

and in that at least one optical frequency of said third group (Fa3) of optical frequencies is allocated to each broadcast transmitter, each broadcast transmitter transmitting, at said allocated frequency, a message broadcast by the switching network (SSTSN) on each of the user receiver lines (URL), each broadcast receiver receiving said message by tuning to said frequency allocated to the broadcast transmitter which transmitted it.

4. Optical communication system according to claim 1 characterised in that the spectro-time-division switching network (SSTSN) comprises:

. an optical line scanner (LS) connected optically to the optical user transmitter lines (UEL1 through UELp) and to the optical signalling transmitter lines (SEL), said optical transmitter lines (UEL, SEL) each carrying a transmit spectro-time-division multiplex comprising time slots each carrying an optical information sample;

. an optical command distributor (CD);

. a control circuit (CC) connected optically:

.. to the optical line scanner (LS) by a first optical line carrying an output label spectro-time-division multiplex (OLM) comprising as many time slots as there are transmitter lines;

.. to the optical command distributor (CD) by a second optical line carrying a control label spectro-time-division multiplex (CLM) having a number of time slots equal to that of said output label multiplex, each time slot of the control label multiplex being in phase temporally with a same ranked time slot of said output label multiplex and carrying a command;

.. and to the clock unit (CKU) by the first synchronisation line (H1);

and connected to the control processor unit (CPU) by a control bus (CB);

. n controlled propagation optical time-division switching units (TSU1 through TSUn) each connected optically to an output of the optical line scanner (LS) and to an output of the optical command distributor (CD);

. an optical distributor (OD) connected optically to the output of the time-division switching units (TSU) and to the optical control transmitter lines (CEL) and having outputs each connected optically to the input of an optical filter (WF1 through WFs);

49

. s optical wavelength filters (WF1 through WFs) each connected optically to the output of an optical user receiver line (URL1 through URLq), signalling receiver line (SRL), control receiver line (CRL);

. a filter control circuit (FCC) having an input connected to the control bus (CB) and an output connected to a control input of each optical wavelength filter (WF1 through WFs).

5. Optical communication system according to claim 4 characterised in that the output label multiplex (OLM) is obtained by sampling time slots present at the same time at the input of the line scanner (LS) on each of the transmitter lines (UEL and SEL);

in that each time slot of the control label multiplex (CLM) having the same rank as a transmitter line carries a command comprising an optical signal at an optical frequency (Fbi) from a second set (Fb) of optical frequencies in which each optical frequency characterises a real time propagation delay to be applied in a time-division switching unit (TSU) to the message carried by the time slot of said transmitter line; said optical frequency (Fbi) being determined by the control circuit (CC);

and in that the optical command distributor (CD) supplies to each time-division switching unit (TSU), corresponding to the rank of a time slot of the control label multiplex (CLM), the command carried by said time slot of the control label multiplex.

6. Optical communication system according to claim 4 characterised in that outputs of the optical distributor (OD) are connected optically to inputs of broadcast servers (BS) by optical broadcasting lines (BL).

7. Optical communication system according to claim 4 characterised in that the optical line scanner (LS) comprises an optical selector and a first control device;

and in that the optical selector comprises:

. n optical switches (224.1 through 224.n) in series, each having first and second inputs, an output and a control input;

. n optical couplers (226.1 through 226.n) each having an input and first and second outputs;

. and n identical optical delay lines (227.1 through 227.n);

in that the optical switches are connected in series by connecting the output of one to the first input of the next, the output of the last optical switch being connected optically to the control circuit (CC) by said first optical line;

in that the second input of each optical switch (224.i) is connected to the second output of the same ranked optical coupler (226.i);

in that each optical coupler (226.i) has its input connected to an input of the optical line scanner (LS) and its first output connected to the input of an optical delay line (227.i); the output of said delay line being connected optically to a controlled propagation time-division switching unit (TSU.i);

in that the first control device comprises n optical control couplers (221.1 through 221.n) each having: an input, first and second outputs and n - 1 optical control delay lines (222.1 through 222.n - 1);

in that the first output of each optical control coupler (221.i) except for the last is connected to the input of an optical control delay line (222.i); the output of said delay line being connected to the input of the next optical control coupler;

in that the input of a first optical control coupler and the first output of a last optical control coupler are connected optically to the control circuit (CC);

and in that the second output of each optical control coupler (221.i) is connected optically to the control input of a same ranked optical switch (224.i) of the optical selector.

8. Optical communication system according to claim 7 characterised in that the second input of each optical switch (224.i) is connected by an optical amplifier (225.i) to the second output of the same ranked optical coupler (226.i); and in that the second output of each optical control coupler (221.i) is connected optically by an optical amplifier (223.i) to the control input of a same ranked optical switch (224.i) of the optical selector.

9. Optical communication system according to claim 4 characterised in that the optical command distributor (CD) comprises a second control device and a distribution line;

in that the second control device comprises n optical control couplers (321.1 through 321.n) and n - 1 optical control delay lines (322.1 through 322.n - 1) each optical control coupler having an input and first and second outputs;

in that the first output of each optical control coupler (321.i) except the last is connected to the input of an optical control delay line (322.i) with its output connected to the input of the next optical coupler;

in that the input of a first optical control coupler and the first output of a final optical control coupler are connected to the control circuit (CC);

in that the distribution line comprises n optical switches (324.1 through 324.n) each having an input, first and second outputs and a control input, n optical amplifiers (325.1 through 325.n) with a hysteresis characteristic and n optical delay lines (326.1 through 326.n) each having a different length characterising the rank i of the delay line;

in that the optical switches are connected in series by connecting the first output of one to the input of the next, the input of a first optical switch being connected optically to the control circuit (CC) by said second optical line;

in that the second output of each optical switch (324.i) is connected by an optical amplifier (325.i) with a hysteresis characteristic to the input of an optical delay line (326.i) connected optically at the output to a controlled propagation time-division switching unit (TSU.i);

and in that the second output of each optical control coupler (321.i) of the second control device is connected to the control input of the same ranked optical switch (324.i) of the distribution line.

10. Optical communication system according to claim 9 characterised in that the second output of each optical control coupler (321.i) of the second control device is connected by an optical amplifier (323.i) to the control input of the same ranked optical switch (324.i) of the distribution line.

11. Optical communication system according to claim 4 characterised in that the optical line scanner (LS) and the optical command distributor (CD) have a common third control device;

in that the optical line scanner comprises an optical selector having:
    . n optical selector switches (224.1 through 224.n) in series, each having first and second inputs, an output and a control input;
    . n optical selector couplers (226.1 through 226.n) each having an input and first and second outputs;
    . and n identical optical selector delay lines (227.1 through 227.n);

in that the optical selector switches are connected in series by connecting the output of one to the first input of the next, the output of a final optical selector switch being connected optically to the control circuit (CC) by said first optical line;

in that the second input of each optical selector switch (224.i) is connected to the second output of the same ranked optical selector coupler (226.i);

in that each optical selector coupler (226.i) has its input connected to an input of the optical line scanner (LS) and its first output connected to the input of an optical selector delay line (227.i); the output of said delay line being connected to a controlled propagation optical time-division switching unit (TSU.i);

in that the distribution line comprises:
    . n optical distributor switches (324.1 through 324.n) each having an input, first and second outputs and a control input;
    . n optical amplifiers (325.1 through 325.n) with a hysteresis characteristic and n optical distributor delay lines (326.1 through 326.n) each having a different length characterising the rank i of the distribution delay line;

in that the optical distributor switches are connected in series by connecting the first output of one to the input of the next, the input of a first optical distributor switch being connected optically to the control circuit (CC) by said second optical line;

in that the second output of each optical distributor switch (324.i) is connected by an optical amplifier (325.i) with a hysteresis characteristic to the input of an optical distributor delay line (326.i), the output of said delay line being connected optically to a controlled propagation time-division switching unit (TSU.i);

in that the third control device comprises:
    . n optical selector control couplers (221.1 through 221.n);
    . n optical distributor control couplers (321.1 through 321.n);
    . n first optical delay lines (231.1 through 231.n);
    . and n-1 second optical delay lines (331.1 through 331.n - 1);
    each optical selector control coupler and each optical distributor control coupler having an input and first and second outputs;

in that the first output of an optical selector control coupler (221.i) is connected to one of the first optical delay lines (231.i) connected to the input of an optical distributor control coupler (321.i); a first output of said coupler being connected by one of the second optical delay lines (331.i) to the input of the next optical selector control coupler, except for the last optical distributor control coupler whose first output is connected optically to the control circuit (CC), the input of a first optical selector control coupler being connected optically to the control circuit;

in that the second output of each optical selector control coupler (221.i) is connected to the control input of a same ranked optical selector switch (224.i);

and in that the second output of each optical distributor control coupler (321.i) is connected to the control input of a same ranked optical distributor switch (324.i).

12. Optical communication system according to claim 4 characterised in that the optical line scanner (LS) and the optical command distributor (CD) have a common fourth control device;

in that the optical line scanner circuit comprises an optical selector having:

. $n$ optical selector switches (224.1 through 224.n) in series, each having first and second inputs, an output and a control input;

. $n$ optical selector couplers (226.1 through 226.n) each having an input and first and second outputs;

. and $n$ identical optical selector delay lines (227.1 through 227.n);

in that the optical selector switches are connected in series by connecting the output of one to the first input of the next, the output of a last optical selector switch being connected optically to the control circuit (CC) by said first optical line;

in that the second input of each optical selector switch (224.i) is connected to the second output of the same ranked optical selector coupler (226.i);

in that each optical selector coupler (226.i) has its input connected optically to an input of the optical line scanner (LS) and its first output connected to the input of an optical selector delay line (227.i); an output of said delay line being connected optically to a controlled propagation time-division switching unit (TSU.i);

in that the distribution line comprises:

. $n$ optical distributor switches (324.1 through 324.n) each having an input, first and second outputs and a control input;

. $n$ optical amplifiers (325.1 through 325.n) with a hysteresis characteristic and $n$ optical distributor delay lines (326.1 through 326.n) each having a different length characterising the rank $i$ of the optical distributor delay line;

in that the optical distributor switches are connected in series by connecting the first output of one to the input of the next, the input of the first optical distributor switch being connected optically to the control circuit (CC) by said second optical line;

in that the second output of each optical distributor switch (324.i) is connected by an optical amplifier (325.i) with a hysteresis characteristic to the input of an optical distributor delay line (326.i); the output of said delay line being connected optically to a controlled propagation time-division switching unit (TSU.i);

in that the fourth control device comprises:

. $n$ optical selector control couplers (221.1 through 221.n);

. $n$ optical distributor control couplers (321.1 through 321.n);

. $n$ optical control delay lines (231.1 through 231.n), each optical selector control coupler and each optical distributor control coupler having one input and first and second outputs;

in that the first output of an optical selector control coupler (221.i) is connected by an optical control delay line (231.i) to the input of an optical distributor control coupler (321.i) whose first output is connected to the input of the next optical selector control coupler, except for the last optical distributor control coupler whose first output is connected optically to the control circuit (CC), the input of a first optical selector control coupler being connected optically to the control circuit;

in that the second output of each optical selector control coupler (221.i) is connected to the control input of a same ranked optical selector switch (224.i);

and in that the second output of each optical distributor control coupler (321.i) is connected to the control input of a same ranked optical distributor switch (324.i).

13. Optical communication system according to claim 11 or claim 12 characterised in that the second input of each optical selector switch (224.i) is connected to the second output of the same ranked optical selector coupler (226.i) by an optical amplifier (225.i); in that the second output of each optical selector control coupler (221.i) is connected by an optical amplifier (223.i) to the control input of a same ranked optical selector switch (224.i); and in that the second output of each optical distributor control coupler (321.i) is connected by an optical amplifier (323.i) to the control input of a same ranked optical distributor switch (324.i).

14. Optical communication system according to claim 5 characterised in that the control circuit (CC) comprises:

. a command generator connected optically to the line scanner (LS), to the command distributor (CD) and to the clock unit (CKU) by the first synchronisation line (H1) and to the control processor unit (CPU) by the control bus (CB);

. and a control label multiplex generator connected optically to the line scanner (LS) by the first line and to the command distributor (CD) by the second line and to the control processor unit (CPU) by the control bus (CB).

**15.** Optical communication system according to claim 14 characterised in that the command generator comprises an optical calibrated pulse generator (421) having: an input connected optically to the first synchronisation line (H1) and an output connected to an input of an optical coupler (422); said coupler having a first output connected to a first input of a first optical switch (423.1) and a second output connected by a first optical delay line (424) to a first input of a second optical switch (423.2);

in that the first and second optical switches each have a control input connected to said control bus (CB);

in that the first optical switch (423.1) has a second input connected optically by a second optical delay line (426.1) to the line scanner (LS) and an output connected optically by a third optical delay line (425.1) to the line scanner (LS);

and in that the second optical switch (423.2) has a second input connected by a fourth optical delay line (426.2) to the command distributor (CD) and an output connected by a fifth optical delay line (425.2) to the command distributor (CD).

**16.** Optical communication system according to claim 14 characterised in that the command generator comprises an optical calibrated pulse generator (421) connected optically at its input to the first synchronisation line (H1) and at its output to a first input of an optical switch (423); said switch having: a second input connected by an optical delay line (426) to the line scanner (LS), an output connected optically by another optical delay line (425) to the line scanner (LS) and a control input connected to said control bus (CB).

**17.** Optical communication system according to claim 14 characterised in that the control label multiplex generator comprises:
. a spectral demultiplexer (44) having an input connected optically to the line scanner (LS) by the first line and $f$ outputs;
. $f$ command generators (45.1 through 45.f);
. a supervisor (49) having $f$ outputs and an input connected to the control bus (CB);
. a synchronisation circuit (48) having an input and $f$ outputs;
. an optical coupler (46) having $f$ inputs and an output connected to an input of an output optical coupler (47) having: a first output connected optically by a delay line (42) to the second line and a second output connected optically to the input of the synchronisation circuit (48);

and in that each generator (45.i) has: a first input connected optically to an output of the spectral demultiplexer (44), a second input connected to an output of the supervisor (49), a third input connected to an output of the synchronisation circuit (48), and an output connected to an input of the optical coupler (46); each generator (45.i) delivering optical commands for the controlled propagation time-division switching units (TSU); each command being transmitted on the second line at an optical frequency (Fbi) of said second set (Fb) of optical frequencies; said optical frequency characterising a propagation time in the time-division switching unit (TSU) to which the command is addressed.

**18.** Optical communication system according to claim 17 characterised in that each generator (45.i) comprises: an optical coupler (2) having an input connected to the first input (450) of the generator and first and second outputs; an optical switch (3) having an input connected to the first output of the coupler; an optical source (4) having an excitation input (4a) connected to the output of the optical switch and having an output (4b) which constitutes the output (451.i) of the generator; an optical detector (7) having an input connected by an optical delay line (5) to the second output of the optical coupler (2); a counter (8) having an output connected to a first input of a tuning signal generator (6) having its output connected to a control input constituting the third input (452) of the generator; said counter (8) having: a first input connected to the output of the optical detector (7) and to a first port (4531), a second input connected to a second port (4532), and a third input connected to a third port (4533); said optical switch (3) having a control input connected to a fourth port (4534); said first, second, third and fourth ports constituting the second input of the generator connected to the supervisor (49).

**19.** Optical communication system according to claim 17 characterised in that the spectral demultiplexer (44) comprises a passive distributor (42) and $f$ tuneable optical filters (444.i) each associated with a tuning circuit (445.i), and in that the passive distributor has an input connected optically to the line scanner (LS) and $f$ outputs each connected optically to a tuneable optical filter connected optically at its output to a generator (45.i).

**20.** Optical communication system according to claim 4 characterised in that each controlled propagation optical time-division switching unit (TSU) comprises identical first and second multiple input optical delay lines and $k$ optically controlled optical crosspoints (55.1 through 55.k) each having first and second inputs and an output;

in that each optical multiple input delay line comprises k identical optical couplers (53.1 through 53.k; 56.1 through 56.k) in series with k - 1 identical optical delay lines (54.1 through 54.(k - 1); 57.1 through 57.(k - 1)), each optical coupler having a first output connected by an optical delay line to an input of the next optical coupler, except for the last optical coupler whose first output is not used;

in that a first optical coupler (53.1) of the first multiple input delay line has its input connected optically to an output of the line scanner (LS) from which it receives the time slots of a transmitter line connected optically to the input of said line scanner circuit;

in that a first optical coupler (56.1) of the second multiple input delay line has its input connected optically to an output of the command distributor (CD) from which it receives, for each time slot of a transmitter line, a command in the form of an optical signal at an optical frequency (Fbi) from a second set (Fb) of optical frequencies, said optical frequency characterising a propagation time in said first delay line;

in that each optical coupler of the first multiple input delay line has a second output connected to the first input of an optical crosspoint;

in that each optical coupler of the second multiple input delay line has a second output connected to the second input of an optical crosspoint, said second input being a control input of the optical crosspoint, each optical crosspoint being controlled by a command carried by an optical signal at an optical frequency corresponding to an operating frequency of said crosspoint;

and in that the output of each optical crosspoint constitutes an optical output of the time-division switching unit (TSU).

21. Optical communication system according to claim 20 characterised in that each output of an optical crosspoint is connected optically to an input of said optical distributor (OD).

22. Optical communication system according to claim 20 characterised in that the outputs of the k optical crosspoints are connected to inputs of an optical coupler (58) with k inputs and an output and in that said output is connected optically to an input of said optical distributor (OD).

23. Optical communication system according to claim 20 characterised in that each time-division switching unit (TSU) also comprises k output optical couplers (58.1 through 58.k) each having first and second inputs and an output;

in that said output optical couplers are connected in series by connecting the output of one to the second input of the next, except for a last output optical coupler whose output is connected optically to an input of said optical distributor (OD) and of a first output optical coupler whose second input is not used;

and in that each output optical coupler has its first input connected to the output of an optical crosspoint.

24. Optical communication system according to claim 20 characterised in that each optical crosspoint (55.i) comprises:

. an optical amplifier (OA) having an input, an output and a control input;

. an opto-electronic detector (D) having an output connected to said control input and an input;

. and a tuneable optical filter (OF) having an optical input which constitutes the second input of the optical crosspoint and an output connected to the input of said opto-electronic detector (D); and the input and the output of the optical amplifier (OA) constitute the optical first input and the optical first output of the optical crosspoint.

25. Optical communication system according to claim 1 characterised in that the spectro-time-division switching network (SSTSN) comprises:

. a line scanner (LS) connected optically to the optical user transmitter lines (UEL1 through UELp) and to the optical signalling transmitter lines (SEL), said optical transmitter lines (UEL, SEL) each carrying a transmit spectro-time-division multiplex comprising time slots each carrying an optical information sample;

. an optical command distributor (CD);

. a control circuit (CC) connected optically to the optical line scanner (LS) by a first optical line carrying an output label spectro-time-division multiplex (OLM) comprising as many time slots as there are transmitter lines; to the optical command distributor (CD) by a second optical line carrying a control label spectro-time-division multiplex (CLM) having the same number of time slots as said output label multiplex, each time slot of the control label multiplex being in phase with a same ranked time slot of said output label multiplex and carrying a command; and to the clock unit (CKU) by the first synchronisation line (H1); and further connected to the control processor unit (CPU) by the control bus (CB);

. controlled propagation optical multiple time-division switching units (MTSU) having:

..n delay unit input circuits (DUIC.1 through DUIC.n) each connected optically to an output of the line scanner (LS) and to an output of the optical command distributor (CD);

..and a delay unit output circuit (DUOC) connected optically at its input to the input circuits (DUIC.1 through DUIC.n);

. an optical distributor (OD) connected optically to the output of the delay unit output circuit (DUOC) and to the optical control transmitter lines (CEL) and having outputs each connected optically to the input of an optical filter (WF1 through WFs);

. s optical wavelength filters (WF1 through WFs) each connected optically at its output to one of the optical user receiver lines (URL1 through URLq), signalling receiver lines (SRL), control receiver lines (CRL);

. a filter control circuit (FCC) connected by its input to the control bus (CB) and by its output to a control input of each optical wavelength filter (WF1 through WFs).

26. Optical communication system according to claim 25 characterised in that the output label multiplex (OLM) is obtained by sampling time slots present at the same time at the input of the line scanner (LS) on each of the transmitter lines (UEL and SEL);

in that each time slot of the control label multiplex (CLM) having the same rank as a transmitter line carries a command comprising an optical signal at an optical frequency (Fbi) from a second set (Fb) of optical frequencies in which each optical frequency characterises a real time propagation delay to be applied in a multiple time-division switching unit (MTSU) to the message carried by the time slot of said transmitter line; said optical frequency (Fbi) being determined by the control circuit (CC);

and in that the optical distributor (CD) supplies to each delay unit input circuit (DUIC), corresponding to the rank of a time slot of the control label multiplex (CLM), the command carried by said time slot of the control label multiplex.

27. Optical communication system according to claim 25 characterised in that each delay unit input circuit (DUIC.1 through DUIC.n) comprises: an optical distributor, k optically controlled optical crosspoints (74.1 through 74.k) and a spectral demultiplexer (72); the optical distributor having an input connected to an output of the line scanner (LS) and k outputs;

in that each optical crosspoint (74.i) has: an input connected to the same ranked output of the optical distributor, an output connected to the input of the delay unit output circuit (DUOC) and a control input; and

in that the spectral demultiplexer (72) has an input (70.2) connected to an output of the command distributor (CD) and k outputs (721.1 through 721.k) connected to the control inputs of the k optical crosspoints.

28. Optical communication system according to claim 27 characterised in that the optical distributor comprises k optical couplers (73.1 through 73.k) in series, each optical coupler having an input and first and second outputs, the second output of each coupler being connected to the input of a crosspoint, the couplers being connected in series by connecting the input of one to the first output of the next except for the last coupler (73.k) whose input is connected to an output of the line scanner (LS).

29. Optical communication system according to claim 27 characterised in that the optical distributor comprises an optical coupler (75) having an input (750) connected to an output of the line scanner (LS) and k outputs (751.1 through 751.k) each connected to an input of a crosspoint.

30. Optical communication system according to claim 27 characterised in that the delay unit output circuit (DUOC) comprises n optical multiple input delay lines;

in that each optical multiple input delay line is associated with an input circuit and comprises k - 1 identical optical couplers (82.1 through 82.(k - 1)) in series with k - 1 identical delay lines (83.1 through 83.(k - 1)), and an optical amplifier (84) having an input and an output, each optical coupler (82.i) having a first input connected by a delay line (83.i) to an output of the next optical coupler except for the last coupler (82.(k - 1)) whose first input is connected by a delay line (83.(k - 1)) to an output of a crosspoint and except for the first coupler (83.1) whose output is connected to the input of the optical amplifier (84) whose output is connected to the input of the optical distributor (OD);

and in that each coupler has a second input connected to an output of a crosspoint.

31. Optical communication system according to claim 27 characterised in that the delay unit output circuit (DUOC) comprises an optical multiple input delay line and k optical combiners (91.1 through 91.k) having n inputs and an output;

in that said optical multiple input delay line

55

comprises k - 1 identical optical couplers (82.1 through 82.(k - 1)) in series with k - 1 identical delay lines (83.1 through 83.(k - 1)) and an optical amplifier (84); each optical coupler (83.i) having a first input connected by a delay line (83.i) to an output of the next optical coupler except for the last coupler (82.(k - 1)) whose first input is connected by a delay line (83.(k - 1)) to the output of the last optical combiner (91.k) and except for the first coupler (83.1) whose output is connected to the input of the optical amplifier (84) whose output is connected to the input of the optical distributor (OD);

in that each coupler has a second input connected to an output of a same ranked optical combiner;

and in that each optical combiner (91.i) is connected at its input to an output of a same ranked crosspoint (74.i) of each of the delay unit input circuits (DUIC.1 through DUIC.n).

32. Optical communication system according to claim 27 characterised in that the delay unit output circuit (DUOC) comprises $\underline{n}$ optical multiple input delay circuits;

and in that each optical multiple input delay circuit is associated with an input circuit and comprises $\underline{k}$ separate optical delay lines (85.1 through 85.k) each applying a delay whose value depends on its rank and $\underline{k}$ optical amplifiers (84.1 through 84.k) each having an input and an output; each optical delay line (85.i) having an input connected to an output of a crosspoint and an output connected to an input of an optical amplifier (84.i) whose output is connected to the input of the optical distributor (OD).

33. Optical communication system according to claim 27 characterised in that the delay unit output circuit (DUOC) comprises an optical multiple input delay circuit and $\underline{k}$ optical combiners (91.1 through 91.k) each having $\underline{n}$ inputs and an output;

in that said optical multiple input delay circuit comprises $\underline{k}$ further optical delay lines (85.1 through 85.k) each applying a delay whose value depends on its rank and $\underline{k}$ optical amplifiers (84.1 through 84.k) each having an input and an output; each optical delay line (85.i) having an input connected to the output of a same ranked optical combiner (91.i) and an output connected to an input of an optical amplifier (84.i) whose output is connected to the input of the optical distributor (OD);

and in that each optical combiner (91.i) is connected at its input to an output of a same ranked crosspoint (74.i) of each of the delay unit input circuits (DUIC.1 through DUIC.n).

FIG.1A

FIG. 1B

EP 0 421 325 B1

FIG. 2A

FIG. 2B

# FIG. 3.A

FIG. 3.B

FIG. 4A

FIG. 4B

410

430

43

431

440

441.1

45.1

44

441.2

441.f

45.2

46

460.1

460.2

460.f

480

481.1

481.2

45.f

450.f

451.f

453.f

452.f

481.f

48

49.1

49.2

49.f

49

490

411

42

47

461

FIG. 4C

442

440

443.1

444.1

445.1

446.1

441.1

443.f

444.f

445.f

446.f

441.f

FIG. 4D

FIG. 5A

FIG. 5B

FIG. 4E

EP 0 421 325 B1

FIG. 5C

501  53.1  54.1  53.2  54.2  53.3  54.(k-1)  53.k

55.1  55.2  55.3  55.k

51

58

502  56.1  57.1  56.2  57.2  56.3  57.(k-1)  56.k

FIG. 5D

501  53.1  54.1  53.2  54.2  53.3  54.(k-1)  53.k

55.1  55.2  55.3  55.k

58.1  58.2  58.3  58.k  51

502  56.1  57.1  56.2  57.2  56.3  57.(k-1)  56.k

FIG. 6

FIG.7

FIG.8A

70.1

72

73.k        73.2        73.1

721.k

74.k

721.2

74.2

721.1

74.1

70.2

71.k        71.2        71.1

FIG.8B

751.1        74.1

75

751.2        71.1

70.1        751.2        71.2

750        74.2

751.k        74.k        71.k

70.2        72        721.k        721.2        721.1

720

FIG.9A

OMIDL

80.k        80.2        80.1

81

83.(k−1)        82.2        83.1        82.1        84

FIG.9B

FIG.10A

FIG.10B

FIG.11A

FIG.11B